# EUROPEAN PATENT SPECIFICATION

(11) **EP 4 008 128 B1**
(45) Date of publication and mention of the grant of the patent: **17.07.2024**
(21) Application number: 20796998.1
(22) Date of filing: 05.10.2020
(51) Int. Cl.: H04W 36/00

(54) **CONFIGURATION OF TIME SENSITIVE BRIDGE DURING HANDOVER**
KONFIGURATION EINER ZEITSENSITIVEN BRÜCKE WÄHREND DER ÜBERGABE
CONFIGURATION DE PONT SENSIBLE AU TEMPS PENDANT UN TRANSFERT INTERCELLULAIRE

(30) Priority: 03.10.2019 US 201962910238 P
(43) Date of publication of application: 08.06.2022
(73) Proprietor: Ofinno, LLC, Reston, VA 20190 (US)
(72) Inventor: TALEBI FARD, Peyman, Reston, Virginia 20190 (US); DINAN, Esmael, Reston, Virginia 20190 (US); RYU, JinSook, Reston, Virginia 20190 (US); PARK, Kyungmin, Reston, Virginia 20190 (US); KIM, Taehun, Reston, Virginia 20190 (US); QIAO, Weihua, Reston, Virginia 20190 (US)
(74) Representative: Westphal, Mussgnug & Partner, Patentanwälte mbB
(86) International application number: PCT/US2020/054212
(87) International publication number: WO 2021/067913

(56) References cited:
- WO-A1-2018/128076
- NOKIA ET AL: "Mobility for vertical LAN (deterministic) services (e.g. TSN)", vol. SA WG2, no. Sophia Antipolis; 20180820 - 20180824, 14 August 2018 (2018-08-14), XP051537041, Retrieved from the Internet <URL:http://www.3gpp.org/ftp/tsg%5Fsa/WG2%5FArch/TSGS2%5F128BIS%5FSophia%5FAntipolis/Docs/S2%2D188102%2Ezip> [retrieved on 20180814]
- ERICSSON: "Anchor change for Ethernet PDU Sessions", vol. SA WG2, no. Sophia Antipolis, France; 20180820 - 20180824, 14 August 2018 (2018-08-14), XP051536730, Retrieved from the Internet <URL:http://www.3gpp.org/ftp/tsg%5Fsa/WG2%5FArch/TSGS2%5F128BIS%5FSophia%5FAntipolis/Docs/S2%2D187767%2Ezip> [retrieved on 20180814]
- NOKIA ET AL: "Delay budget for TSN", vol. SA WG2, no. Sapporo, Japan; 20190624 - 20190628, 18 June 2019 (2019-06-18), XP051752493, Retrieved from the Internet <URL:http://www.3gpp.org/ftp/tsg%5Fsa/WG2%5FArch/TSGS2%5F134%5FSapporo/Docs/S2%2D1907534%2Ezip> [retrieved on 20190618]
- CATT: "Discussion on TSC Assistance Information", vol. RAN WG3, no. Ljubljana, Slovenia; 20190826 - 20190830, 16 August 2019 (2019-08-16), XP051769683, Retrieved from the Internet <URL:http://www.3gpp.org/ftp/tsg_ran/WG3_Iu/TSGR3_105/Docs/R3-193467.zip> [retrieved on 20190816]

## Description

### TECHNICAL FIELD

This application relates to the field of wireless communication systems such as 4G communication systems (e.g., LTE, LTE-Advanced), 5G communication systems, other communication systems compatible with 4G and/or 5G communication systems, and related methods, systems and apparatuses.

### BACKGROUND

With regard to the relevant prior art, reference is made to the publication Nokia et al., "Mobility for vertical LAN (deterministic) services (e.g. TSN)", in 3GPP draft S2-188102, SA WG2 Meeting #128-Bis, August 20-24, 2018, Sophia Antipolis. Further reference is made to the publication WO 2018/128076 A1.

### SUMMARY

The invention is defined by the independent claims. The dependent claims specify the preferred embodiments of the invention.

### BRIEF DESCRIPTION OF THE SEVERAL VIEWS OF THE DRAWINGS

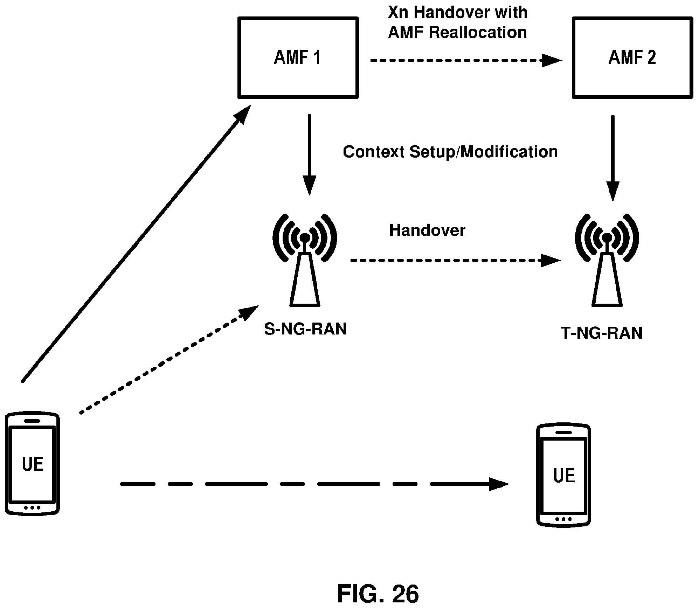

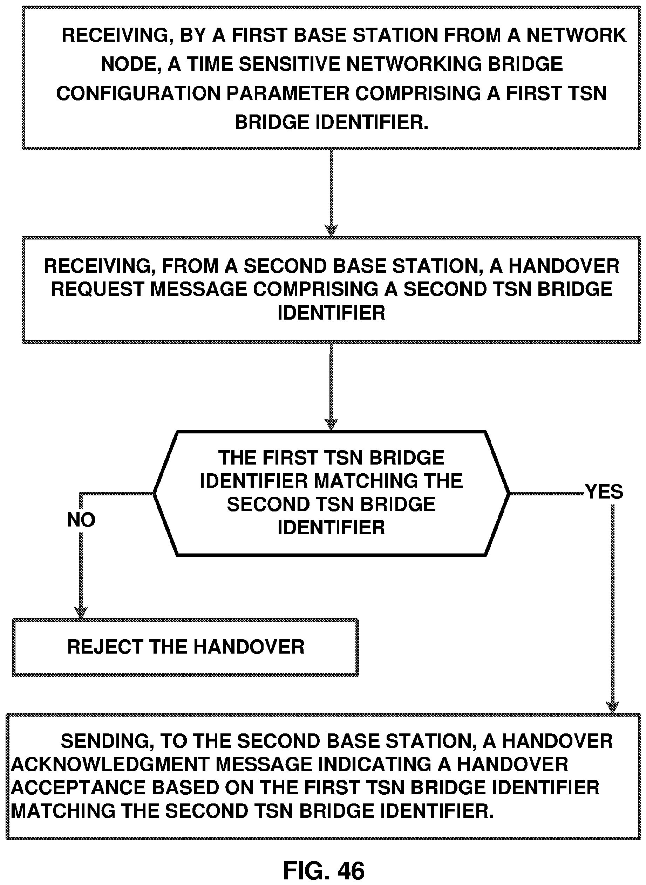

Examples of several of the various embodiments of the present invention are described herein with reference to the drawings. In the following, embodiments of the invention are described with particular reference to figures 26-29, 33, 37-42 and 46. The other embodiments and examples of the disclosure are provided for illustrative purposes to support a better understanding of the invention.
FIG. 1 is a diagram of an example 5G system architecture as per an aspect of an embodiment of the present disclosure.
FIG. 2 is a diagram of an example 5G System architecture as per an aspect of an embodiment of the present disclosure.
FIG. 3 is a system diagram of an example wireless device and a network node in a 5G system as per an aspect of an embodiment of the present disclosure.
FIG. 4 is a system diagram of an example network node as per an aspect of an embodiment of the present disclosure.
FIG. 5A and FIG. 5B depict two registration management state models in UE 100 and AMF 155 as per an aspect of embodiments of the present disclosure.
FIG. 6A and FIG. 6B depict two connection management state models in UE 100 and AMF 155 as per an aspect of embodiments of the present disclosure.
FIG. 7 is diagram for classification and marking traffic as per an aspect of an embodiment of the present disclosure.
FIG. 8 is an example call flow as per an aspect of an embodiment of the present disclosure.
FIG. 9 is an example call flow as per an aspect of an embodiment of the present disclosure.
FIG. 10 is an example call flow as per an aspect of an embodiment of the present disclosure.
FIG. 11 is an example call flow as per an aspect of an embodiment of the present disclosure.
FIG. 12 is an example call flow as per an aspect of an embodiment of the present disclosure.
FIG. 13 is an example call flow as per an aspect of an embodiment of the present disclosure.
FIG. 14 is an example diagram as per an aspect of an embodiment of the present disclosure.
FIG. 15 is an example diagram as per an aspect of an embodiment of the present disclosure.

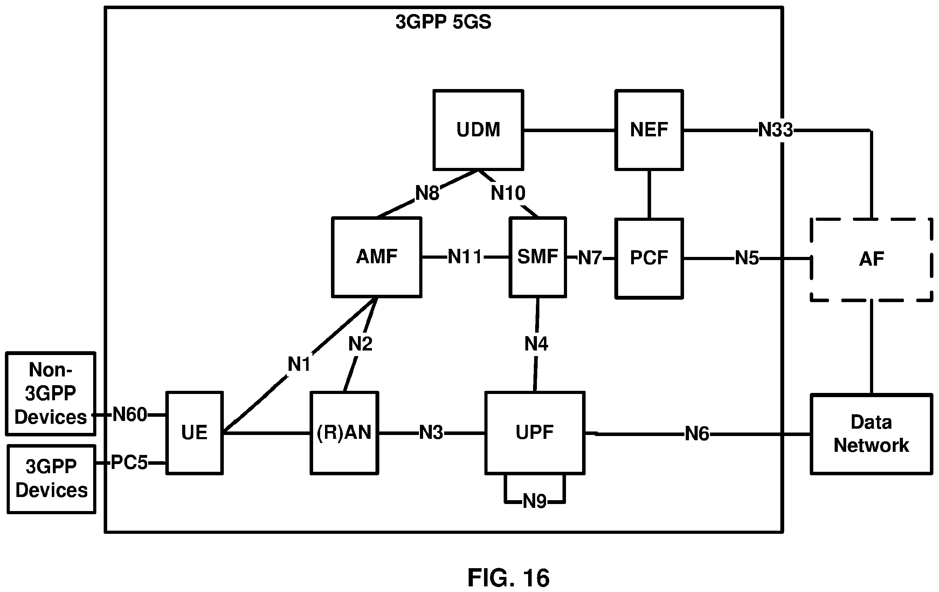

FIG. 16 is an example diagram as per an aspect of an embodiment of the present disclosure.
FIG. 17 is an example diagram as per an aspect of an embodiment of the present disclosure.
FIG. 18 is an example diagram as per an aspect of an embodiment of the present disclosure.
FIG. 19 is an example diagram as per an aspect of an embodiment of the present disclosure.
FIG. 20 is an example diagram as per an aspect of an embodiment of the present disclosure.
FIG. 21 is an example diagram as per an aspect of an embodiment of the present disclosure.
FIG. 22 is an example diagram as per an aspect of an embodiment of the present disclosure.
FIG. 23 is an example diagram as per an aspect of an embodiment of the present disclosure.
FIG. 24 is an example diagram as per an aspect of an embodiment of the present disclosure.
FIG. 25 is an example diagram as per an aspect of an embodiment of the present disclosure.
FIG. 26 is an example diagram as per an aspect of an embodiment of the present disclosure.
FIG. 27 is an example diagram as per an aspect of an embodiment of the present disclosure.
FIG. 28 is an example diagram as per an aspect of an embodiment of the present disclosure.
FIG. 29 is an example diagram as per an aspect of an embodiment of the present disclosure.
FIG. 30 is an example diagram as per an aspect of an embodiment of the present disclosure.
FIG. 31 is an example call flow as per an aspect of an embodiment of the present disclosure.
FIG. 32 is an example call flow as per an aspect of an embodiment of the present disclosure.
FIG. 33 is an example call flow as per an aspect of an embodiment of the present disclosure.
FIG. 34 is an example call flow as per an aspect of an embodiment of the present disclosure.
FIG. 35 is an example call flow as per an aspect of an embodiment of the present disclosure.
FIG. 36 is an example call flow as per an aspect of an embodiment of the present disclosure.
FIG. 37 is an example call flow as per an aspect of an embodiment of the present disclosure.
FIG. 38 is an example call flow as per an aspect of an embodiment of the present disclosure.
FIG. 39 is an example call flow as per an aspect of an embodiment of the present disclosure.
FIG. 40 is an example call flow as per an aspect of an embodiment of the present disclosure.
FIG. 41 is an example call flow as per an aspect of an embodiment of the present disclosure.
FIG. 42 is an example call flow as per an aspect of an embodiment of the present disclosure.
FIG. 43 is an example call flow as per an aspect of an embodiment of the present disclosure.
FIG. 44 is an example call flow as per an aspect of an embodiment of the present disclosure.
FIG. 45 is an example call flow as per an aspect of an embodiment of the present disclosure.
FIG. 46 is an example diagram as per an aspect of an embodiment of the present disclosure.

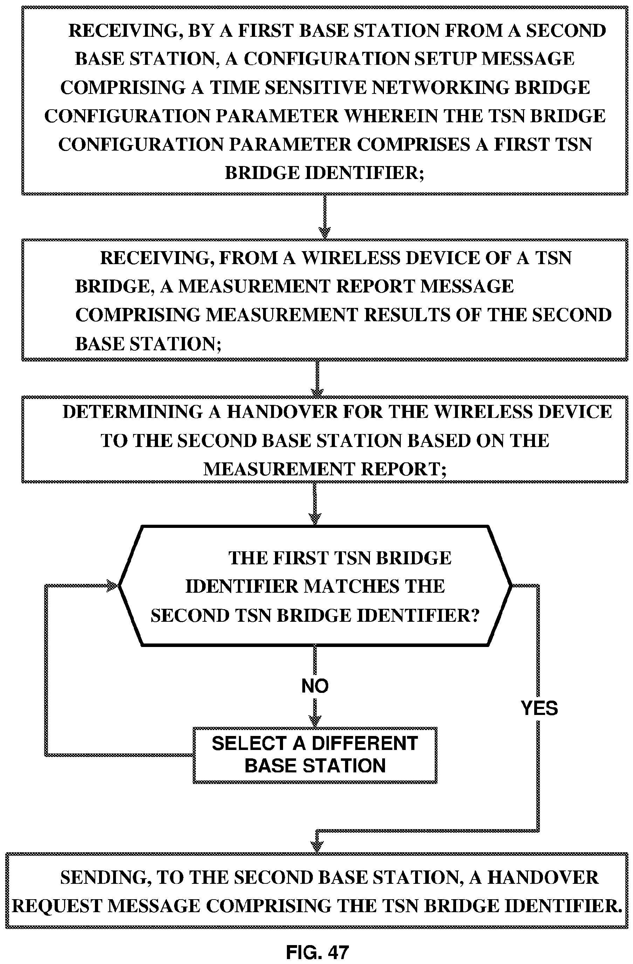

FIG. 47 is an example diagram as per an aspect of an embodiment of the present disclosure.

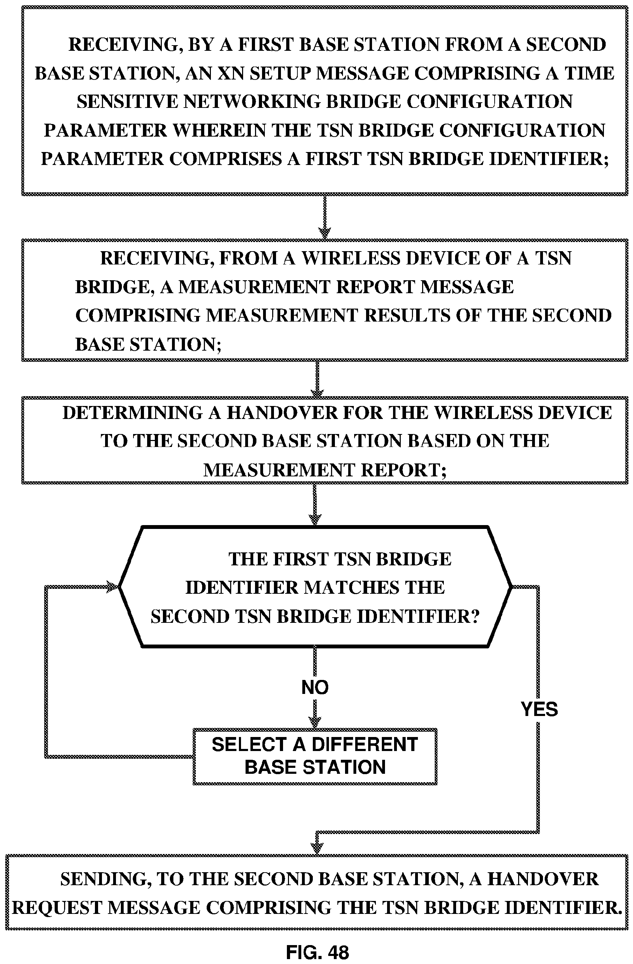

FIG. 48 is an example diagram as per an aspect of an embodiment of the present disclosure.

### DETAILED DESCRIPTION OF EXAMPLES

Example embodiments of the present invention enable implementation of enhanced features and functionalities in 5G systems. Embodiments of the technology disclosed herein may be employed in the technical field of 5G systems and network slicing for communication systems. More particularly, the embodiments of the technology disclosed herein may relate to 5G core network and 5G systems for network slicing in communication systems. Throughout the present disclosure, UE, wireless device, and mobile device are used interchangeably.

The following acronyms are used throughout the present disclosure:
- 5G: 5th generation mobile networks
- 5GC: 5G Core Network
- 5GS: 5G System
- 5G-AN: 5G Access Network
- 5QI: 5G QoS Indicator
- AF: Application Function
- AMF: Access and Mobility Management Function
- AN: Access Network
- CDR: Charging Data Record
- CCNF: Common Control Network Functions
- CIoT: Cellular IoT
- CN: Core Network
- CP: Control Plane
- DDN: Downlink Data Notification
- DL: Downlink
- DN: Data Network
- DNN: Data Network Name
- F-TEID: Fully Qualified TEID
- GPSI: Generic Public Subscription Identifier
- GTP: GPRS Tunneling Protocol
- GUTI: Globally Unique Temporary Identifier
- IMSI: International Mobile Subscriber Identity
- LADN: Local Area Data Network
- LI: Lawful Intercept
- MEI: Mobile Equipment Identifier
- MICO: Mobile Initiated Connection Only
- MME: Mobility Management Entity
- MO: Mobile Originated
- MSISDN: Mobile Subscriber ISDN
- MT: Mobile Terminating
- N3IWF: Non-3GPP InterWorking Function
- NAI: Network Access Identifier
- NAS: Non- Access Stratum
- NB-IoT: Narrow Band IoT
- NEF: Network Exposure Function
- NF: Network Function
- NGAP: Next Generation Application Protocol
- NR: New Radio
- NRF: Network Repository Function
- NSI: Network Slice Instance
- NSSAI: Network Slice Selection Assistance Information
- NSSF: Network Slice Selection Function
- OCS: Online Charging System
- OFCS: Offline Charging System
- PCF: Policy Control Function
- PDU: Packet/Protocol Data Unit
- PEI: Permanent Equipment Identifier
- PLMN: Public Land Mobile Network
- RAN: Radio Access Network
- QFI: QoS Flow Identity
- RM: Registration Management
- S1-AP: S1 Application Protocol
- SBA: Service Based Architecture
- SEA: Security Anchor Function
- SCM: Security Context Management
- SMF: Session Management Function
- SMSF: SMS Function
- S-NSSAI: Single Network Slice Selection Assistance information
- SUCI: Served User Correlation ID
- SUPI: Subscriber Permanent Identifier
- TEID: Tunnel Endpoint Identifier
- TSN: Time Sensitive Networking
- UE: User Equipment
- UL: Uplink
- UL CL: Uplink Classifier
- UPF: User Plane Function

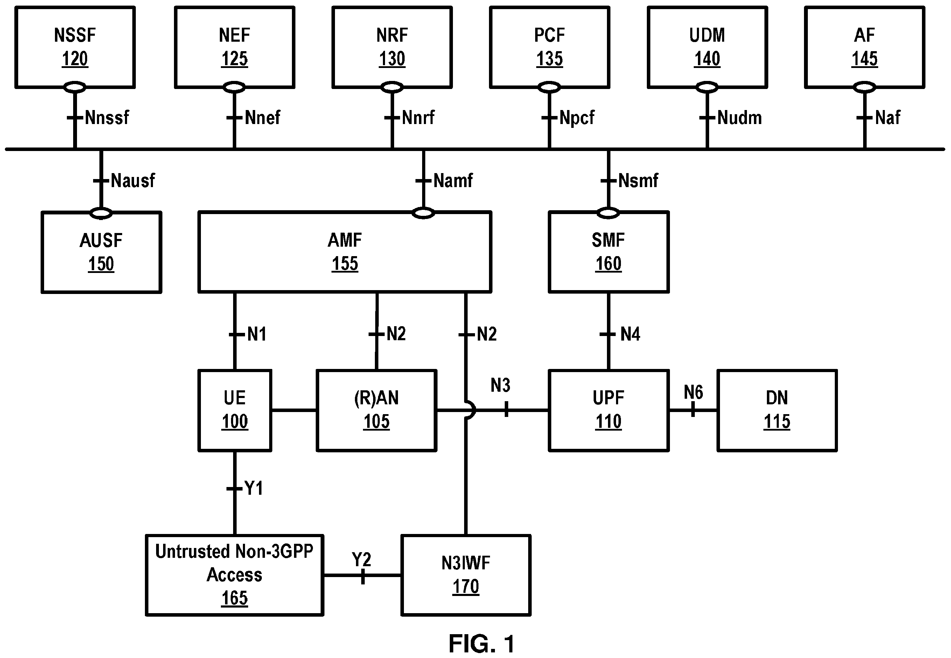

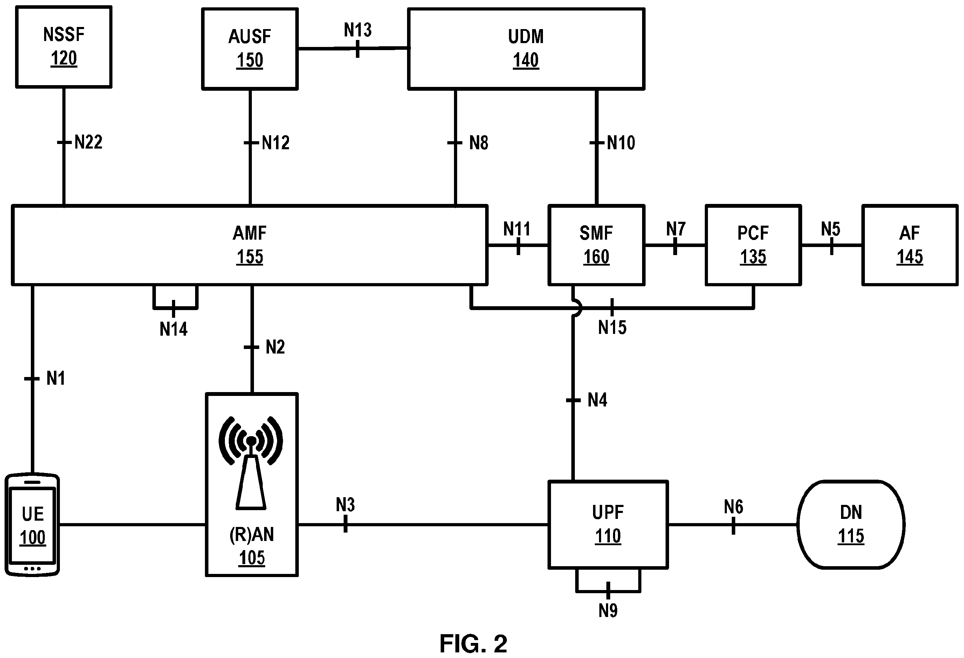

Example FIG. 1 and FIG. 2 depict a 5G system comprising of access networks and 5G core network. An example 5G access network may comprise an access network connecting to a 5G core network. An access network may comprise an NG-RAN 105 and/or non-3GPP AN 165. An example 5G core network may connect to one or more 5G access networks 5G-AN and/or NG-RANs. 5G core network may comprise functional elements or network functions as in example FIG. 1 and example FIG. 2 where interfaces may be employed for communication among the functional elements and/or network elements.

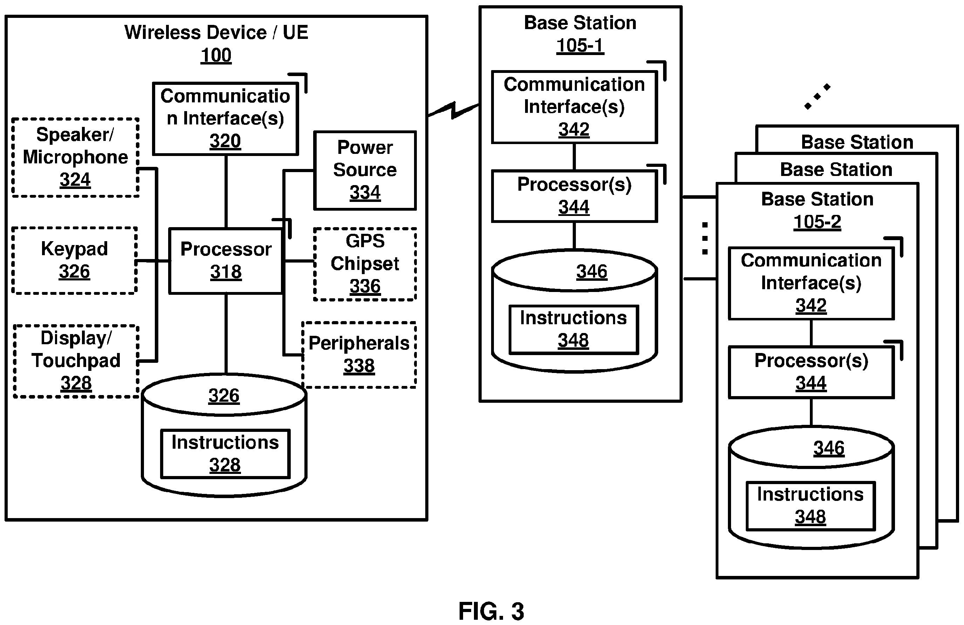

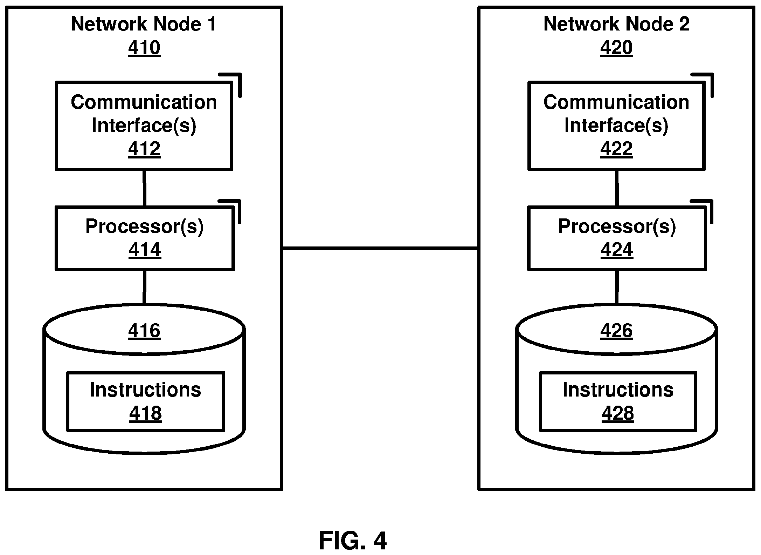

In an example, a network function may be a processing function in a network, which may have a functional behavior and/or interfaces. A network function may be implemented either as a network element on a dedicated hardware, and/or a network node as depicted in FIG. 3 and FIG. 4, or as a software instance running on a dedicated hardware and/or shared hardware, or as a virtualized function instantiated on an appropriate platform.

In an example, access and mobility management function, AMF 155, may include the following functionalities (some of the AMF 155 functionalities may be supported in a single instance of an AMF 155): termination of RAN 105 CP interface (N2), termination of NAS (N1), NAS ciphering and integrity protection, registration management, connection management, reachability management, mobility management, lawful intercept (for AMF 155 events and interface to LI system), provide transport for session management, SM messages between UE 100 and SMF 160, transparent proxy for routing SM messages, access authentication, access authorization, provide transport for SMS messages between UE 100 and SMSF, security anchor function, SEA, interaction with the AUSF 150 and the UE 100, receiving the intermediate key established as a result of the UE 100 authentication process, security context management, SCM, that receives a key from the SEA that it uses to derive access network specific keys, and/or the like.

In an example, the AMF 155 may support non-3GPP access networks through N2 interface with N3IWF 170, NAS signaling with a UE 100 over N3IWF 170, authentication of UEs connected over N3IWF 170, management of mobility, authentication, and separate security context state(s) of a UE 100 connected via non-3GPP access 165 or connected via 3GPP access 105 and non-3GPP access 165 simultaneously, support of a coordinated RM context valid over 3GPP access 105 and non 3GPP access 165, support of CM management contexts for the UE 100 for connectivity over non-3GPP access, and/or the like.

In an example, an AMF 155 region may comprise one or multiple AMF 155 sets. The AMF 155 set may comprise some AMF 155 that serve a given area and/or network slice(s). In an example, multiple AMF 155 sets may be per AMF 155 region and/or network slice(s). Application identifier may be an identifier that may be mapped to a specific application traffic detection rule. Configured NSSAI may be an NSSAI that may be provisioned in a UE 100. DN 115 access identifier (DNAI), for a DNN, may be an identifier of a user plane access to a DN 115. Initial registration may be related to a UE 100 registration in RM-DEREGISTERED 500, 520 states. N2AP UE 100 association may be a logical per UE 100 association between a 5G AN node and an AMF 155. N2AP UE-TNLA-binding may be a binding between a N2AP UE 100 association and a specific transport network layer, TNL association for a given UE 100.

In an example, session management function, SMF 160, may include one or more of the following functionalities (one or more of the SMF 160 functionalities may be supported in a single instance of a SMF 160): session management (e.g. session establishment, modify and release, including tunnel maintain between UPF 110 and AN 105 node), UE 100 IP address allocation & management (including optional authorization), selection and control of UP function(s), configuration of traffic steering at UPF 110 to route traffic to proper destination, termination of interfaces towards policy control functions, control part of policy enforcement and QoS. lawful intercept (for SM events and interface to LI System), termination of SM parts of NAS messages, downlink data notification, initiation of AN specific SM information, sent via AMF 155 over N2 to (R)AN 105, determination of SSC mode of a session, roaming functionality, handling local enforcement to apply QoS SLAs (VPLMN), charging data collection and charging interface (VPLMN), lawful intercept (in VPLMN for SM events and interface to LI System), support for interaction with external DN 115 for transport of signaling for PDU session authorization/authentication by external DN 115, and/or the like.

In an example, a user plane function, UPF 110, may include one or more of the following functionalities (some of the UPF 110 functionalities may be supported in a single instance of a UPF 110): anchor point for Intra-/Inter-RAT mobility (when applicable), external PDU session point of interconnect to DN 115, packet routing & forwarding, packet inspection and user plane part of policy rule enforcement, lawful intercept (UP collection), traffic usage reporting, uplink classifier to support routing traffic flows to a data network, branching point to support multi-homed PDU session(s), QoS handling for user plane, uplink traffic verification (SDF to QoS flow mapping), transport level packet marking in the uplink and downlink, downlink packet buffering, downlink data notification triggering, and/or the like.

In an example, the UE 100 IP address management may include allocation and release of the UE 100 IP address and/or renewal of the allocated IP address. The UE 100 may set a requested PDU type during a PDU session establishment procedure based on its IP stack capabilities and/or configuration. In an example, the SMF 160 may select PDU type of a PDU session. In an example, if the SMF 160 receives a request with PDU type set to IP, the SMF 160 may select PDU type IPv4 or IPv6 based on DNN configuration and/or operator policies. In an example, the SMF 160 may provide a cause value to the UE 100 to indicate whether the other IP version is supported on the DNN. In an example, if the SMF 160 receives a request for PDU type IPv4 or IPv6 and the requested IP version is supported by the DNN the SMF 160 may select the requested PDU type.

In an example embodiment, the 5GC elements and UE 100 may support the following mechanisms: during a PDU session establishment procedure, the SMF 160 may send the IP address to the UE 100 via SM NAS signaling. The IPv4 address allocation and/or IPv4 parameter configuration via DHCPv4 may be employed once PDU session may be established. IPv6 prefix allocation may be supported via IPv6 stateless autoconfiguration, if IPv6 is supported. In an example, 5GC network elements may support IPv6 parameter configuration via stateless DHCPv6.

The 5GC may support the allocation of a static IPv4 address and/or a static IPv6 prefix based on subscription information in a UDM 140 and/or based on the configuration on a per-subscriber, per-DNN basis.

User plane function(s) (UPF 110) may handle the user plane path of PDU sessions. A UPF 110 that provides the interface to a data network may support functionality of a PDU session anchor.

In an example, a policy control function, PCF 135, may support unified policy framework to govern network behavior, provide policy rules to control plane function(s) to enforce policy rules, implement a front end to access subscription information relevant for policy decisions in a user data repository (UDR), and/or the like.

A network exposure function, NEF 125, may provide means to securely expose the services and capabilities provided by the 3GPP network functions, translate between information exchanged with the AF 145 and information exchanged with the internal network functions, receive information from other network functions, and/or the like.

In an example, an network repository function, NRF 130 may support service discovery function that may receive NF discovery request from NF instance, provide information about the discovered NF instances (be discovered) to the NF instance, and maintain information about available NF instances and their supported services, and/or the like.

In an example, an NSSF 120 may select a set of network slice instances serving the UE 100, may determine allowed NSSAI. In an example, the NSSF 120 may determine the AMF 155 set to be employed to serve the UE 100, and/or, based on configuration, determine a list of candidate AMF 155(s) 155 by querying the NRF 130.

In an example, stored data in a UDR may include at least user subscription data, including at least subscription identifiers, security credentials, access and mobility related subscription data, session related subscription data, policy data, and/or the like.

In an example, an AUSF 150 may support authentication server function (AUSF 150).

In an example, an application function, AF 145, may interact with the 3GPP core network to provide services. In an example, based on operator deployment, application functions may be trusted by the operator to interact directly with relevant network functions. Application functions not allowed by the operator to access directly the network functions may use an external exposure framework (e.g., via the NEF 125) to interact with relevant network functions.

In an example, control plane interface between the (R)AN 105 and the 5G core may support connection of multiple different kinds of AN(s) (e.g. 3GPP RAN 105, N3IWF 170 for Un-trusted access 165) to the 5GC via a control plane protocol. In an example, an N2 AP protocol may be employed for both the 3GPP access 105 and non-3GPP access 165. In an example, control plane interface between the (R)AN 105 and the 5G core may support decoupling between AMF 155 and other functions such as SMF 160 that may need to control the services supported by AN(s) (e.g. control of the UP resources in the AN 105 for a PDU session).

In an example, the 5GC may provide policy information from the PCF 135 to the UE 100. In an example, the policy information may comprise: access network discovery and selection policy, UE 100 route selection policy (URSP), SSC mode selection policy (SSCMSP), network slice selection policy (NSSP), DNN selection policy, non-seamless offload policy, and/or the like.

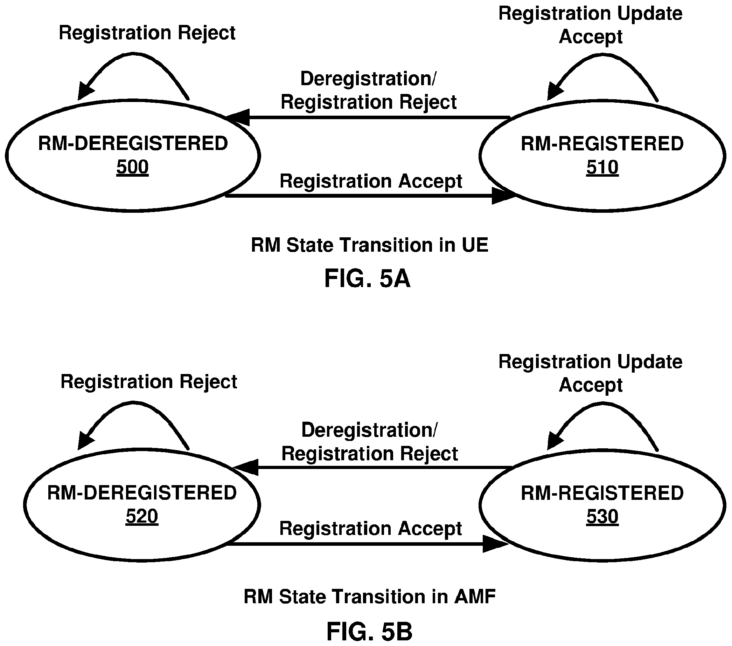

In an example, as depicted in example FIG. 5A and FIG. 5B, the registration management, RM may be employed to register or de-register a UE/user 100 with the network, and establish the user context in the network. Connection management may be employed to establish and release the signaling connection between the UE 100 and the AMF 155.

In an example, a UE 100 may register with the network to receive services that require registration. In an example, the UE 100 may update its registration with the network periodically in order to remain reachable (periodic registration update), or upon mobility (e.g., mobility registration update), or to update its capabilities or to re-negotiate protocol parameters.

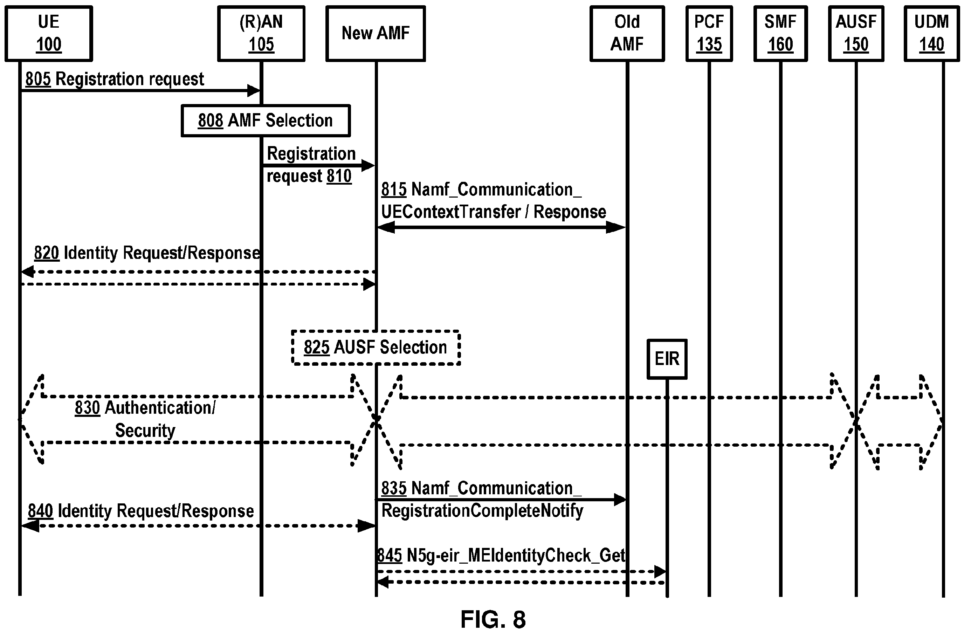

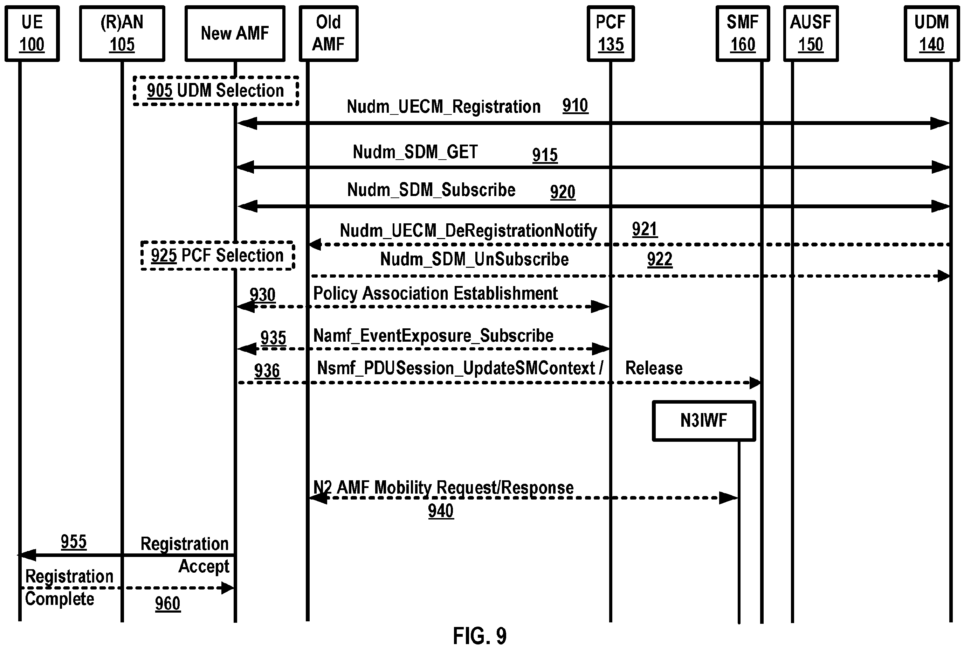

In an example, an initial registration procedure as depicted in example FIG. 8 and FIG. 9 may involve execution of network access control functions (e.g. user authentication and access authorization based on subscription profiles in UDM 140). Example FIG. 9 is a continuation of the initial registration procedure depicted in FIG. 8. As a result of the initial registration procedure, the identity of the serving AMF 155 may be registered in a UDM 140.

In an example, the registration management, RM procedures may be applicable over both 3GPP access 105 and non 3GPP access 165.

An example FIG. 5A may depict the RM states of a UE 100 as observed by the UE 100 and AMF 155. In an example embodiment, two RM states may be employed in the UE 100 and the AMF 155 that may reflect the registration status of the UE 100 in the selected PLMN: RM-DEREGISTERED 500, and RM-REGISTERED 510. In an example, in the RM DEREGISTERED state 500, the UE 100 may not be registered with the network. The UE 100 context in the AMF 155 may not hold valid location or routing information for the UE 100 so the UE 100 may not be reachable by the AMF 155. In an example, the UE 100 context may be stored in the UE 100 and the AMF 155. In an example, in the RM REGISTERED state 510, the UE 100 may be registered with the network. In the RM-REGISTERED 510 state, the UE 100 may receive services that may require registration with the network.

In an example embodiment, two RM states may be employed in AMF 155 for the UE 100 that may reflect the registration status of the UE 100 in the selected PLMN: RM-DEREGISTERED 520, and RM-REGISTERED 530.

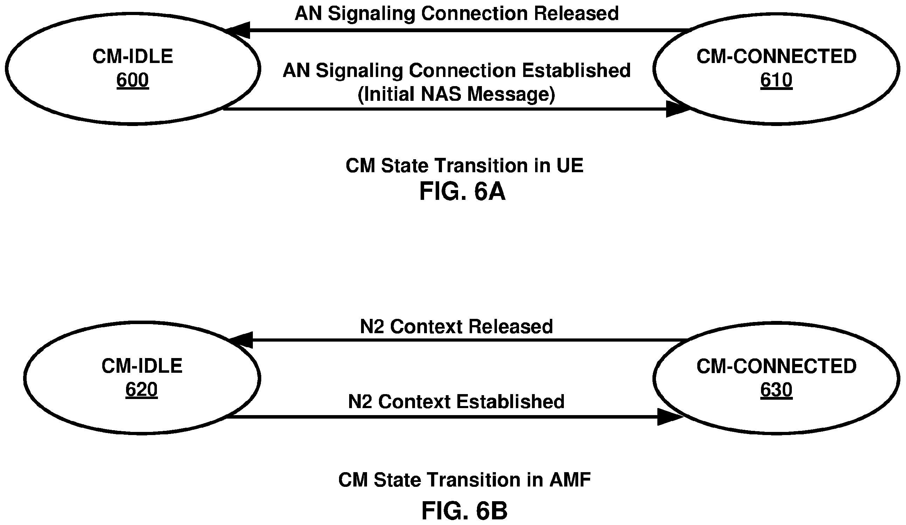

As depicted in example FIG. 6A and FIG. 6B, connection management, CM, may comprise establishing and releasing a signaling connection between a UE 100 and an AMF 155 over N1 interface. The signaling connection may be employed to enable NAS signaling exchange between the UE 100 and the core network. The signaling connection between the UE 100 and the AMF 155 may comprise both the AN signaling connection between the UE 100 and the (R)AN 105 (e.g. RRC connection over 3GPP access) and the N2 connection for the UE 100 between the AN and the AMF 155.

As depicted in example FIG. 6A and FIG. 6B, two CM states may be employed for the NAS signaling connectivity of the UE 100 with the AMF 155, CM-IDLE 600, 620 and CM-CONNECTED 610, 630. A UE 100 in CM-IDLE 600 state may be in RM-REGISTERED 510 state and may have no NAS signaling connection established with the AMF 155 over N1. The UE 100 may perform cell selection, cell reselection, PLMN selection, and/or the like. A UE 100 in CM-CONNECTED 610 state may have a NAS signaling connection with the AMF 155 over N1.

In an example embodiment two CM states may be employed for the UE 100 at the AMF 155, CM-IDLE 620 and CM-CONNECTED 630.

In an example, an RRC inactive state may apply to NG-RAN (e.g. it may apply to NR and E-UTRA connected to 5G CN). The AMF 155, based on network configuration, may provide assistance information to the NG RAN 105, to assist the NG RAN's 105 decision whether the UE 100 may be sent to RRC inactive state. When a UE 100 is CM-CONNECTED 610 with RRC inactive state, the UE 100 may resume the RRC connection due to uplink data pending, mobile initiated signaling procedure, as a response to RAN 105 paging, to notify the network that it has left the RAN 105 notification area, and/or the like.

In an example, a NAS signaling connection management may include establishing and releasing a NAS signaling connection. A NAS signaling connection establishment function may be provided by the UE 100 and the AMF 155 to establish the NAS signaling connection for the UE 100 in CM-IDLE 600 state. The procedure of releasing the NAS signaling connection may be initiated by the 5G (R)AN 105 node or the AMF 155.

In an example, reachability management of a UE 100 may detect whether the UE 100 is reachable and may provide the UE 100 location (e.g. access node) to the network to reach the UE 100. Reachability management may be done by paging the UE 100 and the UE 100 location tracking. The UE 100 location tracking may include both UE 100 registration area tracking and UE 100 reachability tracking. The UE 100 and the AMF 155 may negotiate UE 100 reachability characteristics in CM-IDLE 600, 620 state during registration and registration update procedures.

In an example, two UE 100 reachability categories may be negotiated between a UE 100 and an AMF 155 for CM-IDLE 600, 620 state. 1) UE 100 reachability allowing mobile device terminated data while the UE 100 is CM-IDLE 600 mode. 2) Mobile initiated connection only (MICO) mode. The 5GC may support a PDU connectivity service that provides exchange of PDUs between the UE 100 and a data network identified by a DNN. The PDU connectivity service may be supported via PDU sessions that are established upon request from the UE 100.

In an example, a PDU session may support one or more PDU session types. PDU sessions may be established (e.g. upon UE 100 request), modified (e.g. upon UE 100 and 5GC request) and/or released (e.g. upon UE 100 and 5GC request) using NAS SM signaling exchanged over N1 between the UE 100 and the SMF 160. Upon request from an application server, the 5GC may be able to trigger a specific application in the UE 100. When receiving the trigger, the UE 100 may send it to the identified application in the UE 100. The identified application in the UE 100 may establish a PDU session to a specific DNN.

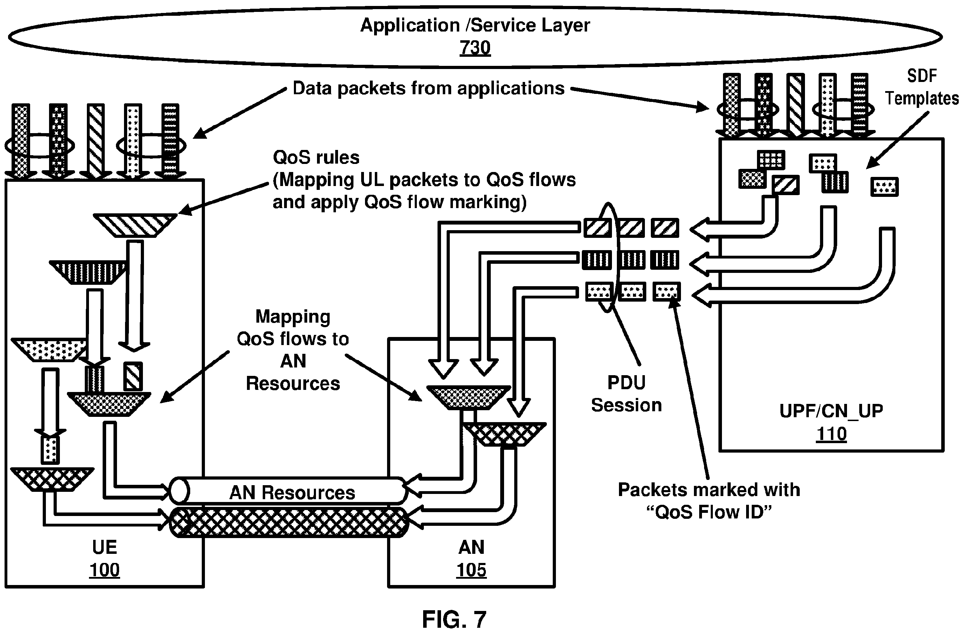

In an example, the 5G QoS model may support a QoS flow based framework as depicted in example FIG. 7. The 5G QoS model may support both QoS flows that require a guaranteed flow bit rate and QoS flows that may not require a guaranteed flow bit rate. In an example, the 5G QoS model may support reflective QoS. The QoS model may comprise flow mapping or packet marking at the UPF 110 (CN_UP) 110, AN 105 and/or the UE 100. In an example, packets may arrive from and/or destined to the application/service layer 730 of UE 100, UPF 110 (CN_UP) 110, and/or the AF 145.

In an example, the QoS flow may be a granularity of QoS differentiation in a PDU session. A QoS flow ID, QFI, may be employed to identify the QoS flow in the 5G system. In an example, user plane traffic with the same QFI within a PDU session may receive the same traffic forwarding treatment. The QFI may be carried in an encapsulation header on N3 and/or N9 (e.g. without any changes to the end-to-end packet header). In an example, the QFI may be applied to PDUs with different types of payload. The QFI may be unique within a PDU session.

In an example, the QoS parameters of a QoS flow may be provided to the (R)AN 105 as a QoS profile over N2 at PDU session establishment, QoS flow establishment, or when NG-RAN is used at every time the user plane is activated. In an example, a default QoS rule may be required for every PDU session. The SMF 160 may allocate the QFI for a QoS flow and may derive QoS parameters from the information provided by the PCF 135. In an example, the SMF 160 may provide the QFI together with the QoS profile containing the QoS parameters of a QoS flow to the (R)AN 105.

In an example, 5G QoS flow may be a granularity for QoS forwarding treatment in the 5G system. Traffic mapped to the same 5G QoS flow may receive the same forwarding treatment (e.g. scheduling policy, queue management policy, rate shaping policy, RLC configuration, and/or the like). In an example, providing different QoS forwarding treatment may require separate 5G QoS flows.

In an example, a 5G QoS indicator may be a scalar that may be employed as a reference to a specific QoS forwarding behavior (e.g. packet loss rate, packet delay budget) to be provided to a 5G QoS flow. In an example, the 5G QoS indicator may be implemented in the access network by the 5QI referencing node specific parameters that may control the QoS forwarding treatment (e.g. scheduling weights, admission thresholds, queue management thresholds, link layer protocol configuration, and/or the like.).

In an example, 5GC may support edge computing and may enable operator(s) and 3rd party services to be hosted close to the UE's access point of attachment. The 5G core network may select a UPF 110 close to the UE 100 and may execute the traffic steering from the UPF 110 to the local data network via a N6 interface. In an example, the selection and traffic steering may be based on the UE's 100 subscription data, UE 100 location, the information from application function AF 145, policy, other related traffic rules, and/or the like. In an example, the 5G core network may expose network information and capabilities to an edge computing application function. The functionality support for edge computing may include local routing where the 5G core network may select a UPF 110 to route the user traffic to the local data network, traffic steering where the 5G core network may select the traffic to be routed to the applications in the local data network, session and service continuity to enable UE 100 and application mobility, user plane selection and reselection, e.g. based on input from application function, network capability exposure where 5G core network and application function may provide information to each other via NEf 125, QoS and charging where PCF 135 may provide rules for QoS control and charging for the traffic routed to the local data network, support of local area data network where 5G core network may provide support to connect to the LADN in a certain area where the applications are deployed, and/or the like.

An example 5G system may be a 3GPP system comprising of 5G access network 105, 5G core network and a UE 100, and/or the like. Allowed NSSAI may be an NSSAI provided by a serving PLMN during e.g. a registration procedure, indicating the NSSAI allowed by the network for the UE 100 in the serving PLMN for the current registration area.

In an example, a PDU connectivity service may provide exchange of PDUs between a UE 100 and a data network. A PDU session may be an association between the UE 100 and the data network, DN 115, that may provide the PDU connectivity service. The type of association may be IP, Ethernet and/or unstructured.

Establishment of user plane connectivity to a data network via network slice instance(s) may comprise the following: performing a RM procedure to select an AMF 155 that supports the required network slices, and establishing one or more PDU session(s) to the required data network via the network slice instance(s).

In an example, the set of network slices for a UE 100 may be changed at any time while the UE 100 may be registered with the network, and may be initiated by the network, or the UE 100.

In an example, a periodic registration update may be UE 100 re-registration at expiry of a periodic registration timer. A requested NSSAI may be a NSSAI that the UE 100 may provide to the network.

In an example, a service based interface may represent how a set of services may be provided/exposed by a given NF.

In an example, a service continuity may be an uninterrupted user experience of a service, including the cases where the IP address and/or anchoring point may change. In an example, a session continuity may refer to continuity of a PDU session. For PDU session of IP type session continuity may imply that the IP address is preserved for the lifetime of the PDU session. An uplink classifier may be a UPF 110 functionality that aims at diverting uplink traffic, based on filter rules provided by the SMF 160, towards data network, DN 115.

In an example, the 5G system architecture may support data connectivity and services enabling deployments to use techniques such as e.g. network function virtualization and/or software defined networking. The 5G system architecture may leverage service-based interactions between control plane (CP) network functions where identified. In 5G system architecture, separation of the user plane (UP) functions from the control plane functions may be considered. A 5G system may enable a network function to interact with other NF(s) directly if required.

In an example, the 5G system may reduce dependencies between the access network (AN) and the core network (CN). The architecture may comprise a converged access-agnostic core network with a common AN - CN interface which may integrate different 3GPP and non-3GPP access types.

In an example, the 5G system may support a unified authentication framework, stateless NFs, where the compute resource is decoupled from the storage resource, capability exposure, and concurrent access to local and centralized services. To support low latency services and access to local data networks, UP functions may be deployed close to the access network.

In an example, the 5G system may support roaming with home routed traffic and/or local breakout traffic in the visited PLMN. An example 5G architecture may be service-based and the interaction between network functions may be represented in two ways. (1) As service-based representation (depicted in example FIG. 1), where network functions within the control plane, may enable other authorized network functions to access their services. This representation may also include point-to-point reference points where necessary. (2) Reference point representation, showing the interaction between the NF services in the network functions described by point-to-point reference point (e.g. N11) between any two network functions.

In an example, a network slice may comprise the core network control plane and user plane network functions, the 5G Radio Access Network; the N3IWF functions to the non-3GPP Access Network, and/or the like. Network slices may differ for supported features and network function implementation. The operator may deploy multiple network slice instances delivering the same features but for different groups of UEs, e.g. as they deliver a different committed service and/or because they may be dedicated to a customer. The NSSF 120 may store the mapping information between slice instance ID and NF ID (or NF address).

In an example, a UE 100 may simultaneously be served by one or more network slice instances via a 5G-AN. In an example, the UE 100 may be served by k network slices (e.g. k=8, 16, etc.) at a time. An AMF 155 instance serving the UE 100 logically may belong to a network slice instance serving the UE 100.

In an example, a PDU session may belong to one specific network slice instance per PLMN. In an example, different network slice instances may not share a PDU session. Different slices may have slice-specific PDU sessions using the same DNN.

An S-NSSAI (Single Network Slice Selection Assistance information) may identify a network slice. An S-NSSAI may comprise a slice/service type (SST), which may refer to the expected network slice behavior in terms of features and services; and/or a slice differentiator (SD). A slice differentiator may be optional information that may complement the slice/service type(s) to allow further differentiation for selecting a network slice instance from potentially multiple network slice instances that comply with the indicated slice/service type. In an example, the same network slice instance may be selected employing different S-NSSAIs. The CN part of a network slice instance(s) serving a UE 100 may be selected by CN.

In an example, subscription data may include the S-NSSAI(s) of the network slices that the UE 100 subscribes to. One or more S-NSSAIs may be marked as default S-NSSAI. In an example, k S-NSSAI may be marked default S-NSSAI (e.g. k=8, 16, etc.). In an example, the UE 100 may subscribe to more than 8 S-NSSAIs.

In an example, a UE 100 may be configured by the HPLMN with a configured NSSAI per PLMN. Upon successful completion of a UE's registration procedure, the UE 100 may obtain from the AMF 155 an Allowed NSSAI for this PLMN, which may include one or more S-NSSAIs.

In an example, the Allowed NSSAI may take precedence over the configured NSSAI for a PLMN. The UE 100 may use the S-NSSAIs in the allowed NSSAI corresponding to a network slice for the subsequent network slice selection related procedures in the serving PLMN.

In an example, the establishment of user plane connectivity to a data network via a network slice instance(s) may comprise: performing a RM procedure to select an AMF 155 that may support the required network slices, establishing one or more PDU sessions to the required data network via the network slice instance(s), and/or the like.

In an example, when a UE 100 registers with a PLMN, if the UE 100 for the PLMN has a configured NSSAI or an allowed NSSAI, the UE 100 may provide to the network in RRC and NAS layer a requested NSSAI comprising the S-NSSAI(s) corresponding to the slice(s) to which the UE 100 attempts to register, a temporary user ID if one was assigned to the UE, and/or the like. The requested NSSAI may be configured-NSSAI, allowed-NSSAI, and/or the like.

In an example, when a UE 100 registers with a PLMN, if for the PLMN the UE 100 has no configured NSSAI or allowed NSSAI, the RAN 105 may route NAS signaling from/to the UE 100 to/from a default AMF 155.

In an example, the network, based on local policies, subscription changes and/or UE 100 mobility, may change the set of permitted network slice(s) to which the UE 100 is registered. In an example, the network may perform the change during a registration procedure or trigger a notification towards the UE 100 of the change of the supported network slices using an RM procedure (which may trigger a registration procedure). The network may provide the UE 100 with a new allowed NSSAI and tracking area list.

In an example, during a registration procedure in a PLMN, in case the network decides that the UE 100 may be served by a different AMF 155 based on network slice(s) aspects, the AMF 155 that first received the registration request may redirect the registration request to another AMF 155 via the RAN 105 or via direct signaling between the initial AMF 155 and the target AMF 155.

In an example, the network operator may provision the UE 100 with network slice selection policy (NSSP). The NSSP may comprise one or more NSSP rules.

In an example, if a UE 100 has one or more PDU sessions established corresponding to the a specific S-NSSAI, the UE 100 may route the user data of the application in one of the PDU sessions, unless other conditions in the UE 100 may prohibit the use of the PDU sessions. If the application provides a DNN, then the UE 100 may consider the DNN to determine which PDU session to use. In an example, if the UE 100 does not have a PDU session established with the specific S-NSSAI, the UE 100 may request a new PDU session corresponding to the S-NSSAI and with the DNN that may be provided by the application. In an example, in order for the RAN 105 to select a proper resource for supporting network slicing in the RAN 105, the RAN 105 may be aware of the network slices used by the UE 100.

In an example, an AMF 155 may select an SMF 160 in a network slice instance based on S-NSSAI, DNN and/or other information e.g. UE 100 subscription and local operator policies, and/or the like, when the UE 100 triggers the establishment of a PDU session. The selected SMF 160 may establish the PDU session based on S-NSSAI and DNN.

In an example, in order to support network-controlled privacy of slice information for the slices the UE 100 may access, when the UE 100 is aware or configured that privacy considerations may apply to NSSAI, the UE 100 may not include NSSAI in NAS signaling unless the UE 100 has a NAS security context and the UE 100 may not include NSSAI in unprotected RRC signaling.

In an example, for roaming scenarios, the network slice specific network functions in VPLMN and HPLMN may be selected based on the S-NSSAI provided by the UE 100 during PDU connection establishment. If a standardized S-NSSAI is used, selection of slice specific NF instances may be done by one or more PLMN(s) based on the provided S-NSSAI. In an example, the VPLMN may map the S-NSSAI of HPLMN to a S-NSSAI of VPLMN based on roaming agreement (e.g., including mapping to a default S-NSSAI of VPLMN). In an example, the selection of slice specific NF instance in VPLMN may be done based on the S-NSSAI of VPLMN. In an example, the selection of any slice specific NF instance in HPLMN may be based on the S-NSSAI of HPLMN.

As depicted in example FIG. 8 and FIG. 9, a registration procedure may be performed by the UE 100 to get authorized to receive services, to enable mobility tracking, to enable reachability, and/or the like.

In an example, the UE 100 may send to the (R)AN 105 an AN message 805 (comprising AN parameters, RM-NAS registration request (registration type, SUCI or SUPI or 5G-GUTI, last visited TAI (if available), security parameters, requested NSSAI, mapping of requested NSSAI, UE 100 5GC capability, PDU session status, PDU session(s) to be re-activated, Follow on request, MICO mode preference, and/or the like), and/or the like). In an example, in case of NG-RAN, the AN parameters may include e.g. SUCI or SUPI or the 5G-GUTI, the Selected PLMN ID and requested NSSAI, and/or the like. In an example, the AN parameters may comprise establishment cause. The establishment cause may provide the reason for requesting the establishment of an RRC connection. In an example, the registration type may indicate if the UE 100 wants to perform an initial registration (i.e. the UE 100 is in RM-DEREGISTERED state), a mobility registration update (e.g., the UE 100 is in RM-REGISTERED state and initiates a registration procedure due to mobility), a periodic registration update (e.g., the UE 100 is in RM-REGISTERED state and may initiate a registration procedure due to the periodic registration update timer expiry) or an emergency registration (e.g., the UE 100 is in limited service state). In an example, if the UE 100 performing an initial registration (i.e., the UE 100 is in RM-DEREGISTERED state) to a PLMN for which the UE 100 does not already have a 5G-GUTI, the UE 100 may include its SUCI or SUPI in the registration request. The SUCI may be included if the home network has provisioned the public key to protect SUPI in the UE. If the UE 100 received a UE 100 configuration update command indicating that the UE 100 needs to re-register and the 5G-GUTI is invalid, the UE 100 may perform an initial registration and may include the SUPI in the registration request message. For an emergency registration, the SUPI may be included if the UE 100 does not have a valid 5G-GUTI available; the PEI may be included when the UE 100 has no SUPI and no valid 5G-GUTI. In other cases, the 5G-GUTI may be included and it may indicate the last serving AMF 155. If the UE 100 is already registered via a non-3GPP access in a PLMN different from the new PLMN (e.g., not the registered PLMN or an equivalent PLMN of the registered PLMN) of the 3GPP access, the UE 100 may not provide over the 3GPP access the 5G-GUTI allocated by the AMF 155 during the registration procedure over the non-3GPP access. If the UE 100 is already registered via a 3GPP access in a PLMN (e.g., the registered PLMN), different from the new PLMN (i.e. not the registered PLMN or an equivalent PLMN of the registered PLMN) of the non-3GPP access, the UE 100 may not provide over the non-3GPP access the 5G-GUTI allocated by the AMF 155 during the registration procedure over the 3GPP access. The UE 100 may provide the UE's usage setting based on its configuration. In case of initial registration or mobility registration update, the UE 100 may include the mapping of requested NSSAI, which may be the mapping of one or more S-NSSAI of the requested NSSAI to the S-NSSAIs of the configured NSSAI for the HPLMN, to ensure that the network is able to verify whether the S-NSSAI(s) in the requested NSSAI are permitted based on the subscribed S-NSSAIs. If available, the last visited TAI may be included in order to help the AMF 155 produce registration area for the UE. In an example, the security parameters may be used for authentication and integrity protection. requested NSSAI may indicate the network slice selection assistance information. The PDU session status may indicates the previously established PDU sessions in the UE. When the UE 100 is connected to the two AMF 155 belonging to different PLMN via 3GPP access and non-3GPP access then the PDU session status may indicate the established PDU session of the current PLMN in the UE. The PDU session(s) to be re-activated may be included to indicate the PDU session(s) for which the UE 100 may intend to activate UP connections. A PDU session corresponding to a LADN may not be included in the PDU session(s) to be re-activated when the UE 100 is outside the area of availability of the LADN. The follow on request may be included when the UE 100 may have pending uplink signaling and the UE 100 may not include PDU session(s) to be re-activated, or the registration type may indicate the UE 100 may want to perform an emergency registration.

In an example, if a SUPI is included or the 5G-GUTI does not indicate a valid AMF 155, the (R)AN 105, based on (R)AT and requested NSSAI, if available, may selects 808 an AMF 155. If UE 100 is in CM-CONNECTED state, the (R)AN 105 may forward the registration request message to the AMF 155 based on the N2 connection of the UE. If the (R)AN 105 may not select an appropriate AMF 155, it may forward the registration request to an AMF 155 which has been configured, in (R)AN 105, to perform AMF 155 selection 808.

In an example, the (R)AN 105 may send to the new AMF 155 an N2 message 810 (comprising: N2 parameters, RM-NAS registration request (registration type, SUPI or 5G-GUTI, last visited TAI (if available), security parameters, requested NSSAI, mapping of requested NSSAI, UE 100 5GC capability, PDU session status, PDU session(s) to be re-activated, follow on request, and MICO mode preference), and/or the like). In an example, when NG-RAN is used, the N2 parameters may comprise the selected PLMN ID, location information, cell identity and the RAT type related to the cell in which the UE 100 is camping. In an example, when NG-RAN is used, the N2 parameters may include the establishment cause.

In an example, the new AMF 155 may send to the old AMF 155 an Namf_Communication_UEContextTransfer (complete registration request) 815. In an example, if the UE's 5G-GUTI was included in the registration request and the serving AMF 155 has changed since last registration procedure, the new AMF 155 may invoke the Namf_Communication_UEContextTransfer service operation 815 on the old AMF 155 including the complete registration request IE, which may be integrity protected, to request the UE's SUPI and MM Context. The old AMF 155 may use the integrity protected complete registration request IE to verify if the context transfer service operation invocation corresponds to the UE 100 requested. In an example, the old AMF 155 may transfer the event subscriptions information by one or more NF consumer, for the UE, to the new AMF 155. In an example, if the UE 100 identifies itself with PEI, the SUPI request may be skipped.

In an example, the old AMF 155 may send to new AMF 155 a response 815 to Namf_Communication_UEContextTransfer (SUPI, MM context, SMF 160 information, PCF ID). In an example, the old AMF 155 may respond to the new AMF 155 for the Namf_Communication_UEContextTransfer invocation by including the UE's SUPI and MM context. In an example, if old AMF 155 holds information about established PDU sessions, the old AMF 155 may include SMF 160 information including S-NSSAI(s), SMF 160 identities and PDU session ID. In an example, if old AMF 155 holds information about active NGAP UE-TNLA bindings to N3IWF, the old AMF 155 may include information about the NGAP UE-TNLA bindings.

In an example, if the SUPI is not provided by the UE 100 nor retrieved from the old AMF 155 the identity request procedure 820 may be initiated by the AMF 155 sending an identity request message to the UE 100 requesting the SUCI.

In an example, the UE 100 may respond with an identity response message 820 including the SUCI. The UE 100 may derive the SUCI by using the provisioned public key of the HPLMN.

In an example, the AMF 155 may decide to initiate UE 100 authentication 825 by invoking an AUSF 150. The AMF 155 may select an AUSF 150 based on SUPI or SUCI. In an example, if the AMF 155 is configured to support emergency registration for unauthenticated SUPIs and the UE 100 indicated registration type emergency registration the AMF 155 may skip the authentication and security setup or the AMF 155 may accept that the authentication may fail and may continue the registration procedure.

In an example, the authentication 830 may be performed by Nudm_UEAuthenticate_Get operation. The AUSF 150 may discover a UDM 140. In case the AMF 155 provided a SUCI to AUSF 150, the AUSF 150 may return the SUPI to AMF 155 after the authentication is successful. In an example, if network slicing is used, the AMF 155 may decide if the registration request needs to be rerouted where the initial AMF 155 refers to the AMF 155. In an example, the AMF 155 may initiate NAS security functions. In an example, upon completion of NAS security function setup, the AMF 155 may initiate NGAP procedure to enable 5G-AN use it for securing procedures with the UE. In an example, the 5G-AN may store the security context and may acknowledge to the AMF 155. The 5G-AN may use the security context to protect the messages exchanged with the UE.

In an example, new AMF 155 may send to the old AMF 155 Namf_Communication_RegistrationCompleteNotify 835. If the AMF 155 has changed, the new AMF 155 may notify the old AMF 155 that the registration of the UE 100 in the new AMF 155 may be completed by invoking the Namf_Communication_RegistrationCompleteNotify service operation. If the authentication/security procedure fails, then the registration may be rejected, and the new AMF 155 may invoke the Namf_Communication_RegistrationCompleteNotify service operation with a reject indication reason code towards the old AMF 155. The old AMF 155 may continue as if the UE 100 context transfer service operation was never received. If one or more of the S-NSSAIs used in the old registration area may not be served in the target registration area, the new AMF 155 may determine which PDU session may not be supported in the new registration area. The new AMF 155 may invoke the Namf_Communication_RegistrationCompleteNotify service operation including the rejected PDU session ID and a reject cause (e.g. the S-NSSAI becomes no longer available) towards the old AMF 155. The new AMF 155 may modify the PDU session status correspondingly. The old AMF 155 may inform the corresponding SMF 160(s) to locally release the UE's SM context by invoking the Nsmf_PDUSession_ReleaseSMContext service operation.

In an example, the new AMF 155 may send to the UE 100 an identity request/response 840 (e.g., PEI). If the PEI was not provided by the UE 100 nor retrieved from the old AMF 155, the identity request procedure may be initiated by AMF 155 sending an identity request message to the UE 100 to retrieve the PEI. The PEI may be transferred encrypted unless the UE 100 performs emergency registration and may not be authenticated. For an emergency registration, the UE 100 may have included the PEI in the registration request.

In an example, the new AMF 155 may initiate ME identity check 845 by invoking the N5g-eir _EquipmentIdentityCheck_Get service operation 845.

In an example, the new AMF 155, based on the SUPI, may select 905 a UDM 140. The UDM 140 may select a UDR instance. In an example, the AMF 155 may selects a UDM 140.

In an example, if the AMF 155 has changed since the last registration procedure, or if the UE 100 provides a SUPI which may not refer to a valid context in the AMF 155, or if the UE 100 registers to the same AMF 155 it has already registered to a non-3GPP access (e.g., the UE 100 is registered over a non-3GPP access and may initiate the registration procedure to add a 3GPP access), the new AMF 155 may register with the UDM 140 using Nudm_UECM_Registration 910 and may subscribe to be notified when the UDM 140 may deregister the AMF 155. The UDM 140 may store the AMF 155 identity associated to the access type and may not remove the AMF 155 identity associated to the other access type. The UDM 140 may store information provided at registration in UDR, by Nudr_UDM_Update. In an example, the AMF 155 may retrieve the access and mobility subscription data and SMF 160 selection subscription data using Nudm_SDM_Get 915. The UDM 140 may retrieve this information from UDR by Nudr_UDM_Query(access and mobility subscription data). After a successful response is received, the AMF 155 may subscribe to be notified using Nudm_SDM_Subscribe 920 when the data requested may be modified. The UDM 140 may subscribe to UDR by Nudr_UDM_Subscribe. The GPSI may be provided to the AMF 155 in the subscription data from the UDM 140 if the GPSI is available in the UE 100 subscription data. In an example, the new AMF 155 may provide the access type it serves for the UE 100 to the UDM 140 and the access type may be set to 3GPP access. The UDM 140 may store the associated access type together with the serving AMF 155 in UDR by Nudr_UDM_Update. The new AMF 155 may create an MM context for the UE 100 after getting the mobility subscription data from the UDM 140. In an example, when the UDM 140 stores the associated access type together with the serving AMF 155, the UDM 140 may initiate a Nudm_UECM _DeregistrationNotification 921 to the old AMF 155 corresponding to 3GPP access. The old AMF 155 may remove the MM context of the UE. If the serving NF removal reason indicated by the UDM 140 is initial registration, then the old AMF 155 may invoke the Namf_EventExposure_Notify service operation towards all the associated SMF 160s of the UE 100 to notify that the UE 100 is deregistered from old AMF 155. The SMF 160 may release the PDU session(s) on getting this notification. In an example, the old AMF 155 may unsubscribe with the UDM 140 for subscription data using Nudm_SDM_unsubscribe 922.

In an example, if the AMF 155 decides to initiate PCF 135 communication, e.g. the AMF 155 has not yet obtained access and mobility policy for the UE 100 or if the access and mobility policy in the AMF 155 are no longer valid, the AMF 155 may select 925 a PCF 135. If the new AMF 155 receives a PCF ID from the old AMF 155 and successfully contacts the PCF 135 identified by the PCF ID, the AMF 155 may select the (V-)PCF identified by the PCF ID. If the PCF 135 identified by the PCF ID may not be used (e.g. no response from the PCF 135) or if there is no PCF ID received from the old AMF 155, the AMF 155 may select 925 a PCF 135.

In an example, the new AMF 155 may perform a policy association establishment 930 during registration procedure. If the new AMF 155 contacts the PCF 135 identified by the (V-)PCF ID received during inter-AMF 155 mobility, the new AMF 155 may include the PCF-ID in the Npcf_AMPolicyControl Get operation. If the AMF 155 notifies the mobility restrictions (e.g. UE 100 location) to the PCF 135 for adjustment, or if the PCF 135 updates the mobility restrictions itself due to some conditions (e.g. application in use, time and date), the PCF 135 may provide the updated mobility restrictions to the AMF 155.

In an example, the PCF 135 may invoke Namf_EventExposure_Subscribe service operation 935 for UE 100 event subscription.

In an example, the AMF 155 may send to the SMF 160 an Nsmf_PDUSession_UpdateSMContext 936. In an example, the AMF 155 may invoke the Nsmf_PDUSession_UpdateSMContext if the PDU session(s) to be re-activated is included in the registration request. The AMF 155 may send Nsmf_PDUSession_UpdateSMContext request to SMF 160(s) associated with the PDU session(s) to activate user plane connections of the PDU session(s). The SMF 160 may decide to trigger e.g. the intermediate UPF 110 insertion, removal or change of PSA. In the case that the intermediate UPF 110 insertion, removal, or relocation is performed for the PDU session(s) not included in PDU session(s) to be re-activated, the procedure may be performed without N11 and N2 interactions to update the N3 user plane between (R)AN 105 and 5GC. The AMF 155 may invoke the Nsmf_PDUSession_ReleaseSMContext service operation towards the SMF 160 if any PDU session status indicates that it is released at the UE 100. The AMF 155 may invoke the Nsmf_PDUSession_ReleaseSMContext service operation towards the SMF 160 in order to release any network resources related to the PDU session.

In an example, the new AMF 155155 may send to a N3IWF an N2 AMF 155 mobility request 940. If the AMF 155 has changed, the new AMF 155 may create an NGAP UE 100 association towards the N3IWF to which the UE 100 is connected. In an example, the N3IWF may respond to the new AMF 155 with an N2 AMF 155 mobility response 940.

In an example, the new AMF 155 may send to the UE 100 a registration accept 955 (comprising: 5G-GUTI, registration area, mobility restrictions, PDU session status, allowed NSSAI, [mapping of allowed NSSAI], periodic registration update timer, LADN information and accepted MICO mode, IMS voice over PS session supported indication, emergency service support indicator, and/or the like). In an example, the AMF 155 may send the registration accept message to the UE 100 indicating that the registration request has been accepted. 5G-GUTI may be included if the AMF 155 allocates a new 5G-GUTI. If the AMF 155 allocates a new registration area, it may send the registration area to the UE 100 via registration accept message 955. If there is no registration area included in the registration accept message, the UE 100 may consider the old registration area as valid. In an example, mobility restrictions may be included in case mobility restrictions may apply for the UE 100 and registration type may not be emergency registration. The AMF 155 may indicate the established PDU sessions to the UE 100 in the PDU session status. The UE 100 may remove locally any internal resources related to PDU sessions that are not marked as established in the received PDU session status. In an example, when the UE 100 is connected to the two AMF 155 belonging to different PLMN via 3GPP access and non-3GPP access then the UE 100 may remove locally any internal resources related to the PDU session of the current PLMN that are not marked as established in received PDU session status. If the PDU session status information was in the registration request, the AMF 155 may indicate the PDU session status to the UE. The mapping of allowed NSSAI may be the mapping of one or more S-NSSAI of the allowed NSSAI to the S-NSSAIs of the configured NSSAI for the HPLMN. The AMF 155 may include in the registration accept message 955 the LADN information for LADNs that are available within the registration area determined by the AMF 155 for the UE. If the UE 100 included MICO mode in the request, then AMF 155 may respond whether MICO mode may be used. The AMF 155 may set the IMS voice over PS session supported Indication. In an example, in order to set the IMS voice over PS session supported indication, the AMF 155 may perform a UE/RAN radio information and compatibility request procedure to check the compatibility of the UE 100 and RAN radio capabilities related to IMS voice over PS. In an example, the emergency service support indicator may inform the UE 100 that emergency services are supported, e.g., the UE 100 may request PDU session for emergency services. In an example, the handover restriction list and UE-AMBR may be provided to NG-RAN by the AMF 155.

In an example, the UE 100 may send to the new AMF 155 a registration complete 960 message. In an example, the UE 100 may send the registration complete message 960 to the AMF 155 to acknowledge that a new 5G-GUTI may be assigned. In an example, when information about the PDU session(s) to be re-activated is not included in the registration request, the AMF 155 may release the signaling connection with the UE 100. In an example, when the follow-on request is included in the registration request, the AMF 155 may not release the signaling connection after the completion of the registration procedure. In an example, if the AMF 155 is aware that some signaling is pending in the AMF 155 or between the UE 100 and the 5GC, the AMF 155 may not release the signaling connection after the completion of the registration procedure.

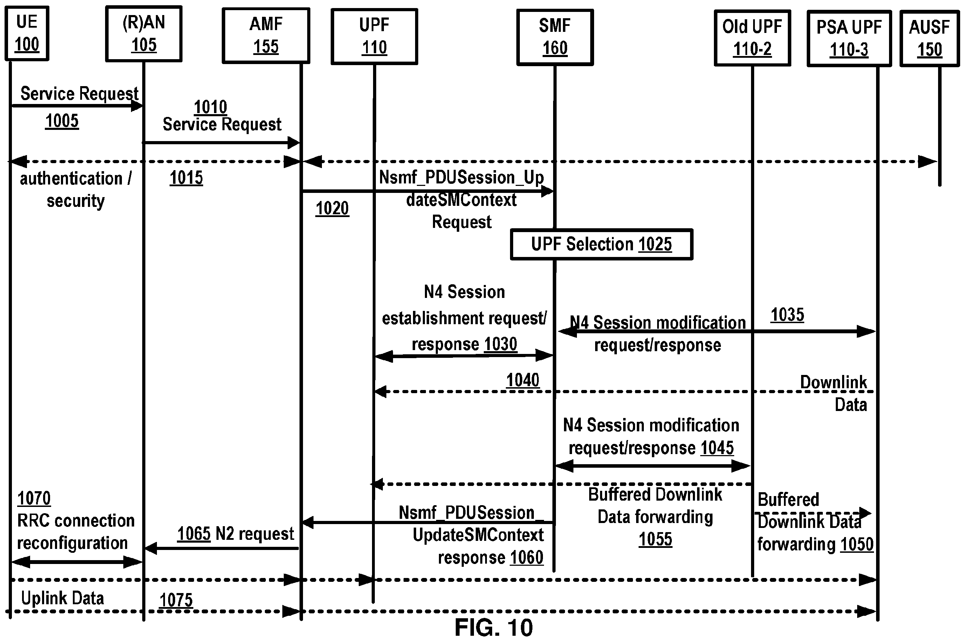

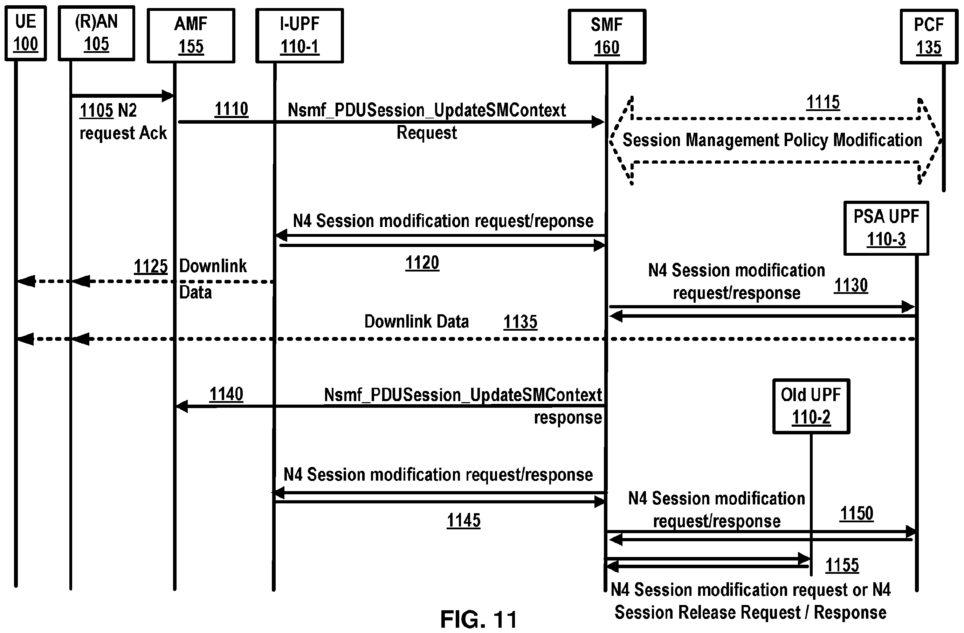

As depicted in example FIG. 10 and FIG. 11, a service request procedure e.g., a UE 100 triggered service request procedure may be used by a UE 100 in CM-IDLE state to request the establishment of a secure connection to an AMF 155. FIG. 11 is continuation of FIG. 10 depicting the service request procedure. The service request procedure may be used to activate a user plane connection for an established PDU session. The service request procedure may be triggered by the UE 100 or the 5GC, and may be used when the UE 100 is in CM-IDLE and/or in CM-CONNECTED and may allow selectively to activate user plane connections for some of the established PDU sessions.

In an example, a UE 100 in CM IDLE state may initiate the service request procedure to send uplink signaling messages, user data, and/or the like, as a response to a network paging request, and/or the like. In an example, after receiving the service request message, the AMF 155 may perform authentication. In an example, after the establishment of signaling connection to the AMF 155, the UE 100 or network may send signaling messages, e.g. PDU session establishment from the UE 100 to a SMF 160, via the AMF 155.

In an example, for any service request, the AMF 155 may respond with a service accept message to synchronize PDU session status between the UE 100 and network. The AMF 155 may respond with a service reject message to the UE 100, if the service request may not be accepted by the network. The service reject message may include an indication or cause code requesting the UE 100 to perform a registration update procedure. In an example, for service request due to user data, network may take further actions if user plane connection activation may not be successful. In an example FIG. 10 and FIG. 11, more than one UPF, e.g., old UPF 110-2 and PDU session Anchor PSA UPF 110-3 may be involved.

In an example, the UE 100 may send to a (R)AN 105 an AN message comprising AN parameters, mobility management, MM NAS service request 1005 (e.g., list of PDU sessions to be activated, list of allowed PDU sessions, security parameters, PDU session status, and/or the like), and/or the like. In an example, the UE 100 may provide the list of PDU sessions to be activated when the UE 100 may re-activate the PDU session(s). The list of allowed PDU sessions may be provided by the UE 100 when the service request may be a response of a paging or a NAS notification, and may identify the PDU sessions that may be transferred or associated to the access on which the service request may be sent. In an example, for the case of NG-RAN, the AN parameters may include selected PLMN ID, and an establishment cause. The establishment cause may provide the reason for requesting the establishment of an RRC connection. The UE 100 may send NAS service request message towards the AMF 155 encapsulated in an RRC message to the RAN 105.

In an example, if the service request may be triggered for user data, the UE 100 may identify, using the list of PDU sessions to be activated, the PDU session(s) for which the UP connections are to be activated in the NAS service request message. If the service request may be triggered for signaling, the UE 100 may not identify any PDU session(s). If this procedure may be triggered for paging response, and/or the UE 100 may have at the same time user data to be transferred, the UE 100 may identify the PDU session(s) whose UP connections may be activated in MM NAS service request message, by the list of PDU sessions to be activated.

In an example, if the service request over 3GPP access may be triggered in response to a paging indicating non-3GPP access, the NAS service request message may identify in the list of allowed PDU sessions the list of PDU sessions associated with the non-3GPP access that may be re-activated over 3GPP. In an example, the PDU session status may indicate the PDU sessions available in the UE 100. In an example, the UE 100 may not trigger the service request procedure for a PDU session corresponding to a LADN when the UE 100 may be outside the area of availability of the LADN. The UE 100 may not identify such PDU session(s) in the list of PDU sessions to be activated, if the service request may be triggered for other reasons.

In an example, the (R)AN 105 may send to AMF 155 an N2 Message 1010 (e.g., a service request) comprising N2 parameters, MM NAS service request, and/or the like. The AMF 155 may reject the N2 message if it may not be able to handle the service request. In an example, if NG-RAN may be used, the N2 parameters may include the 5G-GUTI, selected PLMN ID, location information, RAT type, establishment cause, and/or the like. In an example, the 5G-GUTI may be obtained in RRC procedure and the (R)AN 105 may select the AMF 155 according to the 5G-GUTI. In an example, the location information and RAT type may relate to the cell in which the UE 100 may be camping. In an example, based on the PDU session status, the AMF 155 may initiate PDU session release procedure in the network for the PDU sessions whose PDU session ID(s) may be indicated by the UE 100 as not available.

In an example, if the service request was not sent integrity protected or integrity protection verification failed, the AMF 155 may initiate a NAS authentication/security procedure 1015.

In an example, if the UE 100 triggers the service request to establish a signaling connection, upon successful establishment of the signaling connection, the UE 100 and the network may exchange NAS signaling.

In an example the AMF 155 may send to the SMF 160 a PDU session update context request 1020 e.g., Nsmf_PDUSession_UpdateSMContext request comprising PDU session ID(s), Cause(s), UE 100 location information, access type, and/or the like.

In an example, the Nsmf_PDUSession_UpdateSMContext request may be invoked by the AMF 155 if the UE 100 may identify PDU session(s) to be activated in the NAS service request message. In an example, the Nsmf_PDUSession_UpdateSMContext request may be triggered by the SMF 160 wherein the PDU session(s) identified by the UE 100 may correlate to other PDU session ID(s) than the one triggering the procedure. In an example, the Nsmf_ PDUSession_UpdateSMContext request may be triggered by the SMF 160 wherein the current UE 100 location may be outside the area of validity for the N2 information provided by the SMF 160 during a network triggered service request procedure. The AMF 155 may not send the N2 information provided by the SMF 160 during the network triggered service request procedure.

In an example, the AMF 155 may determine the PDU session(s) to be activated and may send an Nsmf_PDUSession_UpdateSMContext request to SMF 160(s) associated with the PDU session(s) with cause set to indicate establishment of user plane resources for the PDU session(s).

In an example, if the procedure may be triggered in response to paging indicating non-3GPP access, and the list of allowed PDU sessions provided by the UE 100 may not include the PDU session for which the UE 100 was paged, the AMF 155 may notify the SMF 160 that the user plane for the PDU session may not be re-activated. The service request procedure may succeed without re-activating the user plane of any PDU sessions, and the AMF 155 may notify the UE 100.

In an example, if the PDU session ID may correspond to a LADN and the SMF 160 may determine that the UE 100 may be outside the area of availability of the LADN based on the UE 100 location reporting from the AMF 155, the SMF 160 may decide to (based on local policies) keep the PDU session, may reject the activation of user plane connection for the PDU session and may inform the AMF 155. In an example, if the procedure may be triggered by a network triggered service request, the SMF 160 may notify the UPF 110 that originated the data notification to discard downlink data for the PDU sessions and/or to not provide further data notification messages. The SMF 160 may respond to the AMF 155 with an appropriate reject cause and the user plane activation of PDU session may be stopped.

In an example, if the PDU session ID may correspond to a LADN and the SMF 160 may determine that the UE 100 may be outside the area of availability of the LADN based on the UE 100 location reporting from the AMF 155, the SMF 160 may decide to (based on local policies) release the PDU session. The SMF 160 may locally release the PDU session and may inform the AMF 155 that the PDU session may be released. The SMF 160 may respond to the AMF 155 with an appropriate reject cause and the user plane Activation of PDU session may be stopped.

In an example, if the UP activation of the PDU session may be accepted by the SMF 160, based on the location info received from the AMF 155, the SMF 160 may check the UPF 110 Selection 1025 Criteria (e.g., slice isolation requirements, slice coexistence requirements, UPF's 110 dynamic load, UPF's 110 relative static capacity among UPFs supporting the same DNN, UPF 110 location available at the SMF 160, UE 100 location information, Capability of the UPF 110 and the functionality required for the particular UE 100 session. In an example, an appropriate UPF 110 may be selected by matching the functionality and features required for a UE 100, DNN, PDU session type (i.e. IPv4, IPv6, ethernet type or unstructured type) and if applicable, the static IP address/prefix, SSC mode selected for the PDU session, UE 100 subscription profile in UDM 140, DNAI as included in the PCC rules, local operator policies, S-NSSAI, access technology being used by the UE 100, UPF 110 logical topology, and/or the like), and may determine to perform one or more of the following: continue using the current UPF(s); may select a new intermediate UPF 110 (or add/remove an intermediate UPF 110), if the UE 100 has moved out of the service area of the UPF 110 that was previously connecting to the (R)AN 105, while maintaining the UPF(s) acting as PDU session anchor; may trigger re-establishment of the PDU session to perform relocation/reallocation of the UPF 110 acting as PDU session anchor, e.g. the UE 100 has moved out of the service area of the anchor UPF 110 which is connecting to RAN 105.

In an example, the SMF 160 may send to the UPF 110 (e.g., new intermediate UPF 110) an N4 session establishment request 1030. In an example, if the SMF 160 may select a new UPF 110 to act as intermediate UPF 110-2 for the PDU session, or if the SMF 160 may select to insert an intermediate UPF 110 for a PDU session which may not have an intermediate UPF 110-2, an N4 session establishment request 1030 message may be sent to the new UPF 110, providing packet detection, data forwarding, enforcement and reporting rules to be installed on the new intermediate UPF. The PDU session anchor addressing information (on N9) for this PDU session may be provided to the intermediate UPF 110-2.

In an example, if a new UPF 110 is selected by the SMF 160 to replace the old (intermediate) UPF 110-2, the SMF 160 may include a data forwarding indication. The data forwarding indication may indicate to the UPF 110 that a second tunnel endpoint may be reserved for buffered DL data from the old I-UPF.

In an example, the new UPF 110 (intermediate) may send to SMF 160 an N4 session establishment response message 1030. In case the UPF 110 may allocate CN tunnel info, the UPF 110 may provide DL CN tunnel info for the UPF 110 acting as PDU session anchor and UL CN tunnel info (e.g., CN N3 tunnel info) to the SMF 160. If the data forwarding indication may be received, the new (intermediate) UPF 110 acting as N3 terminating point may send DL CN tunnel info for the old (intermediate) UPF 110-2 to the SMF 160. The SMF 160 may start a timer, to release the resource in the old intermediate UPF 110-2.

In an example, if the SMF 160 may selects a new intermediate UPF 110 for the PDU session or may remove the old I-UPF 110-2, the SMF 160 may send N4 session modification request message 1035 to PDU session anchor, PSA UPF 110-3, providing the data forwarding indication and DL tunnel information from new intermediate UPF 110.

In an example, if the new intermediate UPF 110 may be added for the PDU session, the (PSA) UPF 110-3 may begin to send the DL data to the new I-UPF 110 as indicated in the DL tunnel information.

In an example, if the service request may be triggered by the network, and the SMF 160 may remove the old I-UPF 110-2 and may not replace the old I-UPF 110-2 with the new I-UPF 110, the SMF 160 may include the data forwarding indication in the request. The data forwarding indication may indicate to the (PSA) UPF 110-3 that a second tunnel endpoint may be reserved for buffered DL data from the old I-UPF 110-2. In this case, the PSA UPF 110-3 may begin to buffer the DL data it may receive at the same time from the N6 interface.

In an example, the PSA UPF 110-3 (PSA) may send to the SMF 160 an N4 session modification response 1035. In an example, if the data forwarding indication may be received, the PSA UPF 110-3 may become as N3 terminating point and may send CN DL tunnel info for the old (intermediate) UPF 110-2 to the SMF 160. The SMF 160 may start a timer, to release the resource in old intermediate UPF 110-2 if there is one.

In an example, the SMF 160 may send to the old UPF 110-2 an N4 session modification request 1045 (e.g., may comprise new UPF 110 address, new UPF 110 DL tunnel ID, and/or the like). In an example, if the service request may be triggered by the network, and/or the SMF 160 may remove the old (intermediate) UPF 110-2, the SMF 160 may send the N4 session modification request message to the old (intermediate) UPF 110-2, and may provide the DL tunnel information for the buffered DL data. If the SMF 160 may allocate new I-UPF 110, the DL tunnel information is from the new (intermediate) UPF 110 may act as N3 terminating point. If the SMF 160 may not allocate a new I-UPF 110, the DL tunnel information may be from the new UPF 110 (PSA) 110-3 acting as N3 terminating point. The SMF 160 may start a timer to monitor the forwarding tunnel. In an example, the old (intermediate) UPF 110-2 may send N4 session modification response message to the SMF 160.

In an example, if the I-UPF 110-2 may be relocated and forwarding tunnel was established to the new I-UPF 110, the old (intermediate) UPF 110-2 may forward its buffered data to the new (intermediate) UPF 110 acting as N3 terminating point. In an example, if the old I-UPF 110-2 may be removed and the new I-UPF 110 may not be assigned for the PDU session and forwarding tunnel may be established to the UPF 110 (PSA) 110-3, the old (intermediate) UPF 110-2 may forward its buffered data to the UPF 110 (PSA) 110-3 acting as N3 terminating point.

In an example, the SMF 160 may send to the AMF 155 an N11 message 1060 e.g., a Nsmf_PDUSession_UpdateSMContext response (comprising: N1 SM container (PDU session ID, PDU session re-establishment indication), N2 SM information (PDU session ID, QoS profile, CN N3 tunnel info, S-NSSAI), Cause), upon reception of the Nsmf_PDUSession_UpdateSMContext request with a cause including e.g., establishment of user plane resources. The SMF 160 may determine whether UPF 110 reallocation may be performed, based on the UE 100 location information, UPF 110 service area and operator policies. In an example, for a PDU session that the SMF 160 may determine to be served by the current UPF 110, e.g., PDU session anchor or intermediate UPF, the SMF 160 may generate N2 SM information and may send an Nsmf_ PDUSession_UpdateSMContext response 1060 to the AMF 155 to establish the user plane(s). The N2 SM information may contain information that the AMF 155 may provide to the RAN 105. In an example, for a PDU session that the SMF 160 may determine as requiring a UPF 110 relocation for PDU session anchor UPF, the SMF 160 may reject the activation of UP of the PDU session by sending Nsmf_PDUSession_UpdateSMContext response that may contain N1 SM container to the UE 100 via the AMF 155. The N1 SM container may include the corresponding PDU session ID and PDU session re-establishment indication.

Upon reception of the Namf_EventExposure_Notify from the AMF 155 to the SMF 160, with an indication that the UE 100 is reachable, if the SMF 160 may have pending DL data, the SMF 160 may invoke the Namf_Communication_N1N2MessageTransfer service operation to the AMF 155 to establish the user plane(s) for the PDU sessions. In an example, the SMF 160 may resume sending DL data notifications to the AMF 155 in case of DL data.

In an example, the SMF 160 may send a message to the AMF 155 to reject the activation of UP of the PDU session by including a cause in the Nsmf_PDUSession_UpdateSMContext response if the PDU session may correspond to a LADN and the UE 100 may be outside the area of availability of the LADN, or if the AMF 155 may notify the SMF 160 that the UE 100 may be reachable for regulatory prioritized service, and the PDU session to be activated may not for a regulatory prioritized service; or if the SMF 160 may decide to perform PSA UPF 110-3 relocation for the requested PDU session.

In an example, the AMF 155 may send to the (R)AN 105 an N2 request message 1065 (e.g., N2 SM information received from SMF 160, security context, AMF 155 signaling connection ID, handover restriction list, MM NAS service accept, list of recommended cells / TAs / NG-RAN node identifiers). In an example, the RAN 105 may store the security context, AMF 155 signaling connection Id, QoS information for the QoS flows of the PDU sessions that may be activated and N3 tunnel IDs in the UE 100 RAN 105 context. In an example, the MM NAS service accept may include PDU session status in the AMF 155. If the activation of UP of a PDU session may be rejected by the SMF 160, the MM NAS service accept may include the PDU session ID and the reason why the user plane resources may not be activated (e.g. LADN not available). Local PDU session release during the session request procedure may be indicated to the UE 100 via the session Status.

In an example, if there are multiple PDU sessions that may involve multiple SMF 160s, the AMF 155 may not wait for responses from all SMF 160s before it may send N2 SM information to the UE 100. The AMF 155 may wait for all responses from the SMF 160s before it may send MM NAS service accept message to the UE 100.

In an example, the AMF 155 may include at least one N2 SM information from the SMF 160 if the procedure may be triggered for PDU session user plane activation. AMF 155 may send additional N2 SM information from SMF 160s in separate N2 message(s) (e.g. N2 tunnel setup request), if there is any. Alternatively, if multiple SMF 160s may be involved, the AMF 155 may send one N2 request message to (R)AN 105 after all the Nsmf_PDUSession_UpdateSMContext response service operations from all the SMF 160s associated with the UE 100 may be received. In such case, the N2 request message may include the N2 SM information received in one or more of the Nsmf_PDUSession_UpdateSMContext response and PDU session ID to enable AMF 155 to associate responses to relevant SMF 160.

In an example, if the RAN 105 (e.g., NG RAN) node may provide the list of recommended cells / TAs / NG-RAN node identifiers during the AN release procedure, the AMF 155 may include the information from the list in the N2 request. The RAN 105 may use this information to allocate the RAN 105 notification area when the RAN 105 may decide to enable RRC inactive state for the UE 100.

If the AMF 155 may receive an indication, from the SMF 160 during a PDU session establishment procedure that the UE 100 may be using a PDU session related to latency sensitive services, for any of the PDU sessions established for the UE 100 and the AMF 155 has received an indication from the UE 100 that may support the CM-CONNECTED with RRC inactive state, then the AMF 155 may include the UE's RRC inactive assistance information. In an example, the AMF 155 based on network configuration, may include the UE's RRC inactive assistance information.

In an example, the (R)AN 105 may send to the UE 100 a message to perform RRC connection reconfiguration 1070 with the UE 100 depending on the QoS information for all the QoS flows of the PDU sessions whose UP connections may be activated and data radio bearers. In an example, the user plane security may be established.

In an example, if the N2 request may include a MM NAS service accept message, the RAN 105 may forward the MM NAS service accept to the UE 100. The UE 100 may locally delete context of PDU sessions that may not be available in 5GC.

In an example, if the N1 SM information may be transmitted to the UE 100 and may indicate that some PDU session(s) may be re-established, the UE 100 may initiate PDU session re-establishment for the PDU session(s) that may be re-established after the service request procedure may be complete.

In an example, after the user plane radio resources may be setup, the uplink data from the UE 100 may be forwarded to the RAN 105. The RAN 105 (e.g., NG-RAN) may send the uplink data to the UPF 110 address and tunnel ID provided.

In an example, the (R)AN 105 may send to the AMF 155 an N2 request Ack 1105 (e.g., N2 SM information (comprising: AN tunnel info, list of accepted QoS flows for the PDU sessions whose UP connections are activated, list of rejected QoS flows for the PDU sessions whose UP connections are activated)). In an example, the N2 request message may include N2 SM information(s), e.g. AN tunnel info. RAN 105 may respond N2 SM information with separate N2 message (e.g. N2 tunnel setup response). In an example, if multiple N2 SM information are included in the N2 request message, the N2 request Ack may include multiple N2 SM information and information to enable the AMF 155 to associate the responses to relevant SMF 160.

In an example, the AMF 155 may send to the SMF 160 a Nsmf_PDUSession_UpdateSMContext request 1110 (N2 SM information (AN tunnel info), RAT type) per PDU session. If the AMF 155 may receive N2 SM information (one or multiple) from the RAN 105, then the AMF 155 may forward the N2 SM information to the relevant SMF 160. If the UE 100 time zone may change compared to the last reported UE 100 Time Zone then the AMF 155 may include the UE 100 time zone IE in the Nsmf_PDUSession_UpdateSMContext request message.

In an example, if dynamic PCC is deployed, the SMF 160 may initiate notification about new location information to the PCF 135 (if subscribed) by invoking an event exposure notification operation (e.g., a Nsmf_EventExposure _Notify service operation). The PCF 135 may provide updated policies by invoking a policy control update notification message 1115 (e.g., a Npcf_SMPolicyControl_UpdateNotify operation).

In an example, if the SMF 160 may select a new UPF 110 to act as intermediate UPF 110 for the PDU session, the SMF 160 may initiates an N4 session modification procedure 1120 to the new I-UPF 110 and may provide AN tunnel info. The downlink data from the new I-UPF 110 may be forwarded to RAN 105 and UE 100. In an example, the UPF 110 may send to the SMF 160, an N4 session modification response 1120. In an example, the SMF 160 may send to the AMF 155, an Nsmf_PDUSession_UpdateSMContext response 1140.

In an example, if forwarding tunnel may be established to the new I-UPF 110 and if the timer SMF 160 set for forwarding tunnel may be expired, the SMF 160 may sends N4 session modification request 1145 to new (intermediate) UPF 110 acting as N3 terminating point to release the forwarding tunnel. In an example, the new (intermediate) UPF 110 may send to the SMF 160 an N4 session modification response 1145. In an example, the SMF 160 may send to the PSA UPF 110-3 an N4 session modification request 1150, or N4 session release request. In an example, if the SMF 160 may continue using the old UPF 110-2, the SMF 160 may send an N4 session modification request 1155, providing AN tunnel info. In an example, if the SMF 160 may select a new UPF 110 to act as intermediate UPF 110, and the old UPF 110-2 may not be PSA UPF 110-3, the SMF 160 may initiate resource release, after timer expires, by sending an N4 session release request (release cause) to the old intermediate UPF 110-2.

In an example, the old intermediate UPF 110-2 may send to the SMF 160 an N4 session modification response or N4 session release response 1155. The old UPF 110-2 may acknowledge with the N4 session modification response or N4 session release response message to confirm the modification or release of resources. The AMF 155 may invoke the Namf_EventExposure _Notify service operation to notify the mobility related events, after this procedure may complete, towards the NFs that may have subscribed for the events. In an example, the AMF 155 may invoke the Namf_ EventExposure _Notify towards the SMF 160 if the SMF 160 had subscribed for UE 100 moving into or out of area of interest and if the UE's current location may indicate that it may be moving into or moving outside of the area of interest subscribed, or if the SMF 160 had subscribed for LADN DNN and if the UE 100 may be moving into or outside of an area where the LADN is available, or if the UE 100 may be in MICO mode and the AMF 155 had notified an SMF 160 of the UE 100 being unreachable and that SMF 160 may not send DL data notifications to the AMF 155, and the AMF 155 may informs the SMF 160 that the UE 100 is reachable, or if the SMF 160 had subscribed for UE 100 reachability status, then the AMF 155 may notify the UE 100 reachability.

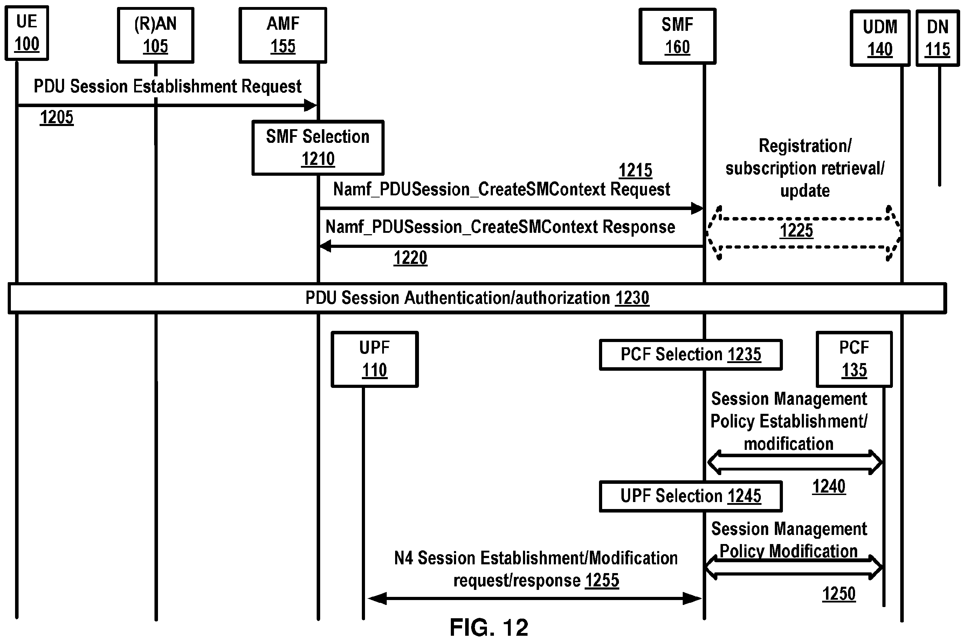

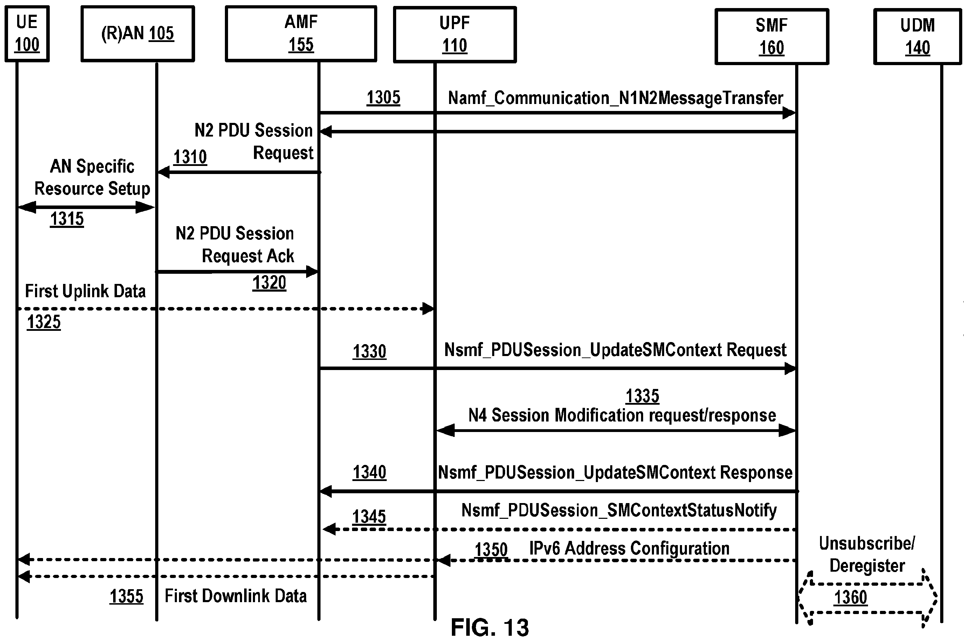

An example PDU session establishment procedure depicted in FIG. 12 and FIG. 13. In an example embodiment, when the PDU session establishment procedure may be employed, the UE 100 may send to the AMF 155 a NAS Message 1205 (or a SM NAS message) comprising NSSAI, S-NSSAI (e.g., requested S-NSSAI, allowed S-NSSAI, subscribed S-NSSAI, and/or the like), DNN, PDU session ID, request type, old PDU session ID, N1 SM container (PDU session establishment request), and/or the like. In an example, the UE 100, in order to establish a new PDU session, may generate a new PDU session ID. In an example, when emergency service may be required and an emergency PDU session may not already be established, the UE 100 may initiate the UE 100 requested PDU session establishment procedure with a request type indicating emergency request. In an example, the UE 100 may initiate the UE 100 requested PDU session establishment procedure by the transmission of the NAS message containing a PDU session establishment request within the N1 SM container. The PDU session establishment request may include a PDU type, SSC mode, protocol configuration options, and/or the like. In an example, the request type may indicate initial request if the PDU session establishment is a request to establish the new PDU session and may indicate existing PDU session if the request refers to an existing PDU session between 3GPP access and non-3GPP access or to an existing PDN connection in EPC. In an example, the request type may indicate emergency request if the PDU session establishment may be a request to establish a PDU session for emergency services. The request type may indicate existing emergency PDU session if the request refers to an existing PDU session for emergency services between 3GPP access and non-3GPP access. In an example, the NAS message sent by the UE 100 may be encapsulated by the AN in a N2 message towards the AMF 155 that may include user location information and access technology type information. In an example, the PDU session establishment request message may contain SM PDU DN request container containing information for the PDU session authorization by the external DN. In an example, if the procedure may be triggered for SSC mode 3 operation, the UE 100 may include the old PDU session ID which may indicate the PDU session ID of the on-going PDU session to be released, in the NAS message. The old PDU session ID may be an optional parameter which may be included in this case. In an example, the AMF 155 may receive from the AN the NAS message (e.g., NAS SM message) together with user location information (e.g. cell ID in case of the RAN 105). In an example, the UE 100 may not trigger a PDU session establishment for a PDU session corresponding to a LADN when the UE 100 is outside the area of availability of the LADN.

In an example, the AMF 155 may determine that the NAS message or the SM NAS message may correspond to the request for the new PDU session based on that request type indicates initial request and that the PDU session ID may not be used for any existing PDU session(s) of the UE 100. If the NAS message does not contain an S-NSSAI, the AMF 155 may determine a default S-NSSAI for the requested PDU session either according to the UE 100 subscription, if it may contain only one default S-NSSAI, or based on operator policy. In an example, the AMF 155 may perform SMF 160 selection 1210 and select an SMF 160. If the request type may indicate initial request or the request may be due to handover from EPS, the AMF 155 may store an association of the S-NSSAI, the PDU session ID and a SMF 160 ID. In an example, if the request type is initial request and if the old PDU session ID indicating the existing PDU session may be contained in the message, the AMF 155 may select the SMF 160 and may store an association of the new PDU session ID and the selected SMF 160 ID.

In an example, the AMF 155 may send to the SMF 160, an N11 message 1215, e.g., Nsmf_PDUSession_CreateSMContext request (comprising: SUPI or PEI, DNN, S-NSSAI, PDU session ID, AMF 155 ID, request type, N1 SM container (PDU session establishment request), user location information, access type, PEI, GPSI), or Nsmf_PDUSession_UpdateSMContext request (SUPI, DNN, S-NSSAI, PDU session ID, AMF 155 ID, request type, N1 SM container (PDU session establishment request), user location information, access type, RAT type, PEI). In an example, if the AMF 155 may not have an association with the SMF 160 for the PDU session ID provided by the UE 100 (e.g. when request type indicates initial request), the AMF 155 may invoke the Nsmf_PDUSession_CreateSMContext request, but if the AMF 155 already has an association with an SMF 160 for the PDU session ID provided by the UE 100 (e.g. when request type indicates existing PDU session), the AMF 155 may invoke the Nsmf_PDUSession_UpdateSMContext request. In an example, the AMF 155 ID may be the UE's GUAMI which uniquely identifies the AMF 155 serving the UE 100. The AMF 155 may forward the PDU session ID together with the N1 SM container containing the PDU session establishment request received from the UE 100. The AMF 155 may provide the PEI instead of the SUPI when the UE 100 has registered for emergency services without providing the SUPI. In case the UE 100 has registered for emergency services but has not been authenticated, the AMF 155 may indicate that the SUPI has not been authenticated.

In an example, if the request type may indicate neither emergency request nor existing emergency PDU session and, if the SMF 160 has not yet registered and subscription data may not be available, the SMF 160 may register with the UDM 140, and may retrieve subscription data 1225 and subscribes to be notified when subscription data may be modified. In an example, if the request type may indicate existing PDU session or existing emergency PDU session, the SMF 160 may determine that the request may be due to handover between 3GPP access and non-3GPP access or due to handover from EPS. The SMF 160 may identify the existing PDU session based on the PDU session ID. The SMF 160 may not create a new SM context but instead may update the existing SM context and may provide the representation of the updated SM context to the AMF 155 in the response. if the request type may be initial request and if the old PDU session ID may be included in Nsmf_PDUSession_CreateSMContext request, the SMF 160 may identify the existing PDU session to be released based on the old PDU session ID.

In an example, the SMF 160 may send to the AMF 155, the N11 message response 1220, e.g., either a PDU session create/update response, Nsmf_PDUSession_CreateSMContext response 1220 (cause, SM context ID or N1 SM container (PDU session reject(cause))) or an Nsmf_PDUSession_UpdateSMContext response.

In an example, if the SMF 160 may perform secondary authorization/authentication 1230 during the establishment of the PDU session by a DN-AAA server, the SMF 160 may select a UPF 110 and may trigger a PDU session establishment authentication/authorization.

In an example, if the request type may indicate initial request, the SMF 160 may select an SSC mode for the PDU session. The SMF 160 may select one or more UPFs as needed. In case of PDU type IPv4 or IPv6, the SMF 160 may allocate an IP address/prefix for the PDU session. In case of PDU type IPv6, the SMF 160 may allocate an interface identifier to the UE 100 for the UE 100 to build its link-local address. For Unstructured PDU type the SMF 160 may allocate an IPv6 prefix for the PDU session and N6 point-to-point tunneling (based on UDP/IPv6).

In an example, if dynamic PCC is deployed, the may SMF 160 performs PCF 135 selection 1235. If the request type indicates existing PDU session or existing emergency PDU session, the SMF 160 may use the PCF 135 already selected for the PDU session. If dynamic PCC is not deployed, the SMF 160 may apply local policy.

In an example, the SMF 160 may perform a session management policy establishment procedure 1240 to establish a PDU session with the PCF 135 and may get the default PCC Rules for the PDU session. The GPSI may be included if available at the SMF 160. If the request type in 1215 indicates existing PDU session, the SMF 160 may notify an event previously subscribed by the PCF 135 by a session management policy modification procedure and the PCF 135 may update policy information in the SMF 160. The PCF 135 may provide authorized session-AMBR and the authorized 5QI and ARP to SMF 160. The PCF 135 may subscribe to the IP allocation/release event in the SMF 160 (and may subscribe other events).

In an example, the PCF 135, based on the emergency DNN, may set the ARP of the PCC rules to a value that may be reserved for emergency services.

In an example, if the request type in 1215 indicates initial request, the SMF 160 may select an SSC mode for the PDU session. The SMF 160 may select 1245 one or more UPFs as needed. In case of PDU type IPv4 or IPv6, the SMF 160 may allocate an IP address/prefix for the PDU session. In case of PDU type IPv6, the SMF 160 may allocate an interface identifier to the UE 100 for the UE 100 to build its link-local address. For unstructured PDU type the SMF 160 may allocate an IPv6 prefix for the PDU session and N6 point-to-point tunneling (e.g., based on UDP/IPv6). In an example, for Ethernet PDU type PDU session, neither a MAC nor an IP address may be allocated by the SMF 160 to the UE 100 for this PDU session.

In an example, if the request type in 1215 is existing PDU session, the SMF 160 may maintain the same IP address/prefix that may be allocated to the UE 100 in the source network.

In an example, if the request type in 1215 indicates existing PDU session referring to an existing PDU session moved between 3GPP access and non-3GPP access, the SMF 160 may maintain the SSC mode of the PDU session, e.g., the current PDU session Anchor and IP address. In an example, the SMF 160 may trigger e.g. new intermediate UPF 110 insertion or allocation of a new UPF 110. In an example, if the request type indicates emergency request, the SMF 160 may select 1245 the UPF 110 and may select SSC mode 1.

In an example, the SMF 160 may perform a session management policy modification 1250 procedure to report some event to the PCF 135 that has previously subscribed. If request type is initial request and dynamic PCC is deployed and PDU type is IPv4 or IPv6, the SMF 160 may notify the PCF 135 (that has previously subscribed) with the allocated UE 100 IP address/prefix.

In an example, the PCF 135 may provide updated policies to the SMF 160. The PCF 135 may provide authorized session-AMBR and the authorized 5QI and ARP to the SMF 160.

In an example, if request type indicates initial request, the SMF 160 may initiate an N4 session establishment procedure 1255 with the selected UPF 110. The SMF 160 may initiate an N4 session modification procedure with the selected UPF 110. In an example, the SMF 160 may send an N4 session establishment/modification request 1255 to the UPF 110 and may provide packet detection, enforcement, reporting rules, and/or the like to be installed on the UPF 110 for this PDU session. If CN tunnel info is allocated by the SMF 160, the CN tunnel info may be provided to the UPF 110. If the selective user plane deactivation is required for this PDU session, the SMF 160 may determine the Inactivity Timer and may provide it to the UPF 110. In an example, the UPF 110 may acknowledges by sending an N4 session establishment/modification response 1255. If CN tunnel info is allocated by the UPF, the CN tunnel info may be provided to SMF 160. In an example, if multiple UPFs are selected for the PDU session, the SMF 160 may initiate N4 session establishment/modification procedure 1255 with one or more UPF 110 of the PDU session.

In an example, the SMF 160 may send to the AMF 155 an Namf_Communication_N1N2MessageTransfer 1305 message (comprising PDU session ID, access type, N2 SM information (PDU session ID, QFI(s), QoS profile(s), CN tunnel info, S-NSSAI, session-AMBR, PDU session type, and/or the like), N1 SM container (PDU session establishment accept (QoS Rule(s), selected SSC mode, S-NSSAI, allocated IPv4 address, interface identifier, session-AMBR, selected PDU session type, and/or the like))). In case of multiple UPFs are used for the PDU session, the CN tunnel info may comprise tunnel information related with the UPF 110 that terminates N3. In an example, the N2 SM information may carry information that the AMF 155 may forward to the (R)AN 105 (e.g., the CN tunnel info corresponding to the core network address of the N3 tunnel corresponding to the PDU session, one or multiple QoS profiles and the corresponding QFIs may be provided to the (R)AN 105, the PDU session ID may be used by AN signaling with the UE 100 to indicate to the UE 100 the association between AN resources and a PDU session for the UE100, and/or the like). In an example, a PDU session may be associated to an S-NSSAI and a DNN. In an example, the N1 SM container may contain the PDU session establishment accept that the AMF 155 may provide to the UE 100. In an example, multiple QoS rules and QoS profiles may be included in the PDU session establishment accept within the N1 SM and in the N2 SM information. In an example, the Namf_Communication_N1N2MessageTransfer 1305 may further comprise the PDU session ID and information allowing the AMF 155 to know which access towards the UE 100 to use.

In an example, the AMF 155 may send to the (R)AN105 an N2 PDU session request 1310 (comprising N2 SM information, NAS message (PDU session ID, N1 SM container (PDU session establishment accept, and/or the like))). In an example, the AMF 155 may send the NAS message 1310 that may comprise PDU session ID and PDU session establishment accept targeted to the UE 100 and the N2 SM information received from the SMF 160 within the N2 PDU session request 1310 to the (R)AN 105.

In an example, the (R)AN 105 may issue AN specific signaling exchange 1315 with the UE 100 that may be related with the information received from SMF 160. In an example, in case of a 3GPP RAN 105, an RRC connection reconfiguration procedure may take place with the UE 100 to establish the necessary RAN 105 resources related to the QoS Rules for the PDU session request 1310. In an example, (R)AN 105 may allocate (R)AN 105 N3 tunnel information for the PDU session. In case of dual connectivity, the master RAN 105 node may assign some (zero or more) QFIs to be setup to a master RAN 105 node and others to the secondary RAN 105 node. The AN tunnel info may comprise a tunnel endpoint for one or more involved RAN 105 nodes, and the QFIs assigned to one or more tunnel endpoints. A QFI may be assigned to either the master RAN 105 node or the secondary RAN 105 node. In an example, (R)AN 105 may forward the NAS message 1310 (PDU session ID, N1 SM container (PDU session establishment accept)) to the UE 100. The (R)AN 105 may provide the NAS message to the UE 100 if the necessary RAN 105 resources are established and the allocation of (R)AN 105 tunnel information are successful.

In an example, the N2 PDU session response 1320 may comprise a PDU session ID, cause, N2 SM information (PDU session ID, AN tunnel info, list of accepted/rejected QFI(s)), and/or the like. In an example, the AN tunnel info may correspond to the access network address of the N3 tunnel corresponding to the PDU session.

In an example, the AMF 155 may forward the N2 SM information received from (R)AN 105 to the SMF 160 via a Nsmf_PDUSession_UpdateSMContext request 1330 ( comprising: N2 SM information, request type, and/or the like). In an example, if the list of rejected QFI(s) is included in N2 SM information, the SMF 160 may release the rejected QFI(s) associated QoS profiles.

In an example, the SMF 160 may initiate an N4 session modification procedure 1335 with the UPF110. The SMF 160 may provide AN tunnel info to the UPF 110 as well as the corresponding forwarding rules. In an example, the UPF 110 may provide an N4 session modification response 1335 to the SMF 160160.

In an example, the SMF 160 may send to the AMF 155 an Nsmf_PDUSession_UpdateSMContext response 1340 (Cause). In an example, the SMF 160 may subscribe to the UE 100 mobility event notification from the AMF 155 (e.g. location reporting, UE 100 moving into or out of area of interest), after this step by invoking Namf_EventExposure_Subscribe service operation. For LADN, the SMF 160 may subscribe to the UE 100 moving into or out of LADN service area event notification by providing the LADN DNN as an indicator for the area of interest. The AMF 155 may forward relevant events subscribed by the SMF 160.

In an example, the SMF 160 may send to the AMF 155, a Nsmf_PDUSession_SMContextStatusNotify (release) 1345. In an example, if during the procedure, any time the PDU session establishment is not successful, the SMF 160 may inform the AMF 155 by invoking Nsmf_PDUSession_SMContextStatusNotify(release) 1345. The SMF 160 may releases any N4 session(s) created, any PDU session address if allocated (e.g. IP address) and may release the association with the PCF 135.

In an example, in case of PDU type IPv6, the SMF 160 may generate an IPv6 Router Advertisement 1350 and may send it to the UE 100 via N4 and the UPF 110.

In an example, if the PDU session may not be established, the SMF 160 may unsubscribe 1360 to the modifications of session management subscription data for the corresponding (SUPI, DNN, S-NSSAI), using Nudm_SDM_Unsubscribe (SUPI, DNN, S-NSSAI), if the SMF 160 is no more handling a PDU session of the UE 100 for this (DNN, S-NSSAI). In an example, if the PDU session may not be established, the SMF 160 may deregister 1360 for the given PDU session using Nudm_UECM_Deregistration (SUPI, DNN, PDU session ID).

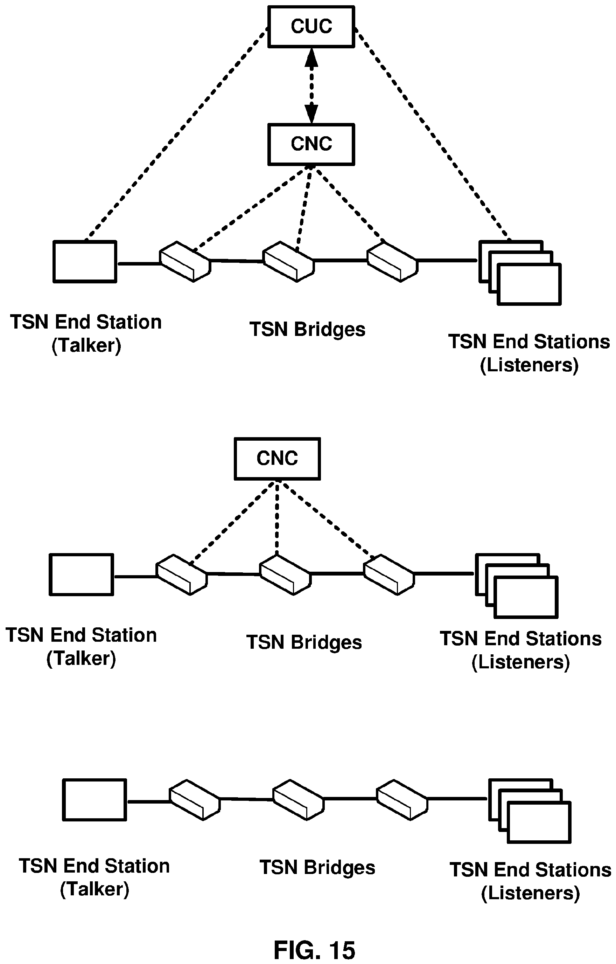

The 5GS may be operated as stand-alone time sensitive networking (TSN) network or part of a non-stand-alone TSN network, e.g. an industrial communication network, and/or the like. 5GS may support three modes of operation as depicted in example FIG. 15. In a fully distributed model shown at the bottom of FIG. 15, the TSN end stations, e.g., talkers and listeners, may communicate TSN stream requirements directly to the TSN network. Each TSN bridge on the path from talker to listeners may propagate the TSN user and network configuration information along with the active topology for the TSN stream to the neighboring bridge(s). The network resources may be managed locally in each TSN bridge. In a centralized network and distributed user model shown in the middle of FIG. 15, the TSN end stations, e.g.,. Talkers and Listeners, may communicate the TSN stream requirements directly to the TSN network. The TSN stream requirements are forwarded to a centralized network configuration (CNC). The TSN bridges may provide their network capabilities information and active topology information to the CNC. The CNC may have a complete view of the TSN network and is enabled to compute respective end-to-end communication paths from a talker to the listeners that fulfil the TSN stream requirements as provided by the end stations. The computation result may be provided by the CNC as TSN configuration information to each TSN bridge in the path between involved TSN end stations (Talkers to the Listeners) as network configuration information. In a fully centralized model shown at the top of FIG. 15, the TSN end stations, e.g., Talkers and Listeners, may communicate the TSN stream requirements to a centralized user configuration (CUC). The CUC may adapt the TSN end station stream requirements before forwarding them to the CNC. The CNC performs the same actions as described in the centralized network/distributed user model, except that CNC may send specific TSN configuration information to the CUC. The CUC may determine/derive the TSN configuration information for the TSN end stations and notify them accordingly.

In an example, a TSN system may employ 5GS as a TSN link, as a TSN bridge, and/or the like. The TSN system may be integrated with a 5GS.

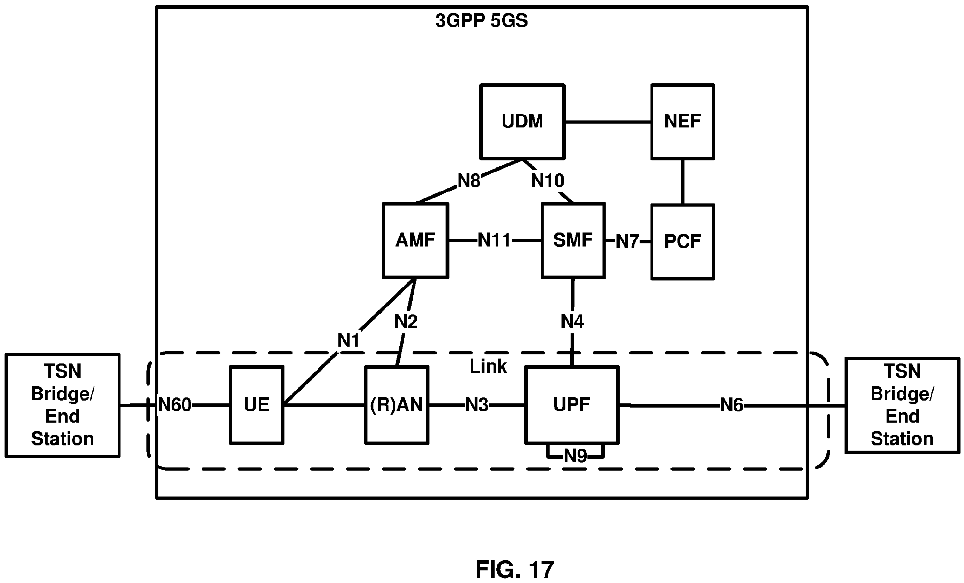

As depicted in example FIG. 17, the 5GS may be employed to the external network as a TSN link, e.g., as an Ethernet connection/link between a UE and a UPF. The link may be defined by the connected entities, i.e. either two TSN bridges or a TSN end station and a TSN bridge, two TSN end stations, and/or the like. The link capabilities may be described by the ingress/egress ports of the TSN bridges connected to the end of a link or by the TSN streaming requirements of a TSN end station directly connected to the link. The exposed capabilities may comprise delay information, link speed, available bandwidth information, and/or the like.

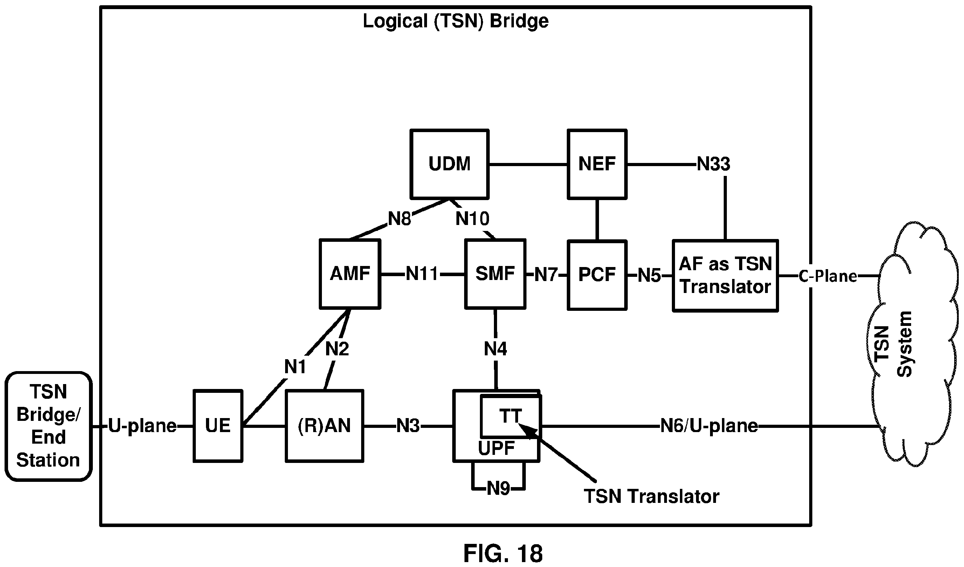

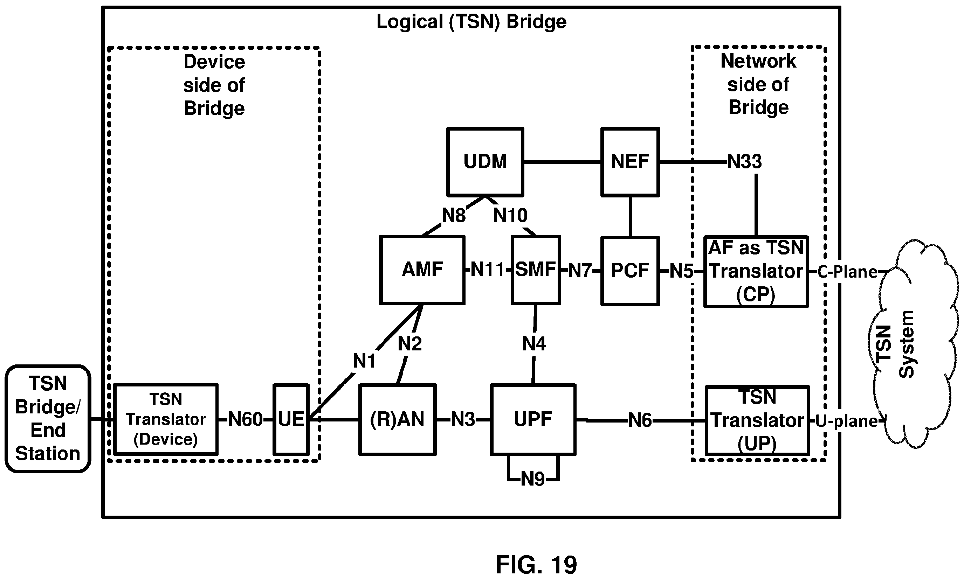

In an example as depicted in FIG. 18 and FIG. 19, 5GS may be employed as a TSN bridge. The 5GS may receive TSN related reservation requests using a 5G QoS framework. The 5GS may employ 5G internal signaling to satisfy TSN reservation requests. When the 5GS is deployed as a TSN bridge (e.g., logical TSN bridge), the TSN bridge may comprise an adaptation function to translate the 5GS protocols and information objects to TSN protocols and information objects and vice versa. The 5GS bridge may provide TSN ingress and egress ports via a TSN Translator (Device) on the UE side and via the "TSN Translator" (CP and UP) on the CN side towards the DN. The 5GS bridge may support different TSN configuration models. In an example, one or more TSN compliant interfaces may be employed by the TSN bridge with the respective protocols towards TSN end stations, TSN bridges, CNC, CUC, and/or the like on the control plane and/or user plane. The TSN bridge self-management and the functions required to interact with CNC may be located at the network translator.

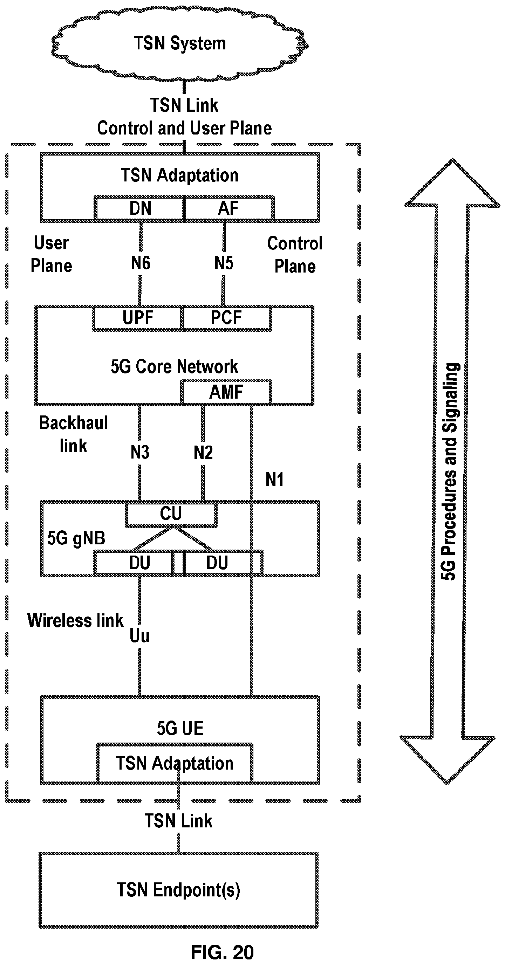

In an example, as depicted in FIG. 20, a 5GS may be integrated with a TSN system. When the 5GS is integrated with the TSN system, individual nodes of the 5GS (e.g. UPF, gNB, and/or the like) may interact with TSN procedures initiated by TSN end-points and TSN controllers. This allows the 5GS and associated infrastructure to present itself as multiple TSN-compatible end-points.

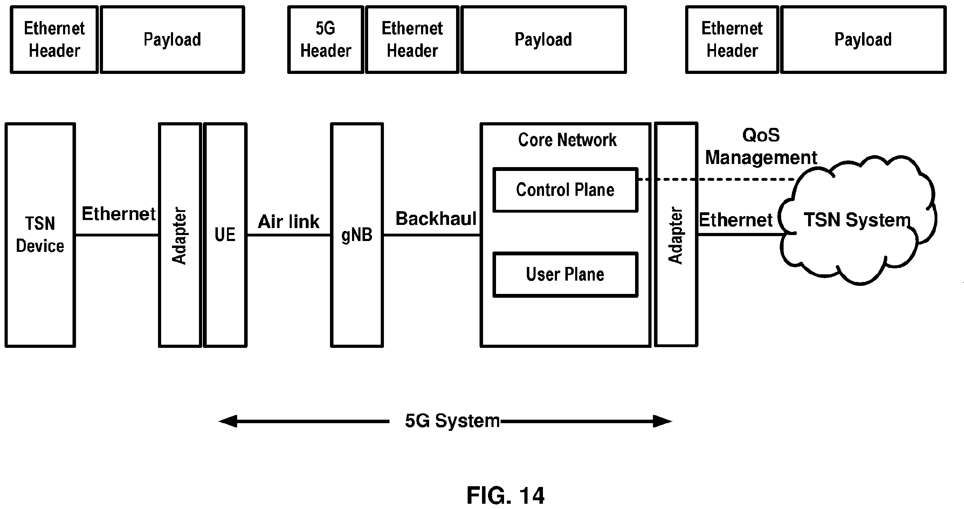

As depicted in an example FIG. 14, 5GS may be integrated with a TSN system. The TSN system may generate control and data traffic and send to the 5GS. Control and data traffic may comprise TSN QoS information, stream information, port information, and/or the like. Ethernet frames and/or headers may be mapped to or encapsulated within 5G frames/packets and sent via an air interface to the 5GS. A 5G radio with an integrated Ethernet adapter may be connected to a wireless device (UE).

In an example embodiment, a 3GPP network may support derivation of TSN bridge delay managed object attributes (e.g., independentDelayMin/Max, dependentDelayMin/Max, and/or the like) for a 3GPP bridge based on 3GPP attributes, e.g., QoS flow packet delay budget (PDB) values, guaranteed flow bit rate (GFBR), the maximum data burst volume (MDBV) indicated in the QoS profile, and/or the like. Mapping of 3GPP attributes to TSN capabilities may be in the SMF and/or PCF and the exposure of capabilities towards TSN bridge may be via NEF, SMF, PCF, and/or the like.

In an example, a TSN bridge delay managed object may comprise frame length-related attributes per tuple (ingress port, egress port, traffic class). Frame length-related attributes may comprise: independentDelay Min/Max (e.g., incurred bridge delay independent of the frame size (typically in ns)), dependentDelay Min/Max (e.g., incurred bridge delay per base volume (typically in ps per byte)), and/or the like.

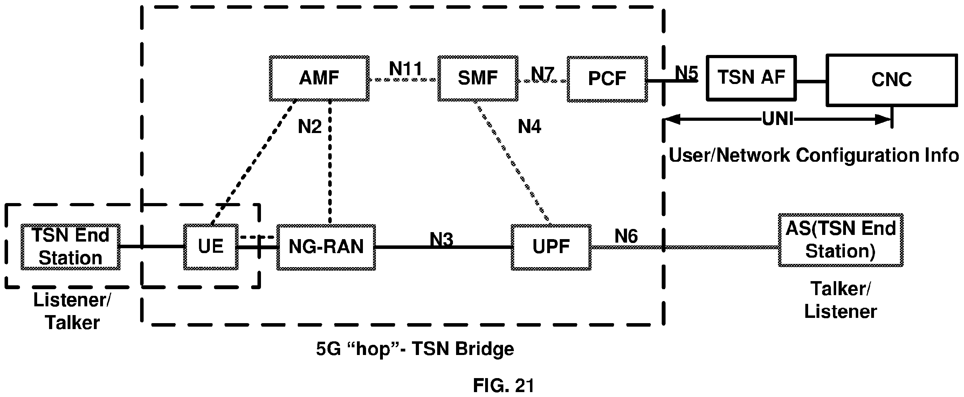

In an example as depicted in FIG. 21, when centralized model or the fully centralized model and the centralized network / distributed user model is employed in TSN network, the 5GS may be enhanced to act as a TSN bridge in the network. An AF may act as a controller function to collect 5GS virtual bridge related information and register it to CNC via TSN defined application interfaces, since the CNC maintains capabilities of each TSN bridge in the TSN network and the topology of the network. In an example, based on the information that the CNC maintains, the CNC may calculate the forwarding and scheduling rules on each bridge for a TSN stream that required by CUC which collects the TSN stream requirements from end stations for fully centralized model. In an example, a control plane based QoS negotiation may be employed. As depicted in FIG. 21, the CNC may negotiate with a PCF through the TSN AF to generate a TSN-aware QoS profile for a stream. The TSN AF may convert TSN traffic characteristics to TSN QoS requirements, TSN QoS Profile, and/or the like.

In an example, for the control plane based solution, the AF may act as a controller function to collect 5GS virtual bridge related information (e.g. AF receives the information from SMF and may register it to CNC via TSN defined application interfaces). The information may comprise: bridge identity, port identities, bridge delay, sending delay, bridge related topology information, and/or the like. In an example, bridge identity may identify a TSN bridge in the TSN network. In an example, ports identities may identify ports in a TSN bridge. Bridge delay may comprise a delay value of frames as they pass through the bridge, that may comprise maximum and minimum of independent and dependent delay. Sending delay may be the delay for a frame transmitted from a TSN bridge port to a neighboring port on a different bridge. Bridge related topology may comprise the bridge and port identities and port capabilities of a TSN bridge and neighboring bridges. In an example, identities of the virtual bridge and related ports of the UPF may be preconfigured on the UPF and may be reported to the AF via the SMF when the UPF sets up. The UE or PDU session may be virtualized to be a virtual port on the virtual bridge with a (unique) identity that may be allocated by the SMF or the UPF. The TSN AF may interact with the 5G CN and may perform the mapping between TSN network parameters and a new deterministic QoS profile for the 5GS, negotiate the traffic treatment and related QoS policies, and/or the like. In an example, the TSN AF may directly talk to the other 5GC NFs or via the NEF.

In an example, 5GS virtual bridge information may comprise bridge ID, port IDs, bridge internal information (e.g., bridge delay) and bridge port related information (e.g., propagation delay), and/or the like. Information for 5GS virtual bridge may be reported to AF by 5GS control plane, like the bridge ID, port IDs, bridge internal information (e.g., bridge delay) and bridge port related information (e.g., propagation delay), and/or the like.

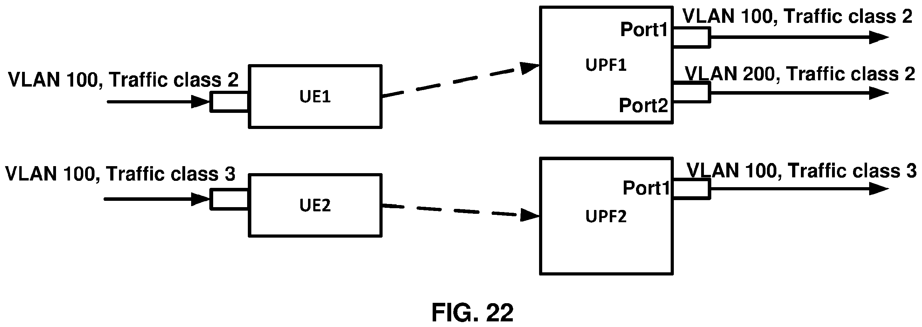

In an example as depicted in FIG. 22, the 5GS virtual bridge may be per UPF, per TSN network (indicated by DNN), and the 5GS virtual bridge user plane may comprise UPF ports and the UE ports connected to such UPF ports via PDU session. Identities of the virtual bridge and related UPF ports may be preconfigured on UPF and may be reported to AF through SMF when UPF sets up or the PDU Session is established. The UE port identity may be unique in a 5GS virtual bridge and the UE port identity may be allocated by UPF. The UPF port and UE port related information may be reported to AF by SMF directly or via NEF. The UPF port related information may be reported to the SMF by UPF using the node level signaling or PDU session level signaling. The UE port related information may be reported by UE to the SMF over NAS or over UP of its corresponding PDU session. In an example, a UE may operate in switch mode, Ethernet switch mode, and/or the like. In an example, the UE port of 5GS virtual bridge may be the physical port of UE, virtual port/interface of the UE, and/or the like.

In an example, traffic scheduling in TSN bridge may be per traffic class, which is service level of packets transmission. A TSN bridge port may support different traffic classes. In an example, if the TSN bridge is aware of VLAN, a TSN bridge port may support different VLANs. When SMF selects the UPF for the PDU Session, it may consider the UE subscribed traffic classes and VLANs.

As depicted in example FIG. 22, UPF1 and UPF2 support different VLANs and traffic classes based on deployment. When UE1 and UE2 establish PDU session, the UPF 1 and UPF2 are selected respectively to meet their subscribed VLANs and traffic classes. As the bridge delay defined in 802.1QCC is per traffic class per port pair, the UPF may determine the right port pairs to serve the PDU session, and the SMF may report bridge delay on such port pairs. For UE1 in the figure for example, the UPF 1 may determine the Port1, which supports traffic class 2, VLAN 100 requested by UE1, to serve the PDU Session. Then SMF may report the bridge delay of traffic class 2 for port pair (UE1 port and UPF1 Port1).

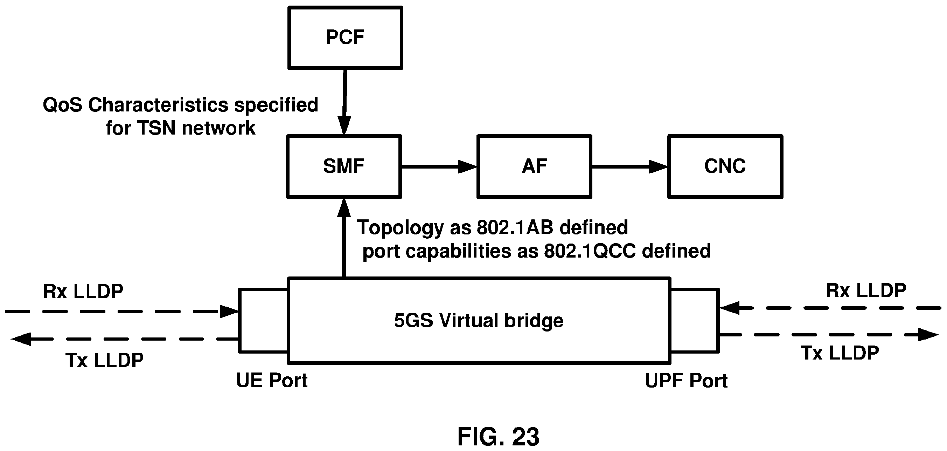

In an example as depicted in FIG. 23, for 5GS virtual bridge topology discovery, the UPF and UE may report topology information as 802.1AB defined to SMF when received link layer discovery protocol (LLDP) packets from one or more devices (e.g., UE, end station, TSN device, Ethernet device, and/or the like). The topology information may be reported when it is discovered at the first time or when it is changed/modified. The UPF and UE may send LLDP packets in order to enable the one or more devices discovering/reporting the 5GS virtual bridge. One or more port of 5GS virtual bridge may support sending LLDP or receiving LLDP. For propagation delay and port capabilities as 802.1Qcc defined, the UPF and UE may report them to SMF similar as topology information reporting. The 5GS may support TSN network specific QoS characteristics and the mapping between such QoS characteristics and the traffic classes. Packet delay budget (PDB) in the QoS characteristics may be employed to realize the maximum latency transmission for deterministic delivery. The SMF may get the QoS characteristics for UE's subscribed traffic classes and SMF may employ the PDB in them as the bridge delay for the corresponding traffic class on the port pair. The AF may collect/gather/obtain/receive and may maintain 5GS virtual bridge related information. The AF may act as the control plane of the 5GS virtual bridge, and may register or update those information to CNC as 802.1Qcc and 802.1AB defined. For QoS profile generation, the AF may maintain the relationship between UE ID, 5GS virtual bridge ID and UE port ID. The AF may determine/find the corresponding UE ID when receiving TSN stream rule (Bridge ID, Ingress port ID, Egress port ID, Stream description, stream id, and/or the like) from CNC. The AF may determine the traffic class in the TSN stream rule and map the traffic class to corresponding 5QI.

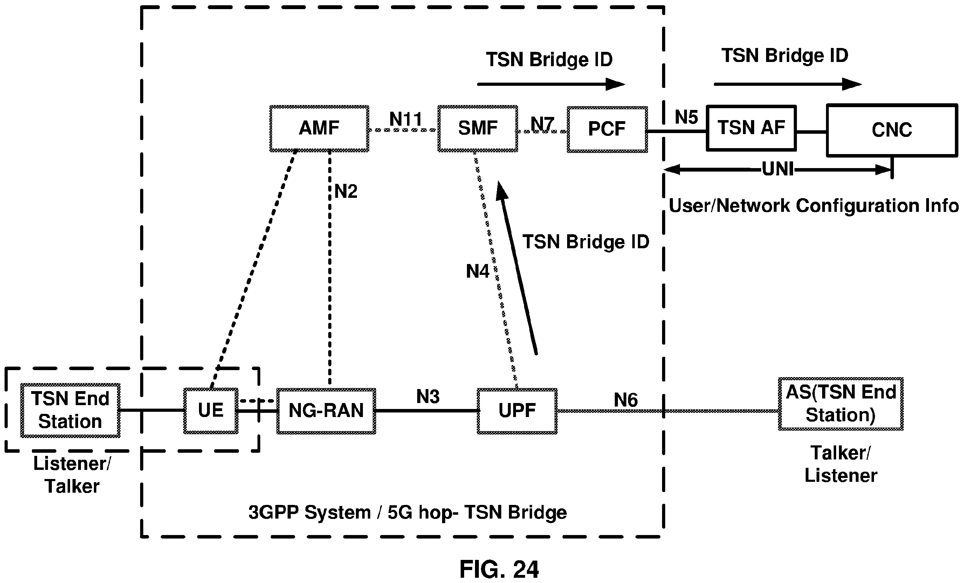

In an example embodiment as depicted in FIG. 24, a TSN bridge may report bridge capabilities, a TSN bridge configuration parameter, a TSN bridge ID, virtual port ID(s), port ID(s), and/or the like. In an example, identities of 5GS virtual bridge and UPF ports may be pre-configured on UPF based on deployment. The UPF may report its port capabilities and propagation delay as 802.1Qcc defined, the topology information as 802.1AB defined, and the corresponding DNN to SMF using node level singling, and the SMF may forward the received information to the AF directly or via NEF in order to generate or update the 5GS virtual bridge and bridge port. The UE may send PDU session establishment request to the AMF. The AMF may select a SMF for the PDU Session. The SMF may receive the UE subscribed traffic classes and VLANs from the UDM, and may receive the QoS characteristics (e.g., 5QI, PDB) corresponding to the subscribed traffic classes from PCF. The SMF may select a UPF to support the subscribed traffic classes and subscribed VLANs. The SMF may send N4 session establishment request to UPF with DNN, traffic class IDs and VLAN values to request for allocating UE port ID and determining serving UPF ports. The UPF may determine the 5GS virtual bridge for the PDU session, and may allocate an identity for UE port. Based on the traffic classes and VLANs that UPF port supports in the DN, the UPF may determine the UPF ports to serve the PDU session. The UPF may send the allocated UE port identity with corresponding 5GS virtual bridge identity, the serving UPF port IDs with corresponding traffic class IDs, and/or the like to the SMF. The SMF may send the PDU session related 5GS virtual bridge ID and may allocate UE port ID to UE. The information may be employed for UE to perform topology discovery and information reporting. The SMF may take the PDB in QoS characteristics as the bridge delay for corresponding traffic class and port pair, and may send the 5GS virtual bridge related information (bridge delay, UE port ID, UPF port ID, traffic class, 5GS virtual bridge ID, UE ID) to the AF or via NEF in order to add the UE port or update the bridge properties.

In an example, when the PDU session is established, the UE may report its port capabilities and propagation delay as 802.1Qcc defined and report the topology information as 802.1AB defined to SMF over NAS or user plane. The AF may receive/collect/gather and may maintain the 5GS virtual bridge properties including bridge ID, port ID of UPF ports, port ID of UE ports, port related capabilities and bridge delay of port pairs, and/or the like. The AF may send the 5GS virtual bridge properties to CNC to create a TSN bridge or update the bridge when the bridge properties are changed.

In an example embodiment, the UE may operate as an Ethernet switch. The SMF may configure the UE to operate as an Ethernet switch with configuration parameters provided during the establishment of a PDU Session, or configuration of the TSN bridge. The PDU session may provide access to the end station via the TSN bridge to communication with one or more end stations. The UE operating as an Ethernet switch may be part of one or more TSN systems. One or more backend devices may be connected to the UE operating as an Ethernet switch. In an example, the SMF may provide (TSN) configuration parameters to a UPF or to the UE in switch mode. The (TSN) configuration parameters may comprise an indicator whether the UE in Ethernet switch mode may turn on or off the Spanning Tree Algorithm, a periodic timer of sending BDPU messages, a TSN bridge identifier, a bridge identifier of the UE in Ethernet switch mode, an indicator whether the UE in Ethernet switch mode may notify the change of port's status, an indicator whether the UE in Ethernet switch mode may report the list of MAC address(es) of the TSN end stations, backend devices, and/or the like connected in the backend networks.

In an example, if the SMF indicates to the UE to report the list of MAC address(es) of the backend devices or the TSN end stations, the UE in switch mode may obtain the list of MAC address(es) of the backend devices connected or changed in the backend networks. In an example, when one PDU session provides communication for more than one TSN systems, the UE may obtain/determine the mapping relationship of MAC address(es) and the TSN systems. The UE may inform the SMF of the list of MAC address(es) and the mapping relationship during the PDU session establishment/modification procedure when the UE receives the indicator or detects the changes on the backend devices. The SMF may provide to the UPF Ethernet packet filter set and forwarding rule(s) based on the MAC address(es) and the mapping relationship. The UPF may detect and forward Ethernet frames based on the Ethernet packet filter set and forwarding rule(s) received from the SMF.

In an example, the UE in Ethernet switch mode may report its port states that may result from the execution of the spanning tree algorithm, and/or the like so that the SMF may control the UPF's port states based on the report to prevent the waste of network resources.

In an example, the UPF may support S-tag (IEEE 802.1ad), C-tag (IEEE 802.1q). In an example, a PDU session may provide access to one or more TSN systems, TSN end station, and/or the like. S-tag and/or C-tag for the stream of data packets may be employed. TSN system configurations may be pre-configured on the UE or provided to the UE by the network e.g., SMF, and/or the like. In an example, a TSN system identifier may be employed to identify the TSN system, one or more TSN end stations, and/or the like. In an example, the operator may assign the list of TSN systems or TSN end station identifiers for the UEs. The identifiers may be configured in the UDR, UDM, and/or the like. The SMF may be configured by the operator to have the mapping tables for TSN identifiers, VLAN ID, C-tag, S-tag, and/or the like. The SMF may map the list of the TSDN end station identifiers connected to the UE, which is notified through the procedures of PDU Session establishment, into the S-tag and C-tag, and packet filter for the uplink traffic. The UPF may insert S-tag and C-tag onto the traffic, which is sent to N6, and/or the like based on the packet filter for the uplink traffic.

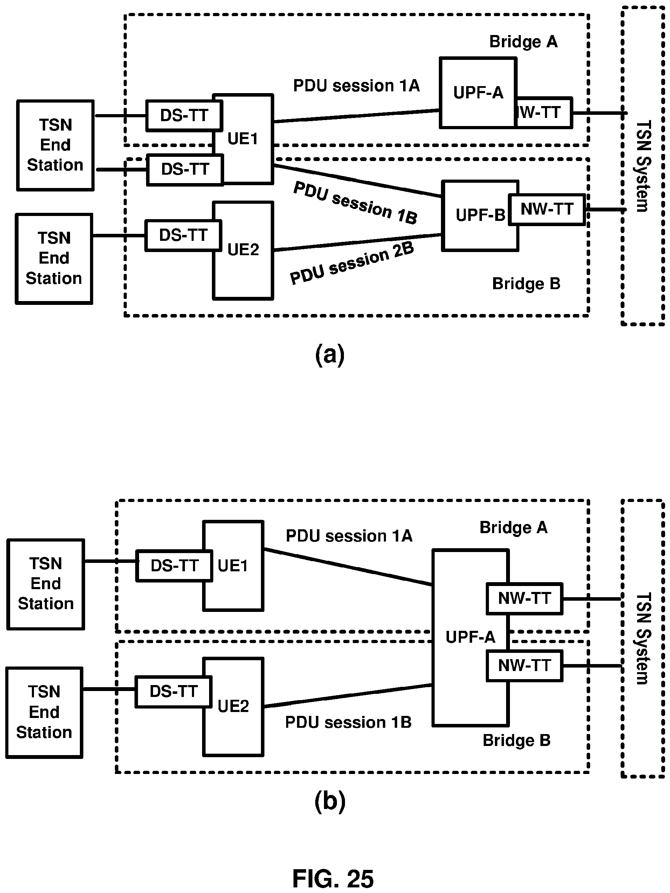

In an example as depicted in FIG. 25, 3GPP or 5GS functions may act as one or more TSN Bridges of a TSN network. The 5GS Bridge may comprise the ports on a single UPF (e.g., PSA) side, the user plane tunnel between the UE and UPF, and the ports on the DS-TT side. For one or more 5GS Bridge of a TSN network, the ports on NW-TT may support the connectivity to the TSN network, the ports on DS-TT side may be associated to a PDU Session providing connectivity to the TSN network. The granularity of the logical TSN bridge may be per UPF (FIG. 25(a)) or per UE (FIG. 25(b)). The bridge ID of the logical TSN bridge may be bound to the UPF ID of the UPF. The TSN AF may store the binding relationship between a port on UE/DS-TT side, a port on UPF/NW-TT side, and a PDU Session during reporting of logical TSN bridge information. One or more PDU Sessions which may connect to the same TSN network via a UPF may be grouped into a single virtual bridge. The capabilities of one or more port(s) on UE/DS-TT side and UPF/NW-TT side may be integrated as part of the configuration of the 5G virtual bridge and may be transmitted/notified to a TSN AF and delivered to CNC for TSN bridge registration and modification. In order to support TSN traffic scheduling over 5GS TSN Bridge, the 5GS may support the following functions: report the bridge information of 5GS Bridge to TSN network, map the configuration information obtained from TSN network into 5GS QoS information (e.g., 5QI, TSC Assistance Information) of a QoS flow in corresponding PDU Session for efficient time-aware scheduling. The bridge information of 5GS TSN bridge may be employed by the TSN network to make appropriate management configuration for the 5GS TSN bridge. The bridge information of 5GS TSN bridge may comprise a bridge ID of 5GS Bridge (TSN bridge ID), capabilities of 5GS Bridge as per IEEE 802.1Qcc, 5GS Bridge delay per port pair per traffic class, including 5GS TSN bridge delay (dependent and independent of frame size, and their maximum and minimum values: independentDelayMax, independentDelayMin, dependentDelayMax, dependentDelayMin), ingress port ID, egress port ID and traffic class, Propagation delay per port (txPropagationDelay), including transmission propagation delay, egress port ID, topology of 5GS Bridge, traffic classes and their priorities per port, and/or the like. Identity of the 5GS Bridge (e.g., TSN bridge ID) and Identities of the ports on the NW-TT side could be preconfigured on the UPF, which can be selected for a PDU Session serving TSC based on subscribed DNN, traffic classes and VLANs. Port ID on the DS-TT side for the PDU Session may be stored at SMF. The AF may be responsible to receive the bridge information of 5GS Bridge from 5GS, as well as register or update this information to the TSN network.

In an example embodiment as depicted in FIG. 26, a source NG-RAN may determine /decide to initiate an Xn based or N2-based handover to the target NG-RAN. This may be triggered, for example, due to new radio conditions or load balancing, if there is no Xn connectivity to the target NG-RAN, an N2 base handover may be performed. An error indication maybe received from the target NG-RAN after an unsuccessful Xn-based handover (e.g., no IP connectivity between T-RAN and S-UPF), or based on dynamic information learnt by the S-NG-RAN. As in FIG. 26, the AMF may provide TSN bridge configuration parameters, TSN bridge ID, and/or the like to the RAN nodes (e.g., the S-NG-RAN and T-NG-RAN).

In existing technologies, the base station may not be configured with a bridge parameter that is associated with a bridge (e.g., TSN bridge). In an implementation of existing technologies, a handover procedure may be performed for a wireless device to a target base station that does not support a bridge that the wireless device uses. An existing handover procedure may cause unreliable TSN bridge operation and may cause additional signaling. Example embodiments may support that a source base station for handover of a wireless device sends to a target base station a bridge parameter (e.g., via a handover request message) indicating a bridge that the wireless device uses. Example embodiments may enable a base station to receive from another network node a bridge parameter indicating a bridge that the base station supports or that the another network node supports. The another network node may be at least one of another base station, a core network device, or an operation and management (OAM) server. A bridge parameter may be employed by a base station during a handover procedure to determine a handover target base station supporting a bridge that a wireless device uses or will use. A bridge parameter may be employed by a handover target base station during a handover procedure to determine an acceptance or rejection of a handover request.

Example embodiments comprise enhancements of configuration(s) of a base station by a network node (e.g., another base station, a core network node, OAM, etc.) of the bridge. Transmission of the bridge parameter from a network node to the base station may assist the base station during the handover procedure and improve system performance.

When a bridge (or TSN bridge) is configured in a 3GPP system, a UPF may be configured with the bridge. The UPF may be associated with a bridge identifier after establishment/configuration of the bridge. One or more base stations may serve a 3GPP system. However, some base stations may not have connectivity to the UPFs of the 3GPP system that are configured for the bridge. In an example, during a handover procedure, when a wireless device makes a PDU session with the bridge via a base station, the base station may not be associated with the bridge identifier. When a wireless device or the base station determines to handover to a target base station, the target base station may not be able to admit the PDU session of the bridge.

A base station that is not part of a bridge may not have connectivity with a UPF of the bridge. Acceptance of a handover by the base station may require the network to reallocate the UPF of the bridge and perform PDU session modification and reconfiguration of the bridge. When a base station receives bridge parameters by a core network node, it may be an indication that the base station has connectivity with the UPFs of the bridge.

A TSN bridge may be employed in factory automation and may be intended for deterministic and delay sensitive communications. When a wireless device of a bridge performs a handover to a target base station that requires change of a UPF, signaling overhead and delay may cause disruptions and performance degradation or cause system failure.

Transmission of a bridge parameter to a base station by a SMF, PCF, and/or the like may require additional signaling and system complexity. An AMF may receive NAS messages from a wireless device. The AMF may receive bridge parameters from SMF or other network nodes. Upon successful configuration of a bridge, the SMF may send to the AMF: a bridge parameter such as a bridge identifier, a TSN system identifier, and/or the like. The AMF may send the bridge parameter to the base station. If the base station does not receive the bridge parameter, during a handover procedure, the base station may accept a handover request. If the base station is not part of the bridge or the base station does not have connectivity with the UPF of the bridge, additional signaling may occur.

In an example, a bridge ID (or TSN bridge ID) may be configured per wireless device. In an example, the bridge ID (or TSN bridge ID) may be configured per UPF. In an example, a bridge may comprise one or more wireless devices that may not be shared among other bridges. A bridge may comprise one or more UPFs that may be shared among other bridges. If the wireless device of the bridge does not indicate the bridge parameters to the network, or the base station, the base station may not determine a proper handover decision for a target base station. For example, if the base station receives bridge identifier, then during a handover procedure, the base station may select a target base station that supports the bridge. In an example, a TSN bridge associated with a wireless device may be interpreted as the wireless device uses the TSN bridge and/or the TSN bridge. The TSN bridge may comprise the wireless device and/or connections between the wireless device and a 3GPP network.

In an example, a base station may be shared among one or more bridges (or TSN bridges). In an example a base station may provide resources to support one or more bridges. When a bridge is configured, the base station may receive the bridge parameter associated with one or more bridges.

In an example, during a handover for a wireless device, if a target base station that does not have a bridge for the wireless device accepts the handover, a new UPF may need to be configured for the target base station to support the bridge for the wireless device. The new UPF needing configuration may cause additional signaling and performance degradation. Example embodiments may comprise enhancements of a handover procedure by transmitting bridge parameter or bridge identifier of the wireless device via a handover request message to the target base station.

In an example, a bridge identifier, TSN bridge identifier, and/or the like may be a derivation of a system identifier, TSN system identifier, an unsigned integer value, and/or the like. One or more bridge identifiers may have a system identifier in common and may be distinct by one or more bits such as least significant bits, and/or the like. Matching of bridge identifiers may comprise the bridge identifiers be identical or equal in whole or in part. Matching bridge identifiers may indicate the bridge identifiers being in the same TSN system domain or group.

In an example, a base station may be required to support bridge capabilities as required by the bridge or a TSN system. In an example, a TSN bridge capability indicator or bridge capability indicator may indicate that a base station of a 3GPP network may support bridge communication requirements. In an example, the TSN bridge capability indicator or bridge capability indicator may indicate that the base station is connected to one or more UPFs of the bridge that the 3GPP system is supporting. Transmission of the bridge capability indicator via a handover request message may assist the target base station to determine whether to accept or reject the handover. If the target base station does not provide the bridge capability indicated in the handover request message, the target base station may reject the handover request for the wireless device.

A TSN bridge may comprise a 3GPP system. The TSN bridge may comprise a wireless device, a UPF, ports on a wireless device (UE) side and UPF side. The 3GPP system network elements may be dedicated to the TSN bridge or may be shared among TSN bridges. A UPF may be configured for a TSN bridge with a TSN bridge identity, port identities, and/or the like. In an example of existing technologies, a wireless device may handover to a RAN node that may not provide an AN tunnel connection with the UPF of the TSN bridge. The RAN node, to which the wireless device handover, may not support the TSN bridge that the wireless device and/or the UPF are associated with. Handover of a wireless device to a RAN node (e.g., a target base station) that does not support a TSN bridge that the wireless device uses may interrupt the operation of the TSN bridge. Existing technologies may decrease communication reliability and cause additional signaling. Enhanced handover procedures for a TSN bridge operation may be required.

Example embodiments comprise enhancement of handover procedure that may employ a TSN bridge identifier, for example, information about connectivity/topology of UPF(s) and base stations to support a TSN bridge. Example embodiments may support a base station to select a proper target base station for handover of a wireless device that uses a TSN bridge. An implementation of example embodiments may support a base station to share, with another base stations, information of TSN bridges that the base station supports. Example embodiments may increase communication reliability and reduce signaling overhead during a handover of a wireless device that uses a TSN.

A target base station may receive a handover request message for a wireless device of a bridge from a source base station. The target base station may be part of the bridge and support the bridge. The target base station may not be part of the bridge and does not support the bridge and may not have connectivity with the UPF of the bridge for the wireless device. In existing technologies, a target base station may not be able to determine whether to accept or reject a handover request for a wireless device using a bridge (e.g., TSN bridge). If the target base station accepts the handover and does not support the bridge, additional signaling may occur and/or communication reliability may decrease.

In an example, the UE may move from one RAN node (e.g., source base station) to another RAN node (e.g., target base station) and the movement may result in handover to the other RAN node. The handover procedure may be performed due to load balancing, mobility, interference, etc.

A TSN bridge may comprise a 3GPP system. The TSN bridge may comprise a wireless device, a UPF, ports on a wireless device (UE) side and UPF side. The 3GPP system network elements may be dedicated to the TSN bridge or may be shared among TSN bridges. A UPF may be configured for a TSN bridge with a TSN bridge identity, port identities, and/or the like. A wireless device may handover to a RAN node that may not have an AN tunnel connection with the UPF of the TSN bridge. The RAN node may not be part of the TSN bridge that the wireless device and/or the UPF are associated with. The RAN node may be shared by one or more TSN bridges. In an example, the UE may move from one RAN node (e.g., source base station) to another RAN node (e.g., target base station) and the movement may result in handover to the other RAN node. The handover procedure may be performed due to load balancing. Handover to a target base station that is not part of the TSN bridge may cause additional signaling so enhanced handover procedure may be required.

Example embodiments comprise enhancement of handover procedure that may employ a TSN bridge identifier, information about connectivity/topology of UPF(s) and base stations to select a candidate target base station to reduce the signaling during a handover within the TSN system.

Example embodiments are pertinent to a TSN bridge that may comprise elements of a 3GPP system, core network, 5G system, and RAN. Time sensitive communication (TSC) may be related to connection establishment and data transmission via a TSN system for one or more TSN end stations. A TSN bridge may comprise a UPF that may be preconfigured for the TSN bridge. The UPF may be preconfigured with a TSN bridge ID, virtual ports, ethernet ports, TSN bridge configuration parameters, and/or the like. The ports of the UPF e.g., the virtual ports, ethernet ports, and/or the like may be identified with a MAC address, IP address, port ID, virtual port ID, and/or the like. A port may be employed by one or more PDU sessions. A PDU session may be shared among one or more ports of the TSN bridge or may be dedicated to a port of the TSN bridge at the network side (e.g., UPF) or at the device side.

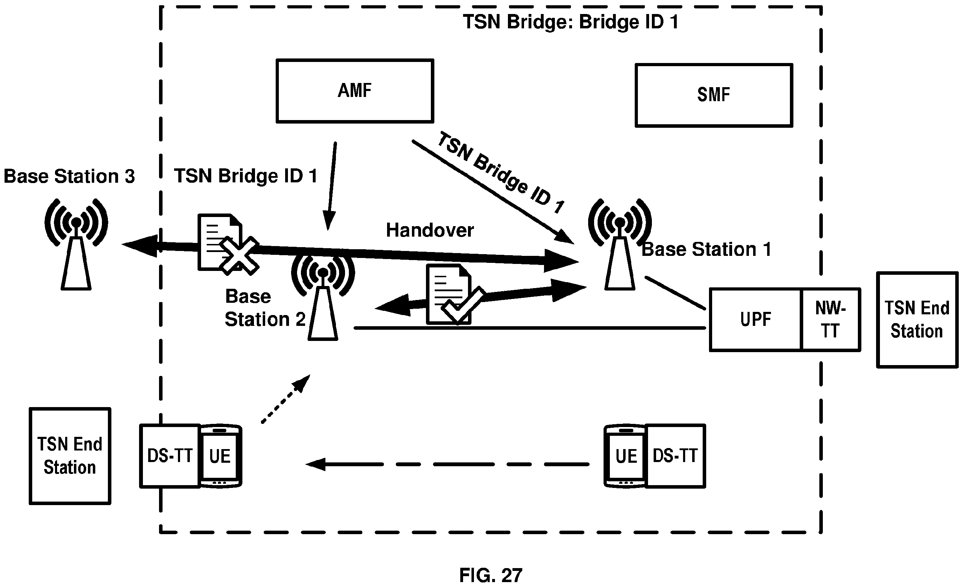

In an example embodiment as depicted in FIG. 26 and FIG. 27, a wireless device (UE) that is registered or attached to a 3GPP system may be connected to a TSN end station, e.g., via a TSN translator, TSN adaptor, device side TSN translator, and/or the like. The UE may be a 3GPP wireless device and may be connected to a 3GPP radio access network. The wireless device may handover to a different RAN node due to mobility or load balancing, or based on a measurement report, or wireless channel conditions. The UE may handover to a RAN node that does not have an AN tunnel connection with the UPF that is configured with the TSN bridge. Selection of a target RAN node that provides connectivity with the UPF of the TSN bridge may improve the performance of the system by reduction of signaling, and alleviation of the need to reallocate the UPF. Reallocation of the UPF may cause a reconfiguration of the TSN bridge. Reconfiguration of the TSN bridge may comprise signaling from the UPF to the SMF, and from SMF to the TSN system, CNC, CUC, AF, NEF and/or the like. Reconfiguration of the TSN bridge may cause reestablishment of policy association. The TSN configuration information may be transmitted to the UE and reconfigured on the UE. Example embodiments may comprise modification of handover procedure signaling. When a source RAN node determines to handover to a target base station, it may send a handover request message. The handover request message may comprise a TSN bridge configuration parameter, TSN bridge ID, TSN capability indicator, and/or the like. When the target RAN node receives the handover request message, based on local configuration or network provided configuration it may accept or reject the handover request. The target RAN node may receive the configuration information from an AMF, NEF, OAM, and/or the like. The configuration information may comprise the TSN bridge configuration parameter, TSN bridge ID, TSN capability indicator, and/or the like. For example the target RAN node may be configured with a first TSN bridge ID. If the Target RAN node receives the handover request comprising a second TSN bridge ID, it may reject the handover. If the handover request comprises the first TSN bridge ID, the target RAN node may accept or admit the handover. In an example as in FIG. 27, the base station 1 and base station 2 are configured by the AMF to support TSN bridge 1 with TSN bridge ID 1. The base station 3 is not configured for TSN bridge ID 1. When the base station 1 determines to handover the UE from base station 1, the base station 1 may select the base station 2 as the target base station. In an example, when a signal strength of the base station 3 may be higher/better than a signal strength of the base station 2, the base station 1 may select the base station 2 based on the TSN bridge ID capability/support configuration information.

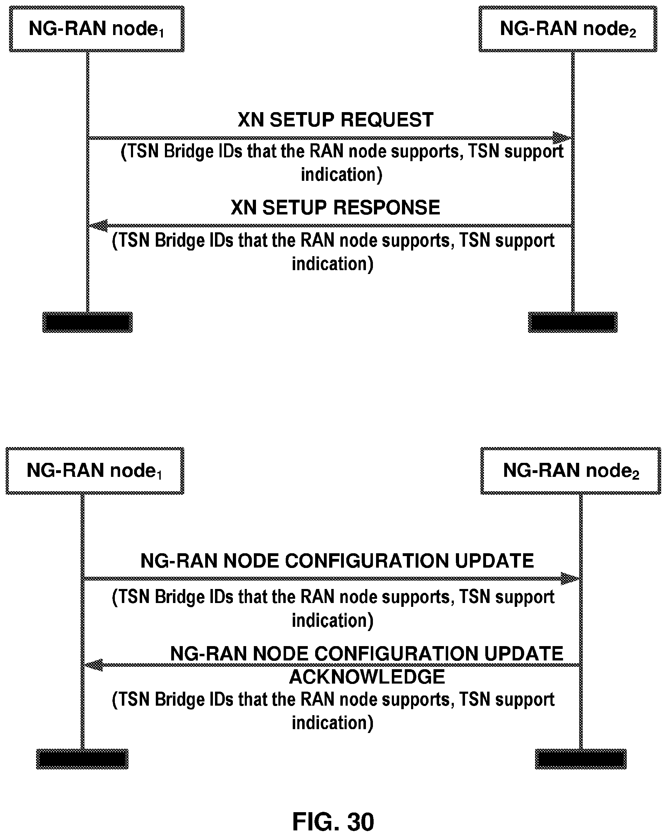

In an example embodiment as depicted in FIG. 30, the RAN nodes may exchange configuration information via Xn interface by employing Xn based procedures. Example procedures may be Xn setup procedure, NG-RAN configuration update procedure, and/or the like. During the Xn based procedures the NG-RAN nodes or RAN nodes may provide TSN related parameters such as TSN bridge configuration parameter, TSN bridge ID(s) that may be supported by a RAN node, a TSN bridge capability indicator, a TSN capability support indicator, and/or the like to neighboring RAN nodes. The provided information may be employed by the RAN nodes to select a target RAN node among a set of candidates that may support the TSN bridge that the UE is registered or having a PDU session connection. In an example, the determination of the target RAN node may be based on one or more elements of the messages during the Xn based procedures. The selected target RAN node may support the TSN bridge, so no relocation, reallocation or handover reject happens.

In an example, a TSN bridge ID may be a unique identifier that identifies a TSN bridge. The identifier may be a sequence of alpha numeric digits, a derivation of a UPF identifier associated with the bridge, a derivation of an identifier of a TSN system, and/or the like. A TSN bridge ID may be associated with a pair or a combination of one or more UPF(s), and one or more wireless device(s). In an example, a (TSN) Bridge Identifier may be a 64-bit unsigned integer. In order to prioritize a bridge, if two Bridge Identifiers are numerically compared, the lesser number may denote the Bridge of the better/higher priority. For example, the most significant 4 bits of a Bridge Identifier may comprise a settable priority component (13.20, 13.26.2), and can be modified for the CIST or for an MSTI independently of those for other MSTIs (or for the CIST), allowing the Bridge Identifier priority to be used to provide full and independent control over the configuration of each of those trees. Each SPT may employ the same Bridge Identifier as the CIST, so SPT Bridge Identifiers are not separately encoded. The priority component may be considered to be a 16-bit value for management purposes, but the values that it can be set to may be restricted to those values where the least significant 12 bits are zero (i.e., only the most significant 4 bits are settable). The next most significant 12 bits of a Bridge Identifier (when encoded, the least significant 4 bits of the most significant octet plus the second most significant octet) may comprise a locally assigned system ID extension, that may provide a distinct Bridge Identifier for each MSTI. The CIST is identified by the system ID extension of zero. Each MSTI may comprise a system ID extension value equal to its MSTID, a convention used to convey the MSTID for each MSTI parameter set in an MST BPDU. The least significant 48 bits of the Bridge Identifier may ensure its uniqueness and may be derived from a globally unique Bridge Address (8.13.8) and may be encoded in the third through eighth most significant octets of the encoded identifier. An octet of the TSN bridge may be derived from the initial octet of the MAC address, and/or the like. An identifier may be a unique identifier, an address (e.g., a MAC address, an ethernet address, an IP address, IPv4, IPv6, and/or the like). A Port ID, a virtual port id, may comprise a MAC address of a port, an IP address of a port, a name of a port (e.g., alphanumeric), and/or the like. A port may be a physical port, a virtual port within a wireless device, a UPF, a TSN translator device, a TSN end station, a port that connects/interconnects the wireless device or the UPF with the TSN system (IEEE device, non-3GPP device, and/or the like), an interconnection/connection between the TSN translator and the wireless device or UPF, and/or the like.

In an example, the TSN bridge configuration parameter may comprise port ID(s), virtual port id(s), port management information container, delay parameters or requirements of the TSN bridge, identifier of the TSN bridge (TSN bridge ID, and/or the like).

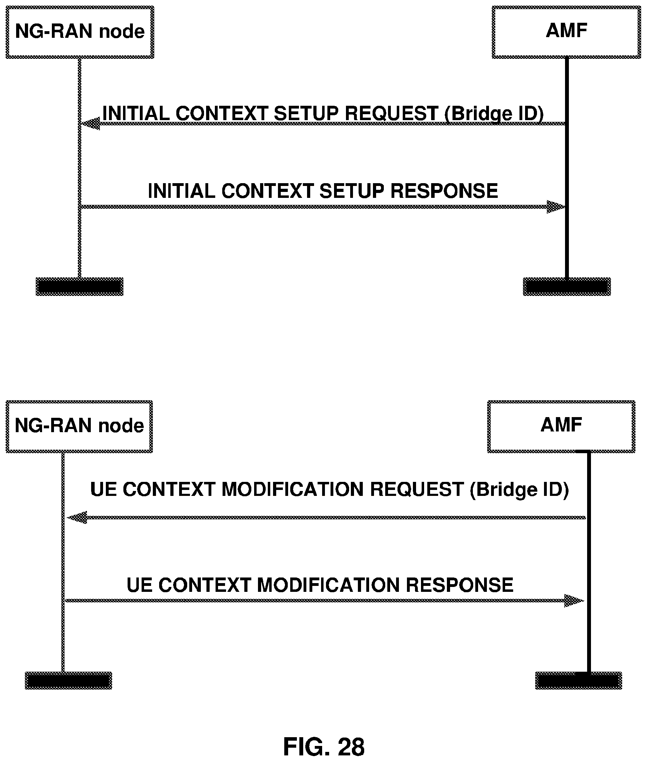

In an example embodiment as depicted in FIG. 28, in response to instantiation, creation or configuration of a TSN bridge or upon establishment of a PDU session via the TSN bridge by a UE that is connected to an end station of the TSN system, the AMF may perform an initial context setup procedure and may send an initial context setup request message to the base station, NG-RAN node, gNB, eNodeB, and/or the like. The purpose of the initial context setup procedure may be to establish necessary overall initial UE context at the NG-RAN node, including N1 singling connection, PDU session context, the Security Key, Mobility Restriction List, UE Radio Capability, UE Security Capabilities, and/or the like. The AMF may initiate the Initial Context Setup procedure if a UE-associated logical NG-connection exists for the UE or if the AMF has received the RAN UE NGAP ID IE in an INITIAL UE MESSAGE message or if the NG-RAN node has already initiated a UE-associated logical NG-connection by sending an INITIAL UE MESSAGE message via another NG interface instance. The procedure may employ UE-associated signalling. During the initial context setup procedure, the AMF or SMF may provide the TSN bridge configuration parameter to the NG-RAN node. For example, the initial context setup request message may comprise the TSN bridge configuration parameter. The AMF may receive the TSN bridge configuration parameter from a SMF, PCF, and/or the like when a wireless device (UE) establishes a PDU session via the TSN bridge. In an example, the AMF may receive the TSN bridge configuration parameter during a registration procedure for the UE. The SMF may send an N11 message over the N11 interface to the AMF indicating confirmation of the PDU session context setup (e.g., Nsmf_PDUSession_createSMContext message, and/or the like). In an example, the AMF may receive from the PCF the TSN bridge configuration parameter during a UE policy association establishment/modification. The AMF may receive the TSN bridge configuration parameter from a UDM during the registration procedure. When the AMF receives the TSN bridge configuration parameter (e.g., TSN bridge ID, bridge ID, and/or the like), the AMF may send the TSN bridge ID to the NG-RAN node via N2 procedures such as initial context setup request message. The NG-RAN node may be configured for the TSN bridge based on the TSN bridge configuration parameter. When the NG-RAN node receives a handover request from a source NG-RAN node for a second UE of the same TSN bridge, the NG_RAN node may accept the handover based on the bridge ID (e.g., one or more bridge IDs) that is setup for the NG-RAN node. The NG-RAN node that currently serves a PDU session of a UE for the TSN bridge may have connectivity with the UPF associated with the bridge. The NG-RAN node may notify the neighboring NG-RAN nodes via Xn setup, or NG-RAN node configuration update procedure, and/or the like. During a handover procedure, the source NG-RAN nodes may select the NG-RAN node that has connectivity with the UPF of the TSN bridge among other RAN node candidates. In an example embodiment as depicted in FIG. 28, a UE context modification procedure may be employed to provide the TSN bridge configuration parameter to the NG-RAN node. For example, the AMF may send a UE context modification request message to the NG-RAN node comprising the TSN bridge configuration parameter (TSN bridge ID, TSN system ID, and/or the like).

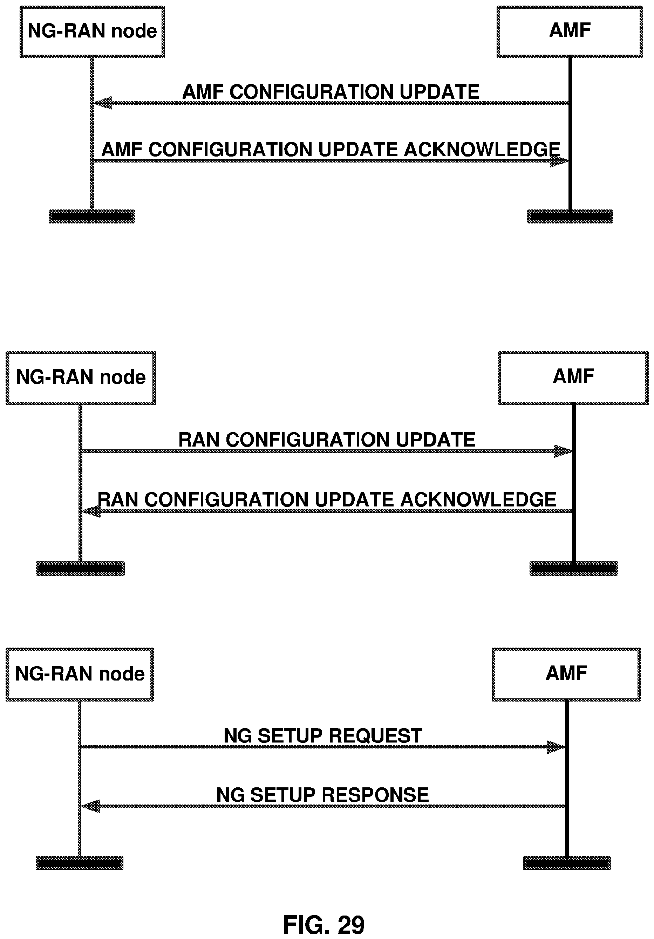

In an example embodiment as depicted in FIG. 29, a non-UE related procedure may be employed. In an example, The AMF may employ an AMF configuration update procedure. In an example, the AMF configuration update procedure may be employed to update application level configuration data needed for the NG-RAN node and AMF to interoperate correctly on the NG-C interface. The AMF may initiate the procedure by sending an AMF configuration update message comprising the TSN bridge configuration parameter (TSN bridge ID), the appropriate updated configuration data to the NG-RAN node, and/or the like. The NG-RAN node may respond with an AMF Configuration Update Acknowledge message to acknowledge that it successfully updated the configuration data. If an information element is not included in the AMF configuration update message, the NG-RAN node may interpret that the corresponding configuration data is not changed and may continue to operate the NG-C interface with the existing related configuration data. In an example, if the PLMN Support List IE is included in the AMF CONFIGURATION UPDATE message, the NG-RAN node may overwrite the list of supported PLMN Identities and the corresponding list of AMF slices for each PLMN Identity and use the received values for further network slice selection and AMF selection. In an example, a TSN bridge support list information element may be included in the AMF configuration update message. The TSN bridge support list information element may comprise a list of TSN bridges, TSN bridge IDs, and/or the like that the NG-RAN node may be associated with or the NG-RAN node may support. The support of a TSN bridge may be based on a connectivity status/condition of the NG-RAN node with the UPF(s) of the TSN bridge(s). If the AMF TNL Association to Add List IE is included in the AMF CONFIGURATION UPDATE message, the NG-RAN node may, if supported, employ it to establish the TNL association(s) with the AMF. The NG-RAN node may report to the AMF, in the AMF CONFIGURATION UPDATE ACKNOWLEDGE message, the successful establishment of the TNL association(s) with the AMF as follows: a list of successfully established TNL associations shall be included in the AMF TNL Association Setup List IE, and a list of TNL associations that failed to be established shall be included in the AMF TNL Association Failed to Setup List IE.

In an example embodiment as depicted in FIG. 29, a RAN Configuration Update procedure may be employed to update application level configuration data needed for the NG-RAN node and the AMF to interoperate correctly on the NG-C interface. The NG-RAN node may initiate the procedure by sending a RAN CONFIGURATION UPDATE message to the AMF comprising a TSN bridge configuration parameter (TSN bridge ID) an appropriate set of updated configuration data that it has taken into operational use. The AMF may respond with a RAN CONFIGURATION UPDATE ACKNOWLEDGE message to acknowledge that it successfully updated the configuration data. If an information element is not included in the RAN CONFIGURATION UPDATE message, the AMF may interpret that the corresponding configuration data is not changed and may continue to operate the NG-C interface with the existing related configuration data.

In an example embodiment as depicted in FIG. 29, an NG setup procedure may be employed to provide the TSN bridge configuration parameter to the NG_RAN node. The NG Setup procedure may be employed to exchange application level data needed for the NG-RAN node and the AMF to correctly interoperate on the NG-C interface. This procedure may be the first NGAP procedure triggered after the TNL association has become operational. The procedure may employ non-UE associated signaling. The procedure may erases any existing application level configuration data in the two nodes, and may replace it by the one received and may clear AMF overload state information at the NG-RAN node. If the NG-RAN node and AMF do not agree on retaining the UE contexts, this procedure may re-initialize the NGAP UE-related contexts (if any) and may erase related signaling connections in the two nodes. The NG-RAN node may initiate the procedure by sending an NG SETUP REQUEST message comprising the TSN bridge configuration parameter (TSN bridge ID), the appropriate data to the AMF, and/or the like. The AMF may respond with an NG SETUP RESPONSE message comprising the appropriate data.

In an example embodiment, during a handover procedure, a target NG-RAN node, or an NG-RAN node may receive a handover request message that may comprise a TSN bridge ID. The target NG-RAN node may accept/admit the handover request if the target NG-RAN node has connectivity with a UPF of the TSN bridge or the target NG-RAN node supports TSN bridge with TSN bridge ID. In an example, the target NG-RAN node may accept the handover request based on an element of an N2 message (that may comprise the TSN bridge configuration parameter, TSN bridge ID, and/or the like). The N2 message may be the NG setup request message, the initial context setup request message, the AMF configuration update message, and/or the like. In an example, the N2 message may comprise a TSN capability indicator, a TSN support information element, and/or the like. The information element may comprise a list of binary indicator, a flag indicating TSN bridge capability support, a vector/list of TSN bridges that are supported by or may be configured at the NG-RAN node, and/or the like.

In an example embodiment, during a handover procedure a target RAN node, a Target NG-RAN node, and/or the like may be selected for the handover. The Target NG-RAN node may receive a handover request from a source NG-RAN node. The source NG-RAN node may select the Target NG-RAN node from one or more candidates and based on a measurement report received from a wireless device. In an example, the source NG-RAN node may receive an Xn setup request message from a neighboring NG-RAN node (e.g., a target NG-RAN node). In an example, the Xn setup request may comprise a TSN bridge configuration parameter, a TSN bridge ID, and/or the like. The source NG-RAN node may send an Xn setup response message that may comprise a TSN bridge configuration parameter, a TSN bridge ID, and/or the like. In an example, during a handover procedure the source NG-RAN node may select the target NG-RAN node based on an element of Xn setup request/response message. For example, the source NG-RAN node may select a target NG-RAN node that supports the TSN bridge with TSN bridge ID. In an example, an NG-RAN node configuration update procedure may be employed. For example, the NG-RAN nodes may exchange configuration data and parameters such as TSN bridge configuration parameter, TSN bridge ID(s), and/or the like. During a handover procedure, the NG-RAN nodes may select a target NG-RAN node based on an element (e.g., the TSN bridge ID) of a NG-RAN node configuration update message/request, and NG-RAN node configuration update acknowledgment. Provisioning and exchange of the TSN bridge configuration parameters may improve the signaling performance during a handover procedure wherein the source NG-RAN node may select a target NG-RAN node that may serve (may have a connectivity) the UPF of the TSN bridge and hence avoiding a handover failure or rejection by the target NG-RAN node. For example, the source NG-RAN node may receive the Xn setup message or NG-RAN node configuration update message from a first NG-RAN node comprising a first TSN bridge ID and may receive from a second NG-RAN node an Xn setup message or NG-RAN configuration update message comprising a second TSN bridge ID. If the NG-RAN node determines to handover a wireless device of a TSN bridge with the first TSN bridge ID, the NG-RAN may select the first NG-RAN node.

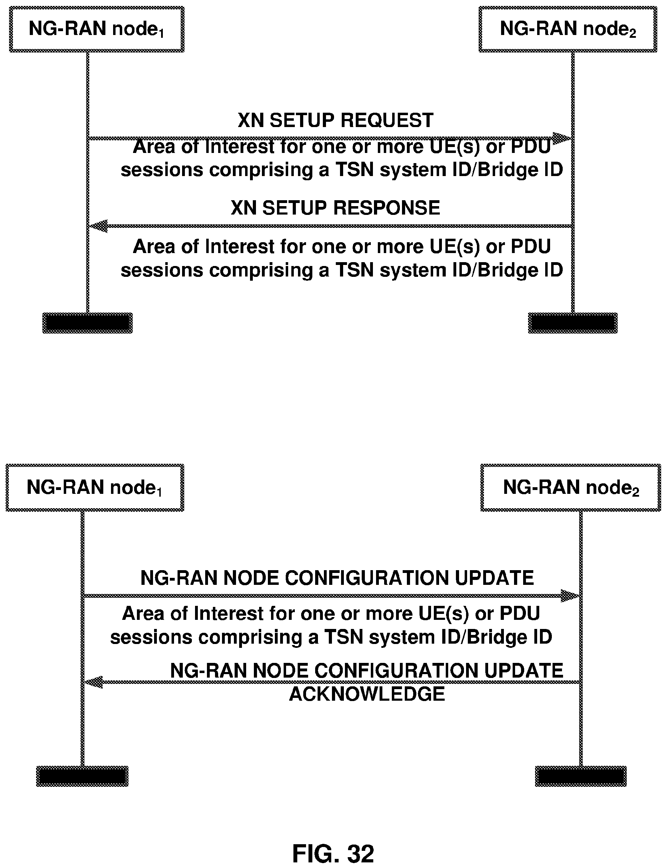

In an example embodiment as depicted in FIG. 30 and FIG. 32, an Xn setup procedure or NG-RAN node configuration update procedure may be employed. When an NG-RAN node receives (e.g., via the N2 message, and/or the like) the TSN bridge configuration parameter, TSN bridge ID, and/or the like, the NG-RAN node may employ the Xn setup procedure or the NG-RAN node configuration update procedure to update the neighboring NG-RAN nodes about the TSN bridge capability support and TSN bridge ID(s) that the NG-RAN node may support. In an example, the NG-RAN node(s) may employ the Xn setup procedure or the NG-RAN node configuration update procedure to exchange TSN configuration parameters, TSN bridge configuration parameters, TSN capability support, TSN bridge ID(s), and/or the like with the neighboring NG-RAN nodes.

In an example embodiment as in FIG. 30 and FIG. 32, an Xn Setup procedure may be employed to exchange application level configuration data needed for two NG-RAN nodes to interoperate correctly over the Xn-C interface. The procedure may employ non UE-associated signaling. The NG-RAN node1 may initiate the procedure by sending the XN SETUP REQUEST message to the candidate NG-RAN node2. The candidate NG-RAN node2 may reply with the XN SETUP RESPONSE message. In an example, the XN SETUP REQUEST message may comprise the TSN bridge configuration parameter, the TSN bridge ID(s) that the NG-RAN node 1 may support, a TSN capability support indication, and/or the like. In an example, the XN SETUP RESPONSE message may comprise the TSN bridge configuration parameter, the TSN bridge ID(s) that the NG-RAN node 2 may support, a TSN capability support indication, and/or the like. In an example, the elements of the XN setup request message, and/or the Xn setup response message may be employed during a handover procedure wherein the target NG-RAN node (e.g., NG-RAN node 1 or NG-RAN node 2) may determine to accept, admit or reject a handover request based on whether it supports TSN bridge capabilities or TSN bridge features, and/or the like. In an example, the elements of the XN setup request message, and/or the Xn setup response message may be employed during a handover procedure wherein the target NG-RAN node (e.g., NG-RAN node 1 or NG-RAN node 2) may determine to accept, admit or reject a handover request based on an element of the TSN bridge configuration parameter, TSN bridge ID(s) that the NG-RAN node supports or belongs to. If Supplementary Uplink is configured at the NG-RAN node1, the NG-RAN node1 may include in the XN SETUP REQUEST message the SUL Information IE and the Supported SUL band List IE for each served cell where supplementary uplink is configured. If Supplementary Uplink is configured at the NG-RAN node2, the candidate NG-RAN node2 may include in the XN SETUP RESPONSE message the SUL Information IE and the Supported SUL band List IE for each served cell where supplementary uplink is configured. If the NG-RAN node1 is an ng-eNB, it may include the Protected E-UTRA Resource Indication IE into the XN SETUP REQUEST. If the XN SETUP REQUEST sent by an ng-eNB comprises the Protected E-UTRA Resource Indication IE, the receiving gNB may take this into account for cell-level resource coordination with the ng-eNB. The gNB may consider the received Protected E-UTRA Resource Indication IE content valid until reception of a new update of the IE for the same ng-eNB. The protected resource pattern indicated in the Protected E-UTRA Resource Indication IE is not valid in subframes indicated by the Reserved Subframes IE, as well as in the non-control region of the MBSFN subframes. The size of the control region of MBSFN subframes may be indicated in the Protected E-UTRA Resource Indication IE. In case of network sharing with multiple cell ID broadcast with shared Xn-C signalling transport, the XN SETUP REQUEST message and the XN SETUP REQUEST ACKNOWLEDGE message may include the Interface Instance Indication IE to identify the corresponding interface instance.

In an example embodiment as depicted in FIG. 30 and FIG. 32, an NG-RAN node Configuration Update procedure may be employed to update application level configuration data needed for two NG-RAN nodes to interoperate correctly over the Xn-C interface. The procedure may employ non UE-associated signaling. The NG-RAN node1 may initiate the procedure by sending an NG-RAN NODE CONFIGURATION UPDATE message to a peer NG-RAN node2. In an example, the NG-RAN NODE CONFIGURATION UPDATE message may comprise the TSN bridge configuration parameter, the TSN bridge ID(s) that the NG-RAN node 1 may support, a TSN capability support indication, and/or the like. In an example, the NG-RAN NODE CONFIGURATION UPDATE acknowledge message may comprise the TSN bridge configuration parameter, the TSN bridge ID(s) that the NG-RAN node 2 may support, a TSN capability support indication, and/or the like. If Supplementary Uplink is configured at the NG-RAN node1, the NG-RAN node1 may include in the NG-RAN NODE CONFIGURATION UPDATE message the SUL Information IE and the Supported SUL band List IE for each cell added in the Served NR Cells To Add IE and in the Served NR Cells To Modify IE. If Supplementary Uplink is configured at the NG-RAN node2, the NG-RAN node2 may include in the NG-RAN NODE CONFIGURATION UPDATE ACKNOWLEDGE message the SUL Information IE and the Supported SUL band List IE for each cell added in the Served NR Cells IE if any. If the TAI Support List IE is included in the NG-RAN NODE CONFIGURATION UPDATE message, the receiving node may replace the previously provided TAI Support List IE by the received TAI Support List IE. If the Cell Assistance Information NR IE is present, the NG-RAN node2 may use it to generate the Served NR Cells IE and include the list in the NG-RAN NODE CONFIGURATION UPDATE ACKNOWLEDGE message. Upon reception of the NG-RAN NODE CONFIGURATION UPDATE message, NG-RAN node2 may update the information for NG-RAN node1 as follows: if case of network sharing with multiple cell ID broadcast with shared Xn-C signaling transport, the NG-RAN NODE CONFIGURATION UPDATE message and the NG-RAN NODE CONFIGURATION UPDATE ACKNOWLEDGE message may include the Interface Instance Indication IE to identify the corresponding interface instance. Provisioning of TSN bridge information such as the TSN bridge configuration parameter(s), the TSN bridge ID, and/or the like may improve the signaling performance of the 3GPP system during a handover procedure. The TSN bridge information may be employed by the NG-RAN node to determine whether to admit/accept a handover for a wireless device of the TSN bridge based on the TSN bridge information. For example, a first target NG-RAN node may receive via an N2 message a first TSN bridge ID and a second NG-RAN node may receive a second TSN bridge ID. When the first NG-RAN node receives a handover request that comprises the second TSN bridge ID, the first NG-RAN node may reject the handover request and send a handover failure message. When the first NG-RAN node receives a handover request that comprises the first TSN bridge ID, the first NG-RAN node may accept the handover request. In an example, the elements of the RAN NODE CONFIGURATION UPDATE and/or RAN NODE CONFIGURATION UPDATE ACKNOWLEDGE message, may be employed during a handover procedure wherein the target NG-RAN node (e.g., NG-RAN node 1 or NG-RAN node 2) may determine to accept, admit or reject a handover request based on whether it supports TSN bridge capabilities or TSN bridge features, and/or the like. In an example, the elements of the RAN NODE CONFIGURATION UPDATE and/or RAN NODE CONFIGURATION UPDATE ACKNOWLEDGE may be employed during a handover procedure wherein the target NG-RAN node (e.g., NG-RAN node 1 or NG-RAN node 2) may determine to accept, admit or reject a handover request based on an element of the TSN bridge configuration parameter, TSN bridge ID(s) that the NG-RAN node supports or belongs to.

In an example embodiment as depicted in FIG. 32, the XN setup request message and/or the NG-RAN node configuration update message may comprise an area of interest information element or field. The area of interest for 3GPP access may comprise a list of Tracking Areas, cell identifiers associated with the TSN system or the TSN bridge, CAG list associated with the TSN bridge or the TSN system, NG-RAN node identifiers, Presence Reporting Area ID(s) and the elements for one or more of the Presence Reporting Areas, such as TAs and/or NG-RAN nodes and/or cells identifiers, LADN DNN, and/or the like.

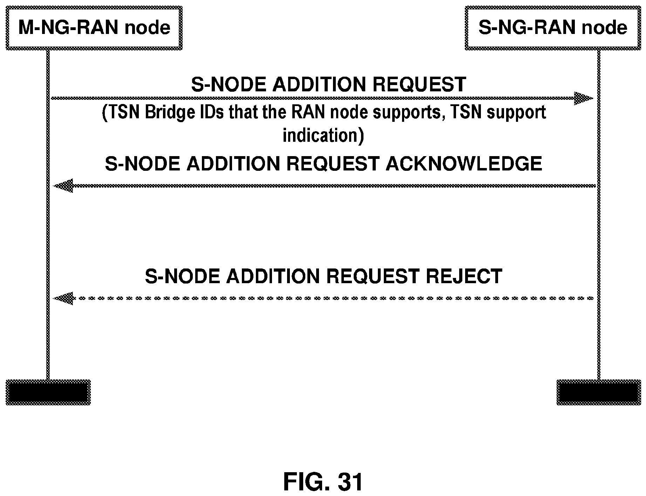

In an example embodiment as depicted in FIG. 31, a S-NG-RAN node Addition Preparation procedure may be employed to request the S-NG-RAN node to allocate resources for dual connectivity operation for a UE of the TSN bridge. The procedure may employ UE-associated signalling. The M-NG-RAN node may initiate the procedure by sending the S-NODE ADDITION REQUEST message to the S-NG-RAN node. The S-NODE ADDITION REQUEST message may comprise the TSN bridge capability support indication. The S-NODE ADDITION REQUEST message may comprise the TSN bridge configuration parameter, TSN bridge ID, and/or the like. When the M-NG-RAN node sends the S-NODE ADDITION REQUEST message, it may start the timer TXnDCprep. The allocation of resources according to the values of the Allocation and Retention Priority IE included in the QoS Flow Level QoS Parameters IE for each QoS flow may follow the principles specified for a PDU Session Resource Setup procedure. The S-NG-RAN node may choose a ciphering algorithm based on the information in the UE Security Capabilities IE and locally configured priority list of AS encryption algorithms and may apply the key indicated in the S-NG-RAN node Security Key IE. If the S-NODE ADDITION REQUEST message contains the Mobility Restriction List IE, the S-NG-RAN node, if supported, may store this information and use it to select an appropriate SCG. In an example, the mobility restriction list may comprise radio access technology (RAT) restriction, Forbidden Area, Service Area Restrictions, Core Network type restriction and Closed Access Group information, and/or the like. The mobility restriction may comprise TSN system restrictions including network slice aware restrictions for a network slice of a TSN system, for a network slice of a TSN bridge, for DNN associated with a TSN system or a TSN bridge, and/or the like. In an example, the CAG restriction may comprise a CAG list for a TSN system. For example, a CAG id may be mapped to a TSN system ID, a TSN bridge, TSN bridge ID, and/or the like. If the S-NODE ADDITION REQUEST message contains the QoS Flow Mapping Indication IE, the S-NG-RAN node may take it into account that only the uplink or downlink QoS flow is mapped to the DRB. The S-NG-RAN node may report to the M-NG-RAN node, in the S-NODE ADDITION REQUEST ACKNOWLEDGE message, the result for all the requested PDU session resources in the following way: a list of PDU session resources which are successfully established may be included in the PDU Session Resources Admitted To Be Added List IE. A list of PDU session resources which failed to be established may be included in the PDU Session Resources Not Admitted List IE. Upon reception of the S-NODE ADDITION REQUEST ACKNOWLEDGE message the M-NG-RAN node may stop the timer TXnDCprep. If the S-NODE ADDITION REQUEST ACKNOWLEDGE message contains the MR-DC Resource Coordination Information IE, the M-NG-RAN node may use it for the purpose of resource coordination with the S-NG-RAN node. The M-NG-RAN node may consider the value of the received UL Coordination Information IE valid until reception of a new update of the IE for the same UE. The M-NG-RAN node may consider the value of the received DL Coordination Information IE valid until reception of a new update of the IE for the same UE. If the E-UTRA Coordination Assistance Information IE or the NR Coordination Assistance Information IE is contained in the MR-DC Resource Coordination Information IE, the M-NG-RAN node may, if supported, use the information to determine further coordination of resource utilisation between the M-NG-RAN node and the S-NG-RAN node. The S-NG-RAN node may include for each bearer in the DRBs To Be Setup List IE in the S-NODE ADDITION REQUEST ACKNOWLEDGE message the PDCP SN Length IE to indicate the PDCP SN length for that DRB. If the S-NG-RAN node UE XnAP ID IE is contained in the S-NODE ADDITION REQUEST message, the S-NG-RAN node may, if supported, store this information. If the S-NODE ADDITION REQUEST message contains the PDCP SN Length IE, the S-NG-RAN node may, if supported, store this information and use it for lower layer configuration of the concerned MN terminated bearer. If the S-NODE ADDITION REQUEST ACKNOWLEDGE message contains the RRC config indication IE, the M-NG-RAN node may consider that the appropriate configuration (full or delta) is applied by the S-NG-RAN node. If the S-NODE ADDITION REQUEST message contains the S-NG-RAN node Maximum Integrity Protected Data Rate Uplink IE or the S-NG-RAN node Maximum Integrity Protected Data Rate Downlink IE, the S-NG-RAN node may use the received information when enforcing the maximum integrity protected data rate for the UE. If the Location Information at S-NODE Reporting IE is included in the S-NODE ADDITION REQUEST, the S-NG-RAN node may, if supported, start providing information about the current location of the UE. If the Location Information at S-NODE IE is included in the S-NODE ADDITION REQUEST ACKNOWLEDGE, the M-NG-RAN node may transfer the included information towards the AMF. If the S-NG-RAN node admits at least one PDU session resource, the S-NG-RAN node may start the timer TXnDCoverall when sending the S-NODE ADDITION REQUEST ACKNOWLEDGE message to the M-NG-RAN node. The reception of the S-NODE RECONFIGURATION COMPLETE message may stop the timer TXnDCoverall. Upon receiving an S-NODE ADDITION REQUEST message containing the Desired Activity Notification Level IE, the S-NG-RAN node may, if supported, use this information to decide whether to trigger subsequent Activation Notification procedures according to the requested notification level.

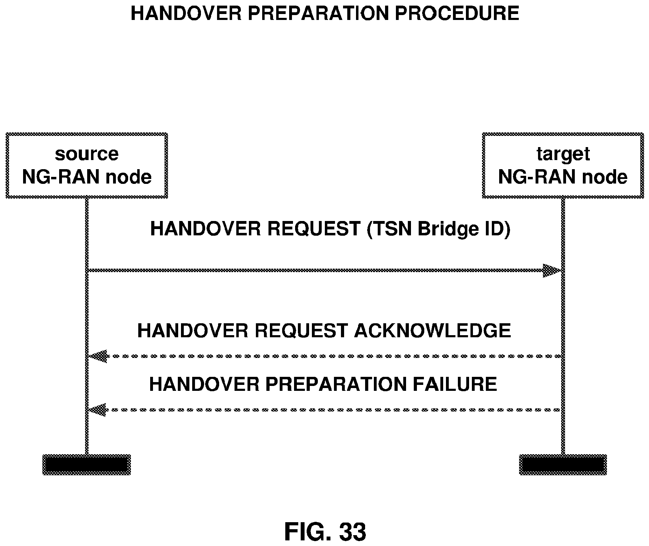

In an example as depicted in FIG. 33, a handover preparation procedure may be employed to establish necessary resources in an NG-RAN node for an incoming handover. The procedure may employ UE-associated signalling. The source NG-RAN node may initiate the procedure by sending the HANDOVER REQUEST message to the target NG-RAN node. When the source NG-RAN node sends the HANDOVER REQUEST message, it may start the timer TXnRELOCprep. In an example, the handover request message may comprise an indication that the handover is for UE of a TSN bridge. The indication may comprise an information element indicating TSN capability support, TSN bridge functionality support, and/or the like. In an example, the handover request message may comprise the TSN bridge configuration parameter, the TSN bridge ID, and/or the like. When a target NG-RAN node receives the handover request message, the target NG-RAN node may accept, admit or reject the handover request. The acceptance of the handover request may be based on an element of the handover request message. For example, when the target NG-RAN node receives the TSN bridge ID via the N2 message and is configured for TSN bridge with the TSN bridge ID, the target NG-RAN node may accept the handover request. In an example, if the target NG-RAN node is not configured for the TSN system, the TSN bridge, or when the target NG-RAN node is configured for a TSN bridge with a different TSN bridge ID, the target NG-RAN node may reject the request and send a handover preparation failure message. For each E-RAB ID IE included in the QoS Flow To Be Setup List IE in the HANDOVER REQUEST message, the target NG-RAN node may, if supported, store the content of the IE in the UE context and use it for subsequent inter-system handover. If the Masked INMISV IE is contained in the HANDOVER REQUEST message the target NG-RAN node may, if supported, use it to determine the characteristics of the UE for subsequent handling. At reception of the HANDOVER REQUEST message the target NG-RAN node may prepare the configuration of the AS security relation between the UE and the target NG-RAN node by using the information in the UE Security Capabilities IE and the AS Security Information IE in the UE Context Information IE. The target NG-RAN node may report in the HANDOVER REQUEST ACKNOWLEDGE message the successful establishment of the result for all the requested PDU session resources. When the target NG-RAN node reports the unsuccessful establishment of a PDU session resource, the cause value may be precise enough to enable the source NG-RAN node to know the reason for the unsuccessful establishment. In an example, the cause value may be TSN not supported, TSN bridge ID not supported, and/or the like. For each PDU session if the PDU Session Aggregate Maximum Bit Rate IE is included in the PDU Session Resources To Be Setup List IE contained in the HANDOVER REQUEST message, the target NG-RAN node may store the received PDU Session Aggregate Maximum Bit Rate in the UE context and use it when enforcing traffic policing for Non-GBR QoS flows for the concerned UE. For each QoS flow for which the source NG-RAN node proposes/indicates to perform forwarding of downlink data, the source NG-RAN node may include the DL Forwarding IE set to "DL forwarding proposed" within the Data Forwarding and Offloading Info from source NG-RAN node IE in the PDU Session Resources To Be Setup List IE in the HANDOVER REQUEST message. For each PDU session that the target NG-RAN node decides to admit the data forwarding for at least one QoS flow, the target NG-RAN node may include the PDU Session level DL data forwarding GTP-U Tunnel Endpoint IE within the Data Forwarding Info from target NG-RAN node IE in the PDU Session Resource Admitted Info IE contained in the PDU Session Resources Admitted List IE in the HANDOVER REQUEST ACKNOWLEDGE message. For each QoS flow for which the source NG-RAN node has not yet received the SDAP end marker packet if QoS flow re-mapping happened before handover, the source NG-RAN node may include the UL Forwarding IE within the Data Forwarding and Offloading Info from source NG-RAN node IE in the HANDOVER REQUEST message, and if the target NG-RAN node decides to admit uplink data forwarding for at least one QoS flow, the target NG-RAN node may include the PDU Session Level UL Data Forwarding UP TNL Information IE in the Data Forwarding Info from target NG-RAN node IE in the PDU Session Resources Admitted Item IE contained in the PDU Session Resources Admitted List IE in the HANDOVER REQUEST ACKNOWLEDGE message to indicate that it accepts the uplink data forwarding. For each PDU session resource successfully setup at the target NG-RAN, the target NG-RAN node may allocate resources for additional Xn-U PDU session resource GTP-U tunnels, indicated in the Secondary Data Forwarding Info from target NG-RAN node List IE. For each DRB for which the source NG-RAN node proposes to perform forwarding of downlink data, the source NG-RAN node may include the DRB ID IE and the mapped QoS Flows List IE within the Source DRB to QoS Flow Mapping List IE contained in the PDU Session Resources To Be Setup List IE in the HANDOVER REQUEST message. The source NG-RAN node may include the QoS Flow Mapping Indication IE in the Source DRB to QoS Flow Mapping List IE to indicate that only the uplink or downlink QoS flow is mapped to the DRB. If the target NG-RAN node decides to use the same DRB configuration and to map the same QoS flows as the source NG-RAN node, the target NG-RAN node may include the DL Forwarding GTP Tunnel Endpoint IE within the Data Forwarding Response DRB List IE in the HANDOVER REQUEST ACKNOWLEDGE message to indicate that it accepts the proposed forwarding of downlink data for this DRB. If the HANDOVER REQUEST ACKNOWLEDGE message contains the UL Forwarding GTP Tunnel Endpoint IE for a given DRB in the Data Forwarding Response DRB List IE within Data Forwarding Info from target NG-RAN node IE in the PDU Session Resources Admitted List IE and the source NG-RAN node accepts the data forwarding proposed by the target NG-RAN node, the source NG-RAN node may perform forwarding of uplink data for the DRB. If the HANDOVER REQUEST includes PDU session resources for PDU sessions associated to S-NSSAIs not supported by target NG-RAN, the target NG-RAN may reject such PDU session resources. In this case, and if at least one PDU Session Resource To Be Setup Item IE is admitted, the target NG-RAN may send the HANDOVER REQUEST ACKNOWLEDGE message including the PDU Session Resources Not Admitted List IE listing corresponding PDU sessions rejected at the target NG-RAN.

In an example embodiment as in FIG 33, the target NG-RAN node may receive a handover request message comprising a PDU session ID if the wireless device (UE of the TSN bridge). The NG-RAN node may map or determine that the PDU session is associated with the TSN bridge with TSN bridge ID. The Target NG-RAN node may determine to accept or reject the handover based on the determining and the elements of the N2 message (e.g., the TSN bridge ID). In an example, the target NG-RAN node may determine the TSN bridge ID from the PDU session ID via the AMF.

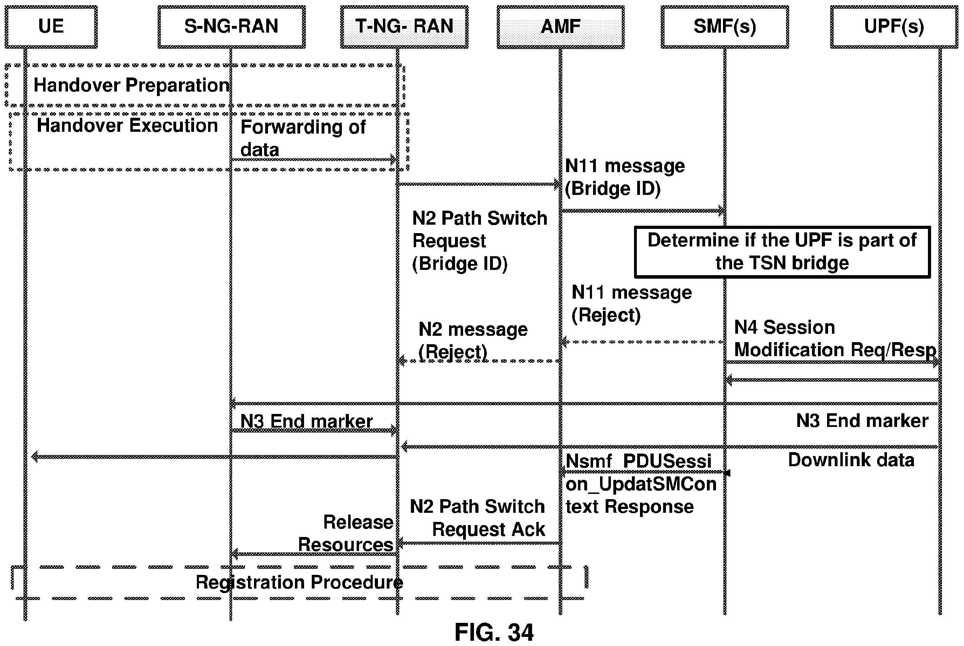

In an example embodiment as depicted in FIG. 34, an Xn based handover procedure may be employed to hand over a UE from a source NG-RAN to target NG-RAN using Xn when the AMF is unchanged and the SMF decides/determines to keep the existing UPF. If the PLMN has configured secondary RAT usage reporting, the source NG-RAN node during the handover execution phase may provide RAN usage data Report (N2 SM Information (Secondary RAT usage data), Handover Flag, Source to Target transparent container) to the AMF. The source NG-RAN node may provide this when the Target NG-RAN has confirmed handover over Xn interface. The Handover Flag may indicates to the AMF that it should buffer the N2 SM Information containing the usage data report before forwarding it. If the source NG RAN and target NG RAN support RACS, the Source to Target transparent container may comprise the UE's UE Radio Capability ID instead of UE radio access capabilities. The Target NG-RAN may send to the AMF an N2 Path Switch Request (e.g., comprising the TSN bridge ID, the TSN bridge configuration parameter, List of PDU Sessions To Be Switched with N2 SM Information, List of PDU Sessions that failed to be established with the failure cause given in the N2 SM information element, UE Location Information, and/or the like). The Target NG-RAN may send an N2 Path Switch Request message to an AMF to inform that the UE has moved to a new target cell and may provide the TSN bridge ID, the TSN bridge configuration parameter, a List Of PDU Sessions To Be Switched, and/or the like. In an example, AN Tunnel Info for each PDU Session to be switched may be included in the N2 SM Information. If redundant transmission is performed for one or more QoS Flows in the PDU Session, two AN Tunnel Info may be provided by the Target NG-RAN and the Target NG-RAN may indicate to the SMF or AMF one of the AN Tunnel Info is used as the redundancy tunnel of the PDU Session. If one AN Tunnel Info is provided by the Target NG-RAN for the PDU session, the SMF may release these QoS Flows by triggering PDU Session Modification procedure after the handover procedure. The selected PLMN ID (or PLMN ID and NID, and/or the like) may be included in the message. The target NG-RAN may include the PDU Session in the PDU Sessions Rejected list if none of the QoS Flows of a PDU Session are accepted by the Target NG-RAN; or if the corresponding network slice is not supported in the Target NG-RAN; or the corresponding TSN bridge ID is not supported in the target NG-RAN node; or when the NG-RAN cannot set up user plane resources fulfilling the User Plane Security Enforcement with a value Required, the NG-RAN rejects the establishment of user plane resources for the PDU Session. If the NG-RAN cannot set up user plane resources fulfilling the User Plane Security Enforcement with a value Preferred, the NG-RAN may establish the user plane resources for the PDU session and may include the PDU Session in the PDU Sessions Modified list. PDU Sessions Rejected may comprise an indication of whether the PDU session was rejected because User Plane Security Enforcement is not supported in the Target NG-RAN. Depending on the type of target cell, the Target NG-RAN may include appropriate information in this message. For the PDU Sessions to be switched to the Target NG-RAN, the N2 Path Switch Request message may comprise the list of accepted QoS Flows.

The AMF may send to a SMF an Nsmf PDUSession UpdateSMContext Request (e.g., comprising: the TSN bridge ID, the TSN bridge configuration parameter, N2 SM information received from T-RAN and N2 SM Information from source NG-RAN (Secondary RAT usage data), UE Location Information, UE presence in LADN service area, and/or the like). The AMF may send the N2 SM information by invoking the Nsmf_PDUSession_UpdateSMContext request service operation for each PDU Session in the lists of PDU Sessions received in the N2 Path Switch Request. The Nsmf_PDUSession_UpdateSMContext Request may comprise either an indication that the PDU Session Is To Be Switched (together with information on the N3 addressing to use and on the transferred QoS flows) or an indication that the PDU Session is to be Rejected (together with a rejection cause). For a PDU Sessions to be switched to the Target NG-RAN, upon receipt of the Nsmf_PDUSession_UpdateSMContext request, the SMF may determine whether the existing UPF can continue to serve the UE of the TSN bridge. If the existing UPF cannot continue to serve the UE , a UPF reallocation may be performed. In an example, the determining by the SMF may be based on the TSN bridge ID, or a mapping of a PDU session to a bridge ID and determining whether an available UPF of the TSN bridge has connectivity with the target NG-RAN node. If a PDU Session is rejected by the Target NG-RAN with an indication that the PDU session was rejected because User Plane Security Enforcement is not supported in the Target NG-RAN and the User Plane Enforcement Policy indicates "Required", the SMF may trigger the release of this PDU Session. In all other cases of PDU Session rejection, the SMF may decide whether to release the PDU Session or to deactivate the UP connection of this PDU Session. If some of the QoS Flows of a PDU Session are not accepted by the Target NG-RAN, the SMF may initiate the PDU Session Modification procedure to remove the non-accepted QoS Flows from the PDU Session(s) after the handover procedure is completed. For the PDU Session(s) that do not have active N3 UP connections before handover procedure, the SMF(s) may keep the inactive status after handover procedure. If the UE moves into a non-Allowed Area, the AMF may notify via Namf_EventExposure_Notify to each NF Consumer (e.g. SMFs of the established PDU Sessions) which has subscribed for UE reachability event, that the UE is only reachable for regulatory prioritized services. The SMF may deactivate the PDU session if this PDU Session is not for emergency service.

In an example, the SMF may send to a UPF an N4 Session Modification Request (e.g., comprising the TSN bridge ID, the TSN bridge configuration parameter, AN Tunnel Info, CN Tunnel Info, and/or the like). In an example, the SMF may determine an identifier of a port (e.g., TSN port) of the UPF to be reconfigured. The N$ session modification message may comprise the bridge ID, the port ID associated with the PDU session, and/or the like. For PDU Sessions that are modified by the Target NG-RAN, the SMF may send an N4 Session Modification Request message to the UPF. The SMF may notify the UPF that originated the Data Notification to discard downlink data for the PDU Sessions and/or to not provide further Data Notification messages. Depending on the network deployment, the CN Tunnel Info of UPF used for connection to Target NG-RAN and connection to Source NG-RAN may be different, e.g. due to Source and Target NG-RAN are in different IP domains. If the CN Tunnel Info (on N3) of UPF need be re-allocated and CN Tunnel Info is allocated by the SMF, the SMF may provide the CN Tunnel Info (on N3) to the UPF. If redundant transmission is performed for one or more QoS Flows of a PDU Session, two CN Tunnel Info are provided to the UPF. When two CN Tunnel Info are provided, the SMF may indicate the UPF that one CN Tunnel Info is used as the redundancy tunnel of the PDU session. The UPF may send to the SMF an N4 Session Modification Response (e.g., comprising CN Tunnel Info). For the PDU Sessions that are switched, the UPF may return an N4 Session Modification Response message to the SMF after requested PDU Sessions are switched. Tunnel identifiers for UL traffic are included only for PDU Sessions whose user plane resources are not being released, and only if the UPF allocates CN Tunnel Info and different CN Tunnel Info need be allocated. In an example, in order to assist the reordering function in the Target NG-RAN, the UPF may send one or more "end marker" packets for each N3 tunnel on the old path immediately after switching the path. The UPF may start sending downlink packets to the Target NG-RAN.

In an example, the SMF may send to the AMF an Nsmf_PDUSession_UpdateSMContext Response (comprising the CN Tunnel Info). The SMF may send an Nsmf_PDUSession_UpdateSMContext response (CN Tunnel Info) to the AMF for PDU Sessions which have been switched successfully. The CN Tunnel Info of UPF send to AMF may be employed to setup N3 tunnel. The AMF may send to NG-RAN an N2 Path Switch Request Ack (comprising the N2 SM Information, Failed PDU Sessions, UE Radio Capability ID, and/or the like). Once the Nsmf_PDUSession_UpdateSMContext response is received from all the SMFs, the AMF may aggregate received CN Tunnel Info and may send this aggregated information as a part of N2 SM Information along with the Failed PDU Sessions in N2 Path Switch Request Ack to the Target NG-RAN. If none of the requested PDU Sessions have been switched successfully, the AMF may send an N2 Path Switch Request Failure message to the Target NG-RAN. If the UE Radio Capability ID is included in the N2 Path Switch Request Ack message, when there is no corresponding UE radio capabilities set for UE Radio Capability ID at the target NR-RAN, the target NG-RAN may request the AMF to provide the UE radio capabilities set corresponding to UE Radio Capability ID to the target NG-RAN. By sending a Release Resources message to the Source NG-RAN, the Target NG-RAN may confirm success of the handover and may trigger the release of resources with the Source NG-RAN.

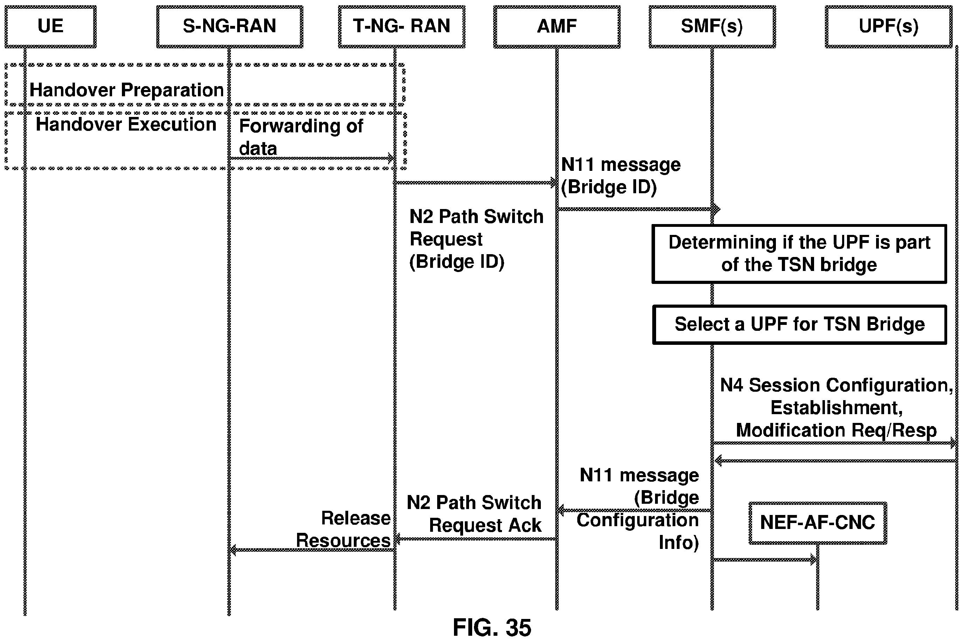

In an example embodiment as in FIG 34 and FIG 35, the SMF may determine that the UPF may not serve the UE via the target NG-RAN node. The SMF may reallocate the UPF. The SMF may select a UPF that supports TSN functionality, TSN translator functionality and/or the like. The SMF may select the UPF via an NRF by employing an Nnrf discovery and selection service. The SMF may send a query to the NRF indicating a request to discover or select a UPF that supports the TSN functionality, the TSN bridge with TSN bridge ID, and/or the like. The NRF may send a response message to the SMF with an identifier or address of a UPF that is part of the TSN bridge ID, or support TSN bridge functionality. The SMF may perform N4 session establishment procedure or modification procedure and may configure the UPF for the TSN bridge. Upon reconfiguration of the TSN bridge, the SMF may report bridge configuration data/parameter to the CNC via an NEF, AF and/or the like.

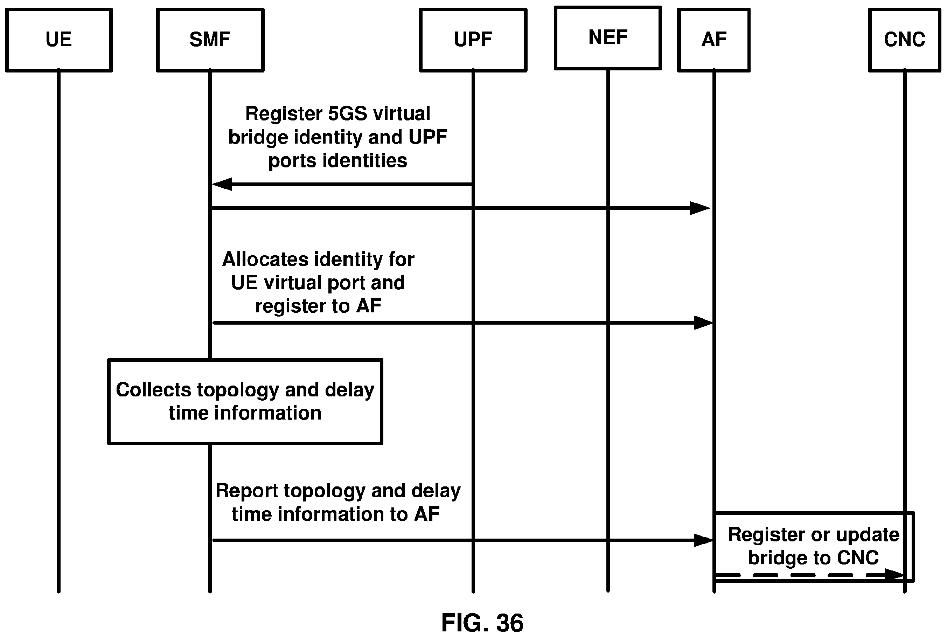

In an example, the bridge configuration may cause a 5GS bridge (TSN bridge) capability reporting procedure as depicted in FIG. 36. TSN capabilities reporting for 5GS TSN Bridge may be employed when a TSN bridge configuration has changed, a new TSN bridge has been created, and/or the like. Identities of 5GS virtual bridge and UPF ports, TSN bridge configuration parameter, and/or the like may be pre-configured on the UPF based on deployment and may be registered to the SMF. The SMF may report the information to an AF (directly or via NEF). The UPF may allocate identity for UE virtual port and may send the virtual port identity with corresponding 5GS virtual bridge identity (e.g., When UE establishes a PDU session) to the SMF. The virtual port identity may be unique in the 5G virtual bridge (the TSN bridge). The SMF may register the virtual port to 5GS virtual bridge with their identities to the AF. The SMF may collect topology and delay time information of the 5GS virtual bridge. The SMF may reports topology and delay time information to the AF. The AF may register or update the 5GS virtual bridge information to the CNC.

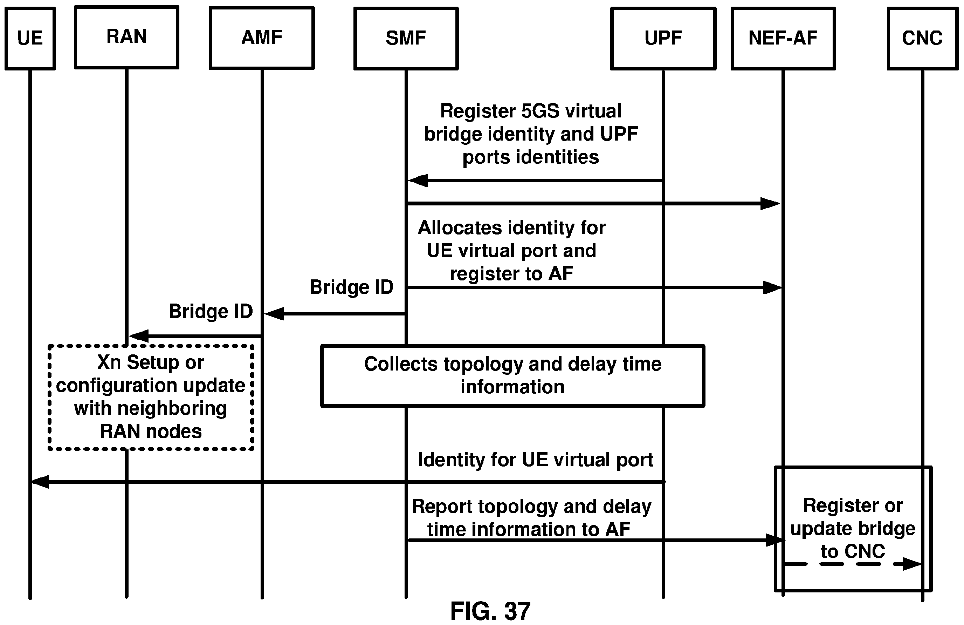

In an example as depicted in FIG. 37, during the TSN bridge capability reporting procedure, the SMF may send a NAS message to the UE (e.g., upon establishment of a PDU session) to configure the virtual ports (TSN ports) on the UE. The SMF, the PCF, the NEF or the AF may send the TSN virtual port identities of the UE to the AMF and the AMF may transmit a NAS message to the UE of the TSN bridge during the registration procedure of the UE with the 3GPP 5G system. Upon configuration of the TSN bridge, the SMF may send the TSN bridge configuration parameter, the TSN bridge ID, and/or the like to the AMF. The AMF may provide the TSN bridge configuration parameter, bridge ID and/or the like to the RAN node, or NG-RAN node via N2 interface by employing the N2 message. In an example, the TSN bridge configuration parameter, the TSN bridge ID, and/or the like may be provided to the AMF from the PCF, NEF, and/or the AF. The PCF, NEF or the AF may provide the TSN bridge configuration parameter, the TSN bridge ID, and/or the like to the AMF when receiving a configuration update (upon reconfiguration of the TSN bridge) from the SMF.

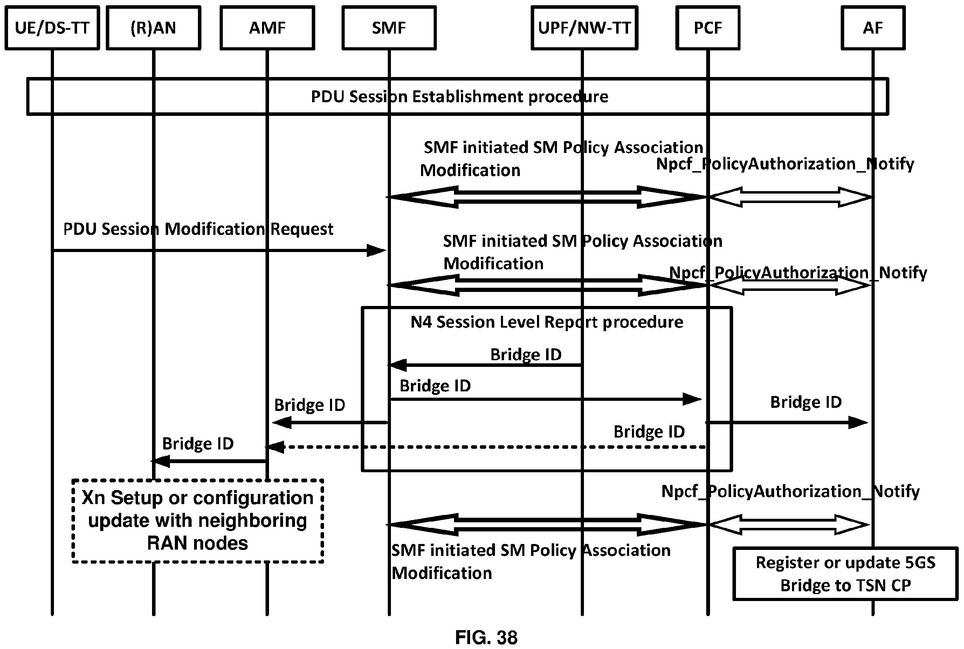

In an example embodiment as depicted in FIG. 38, a TSN bridge information reporting procedure may be employed. Identities of 5GS Bridge and UPF/NW-TT ports may be pre-configured on the UPF based on deployment. Identities of 5GS Bridge and UPF/NW-TT ports may be determined by the SMF and configured on the UPF based on deployment. In an example a UE of the TSN bridge may perform the PDU Session Establishment procedure. The PDU session establishment procedure may be for a time sensitive communication via the TSN bridge. During the PDU session establishment procedure, the SMF may selects a UPF, which supports functions of TSN, TSC, TSN translator/adapter, and/or the like for the PDU Session. During the PDU session establishment procedure, the SMF may receive the UE-DS-TT residence time, DS-TT MAC address for the PDU Session from UE in PDU Session Establishment request, and may receive the allocated port number for DS-TT, port number for NW-TT and Bridge ID in N4 Session Establishment Response message. The UPF may allocate the port number for DS-TT and may decide/determine port number for NW-TT, Bridge ID after receiving N4 Session Establishment Request message. The SMF may construct the received information as 5GS Bridge information, TSN bridge information, TSN bridge configuration parameter, and/or the like. The SMF may send the 5GS Bridge information to the AF via PCF to establish/modify the 5GS TSN bridge. The AF may store the binding relationship between 5GS TSN Bridge ID, MAC address of the DS-TT, the DS-TT port number, NW-TT port number for the 5GS TSN bridge for future configuration. The UE/DS-TT may send a Port Management Information Container to the SMF in PDU Session Modification Request. The port management information container may comprise Tx propagation delay, tick granularity and Gate control information (AdminBaseTime, AdminControlList, AdminCycleTime and AdminControlListLength), LLDP configuration such as Chassis ID, information about discovered neighbors, and/or the like. The SMF may (transparently) transmit the received Port Management Information Container to the AF via the PCF. The UPF/NW-TT may send its Port Management Information Container to the SMF via N4 Session Report. The SMF may (transparently) transmit the received Port Management Information Container to the AF via the PCF. The AF may maintain the received 5GS TSN Bridge information and may send them to the CNC to register a new TSN Bridge or update an existing TSN Bridge.

In an example as in FIG. 38, during the TSN bridge information reporting, the UPF may send the TSN bridge configuration parameter and/or the TSN bridge ID to the SMF. The SMF may transmit the TSN bridge configuration parameter and/or the TSN bridge ID to the AMF. The AMF may provide the TSN bridge configuration parameter and/or the TSN bridge ID to the NG-RAN node via the N2 message.

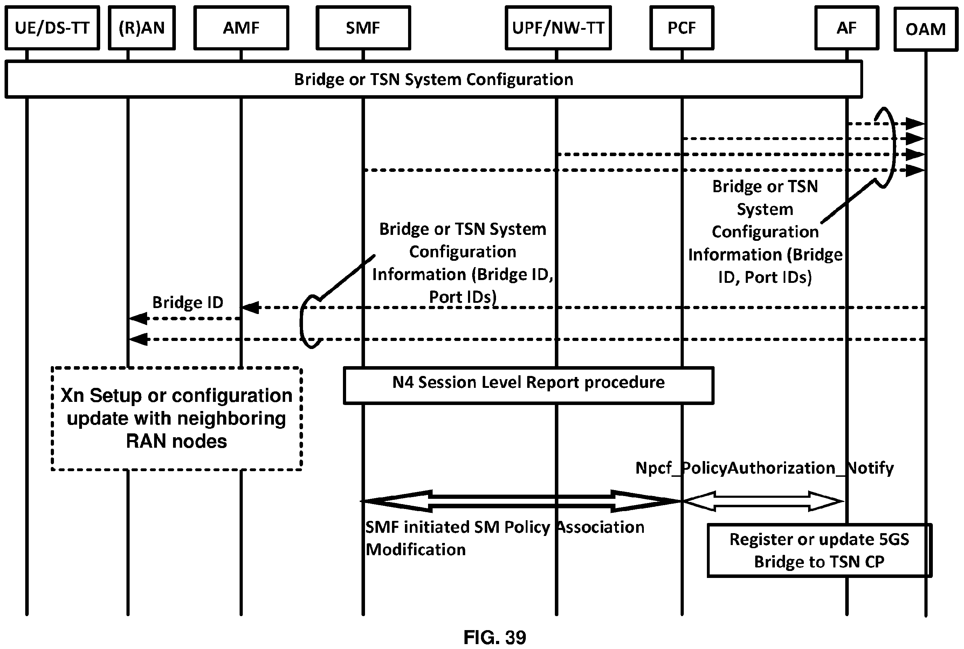

In an example embodiment as depicted in FIG. 39, upon configuration, reconfiguration, information reporting, and/or the like of the TSN bridge (e.g., as depicted in FIG. 36, FIG. 37, and FIG. 38), the TSN bridge configuration parameters, TSN bridge ID, port IDs, and/or the like may be provided to an OAM (OA&M) network element. The OAM may receive the TSN information from the UPF, the PCF, the NEF, the AF, and/or the like. In an example, the OAM network element may provide the TSN bridge configuration parameters, TSN bridge ID, port IDs, and/or the like to the AMF or to the NG-RAN node. The NG-RAN node in response to receiving the information from the OAM, may perform the NG-RAN configuration update or Xn setup procedure with the neighboring NG-RAN nodes or base stations.

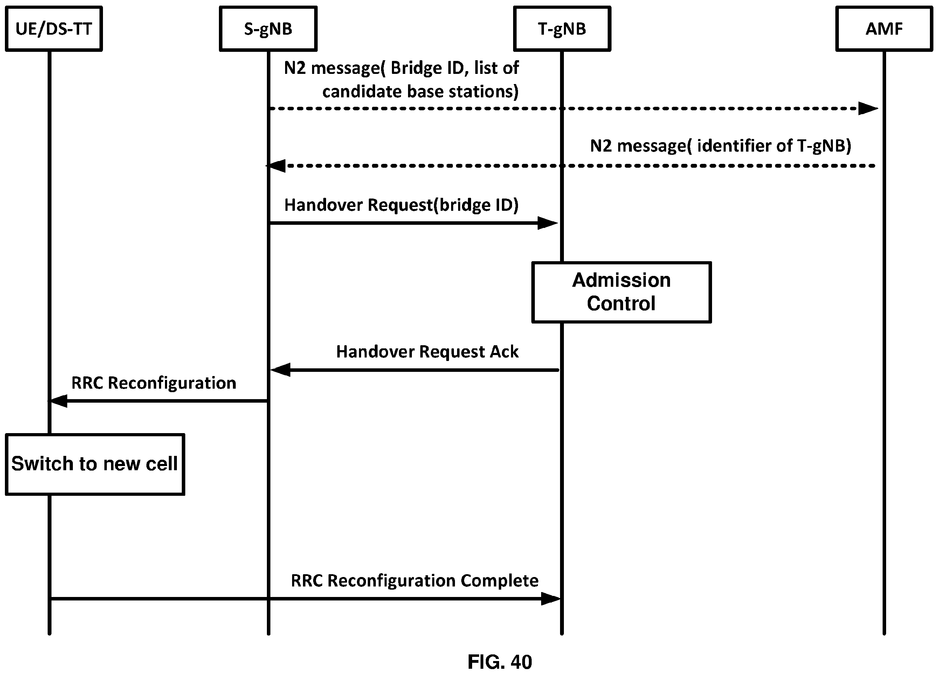

In an example embodiment as depicted in FIG. 40, a network controlled mobility may apply to UEs in RRC_CONNECTED and may be categorized into two types of mobility: cell level mobility and beam level mobility. Cell Level Mobility may require explicit RRC signaling to be triggered, e.g., handover. For inter-gNB handover, the signaling procedures may comprise the procedure described in FIG. 40. The source gNB may initiate handover and issue a Handover Request over the Xn interface. The handover request may comprise the TSN bridge ID. The target gNB may determine (e.g., via the AMF) whether a handover request for the UE of the TSN bridge ID may be admitted). In an example, the S-gNB may send to the AMF a list of candidate target gNB(s) and the TSN bridge ID. The AMF may determine a target gNB that supports the TSN bridge and respond with an identifier of the target gNB. The target gNB may perform admission control and provide the RRC configuration as part of the Handover Acknowledgement. The source gNB may provide the RRC configuration to the UE in the Handover Command. The Handover Command message may comprise at least cell ID and information required to access the target cell so that the UE can access the target cell. For some cases, the information required for contention-based and contention-free random access may be included in the Handover Command message. The access information to the target cell may include beam specific information, if any. The UE may transfer/move the RRC connection to the target gNB and may reply with the Handover Complete message.

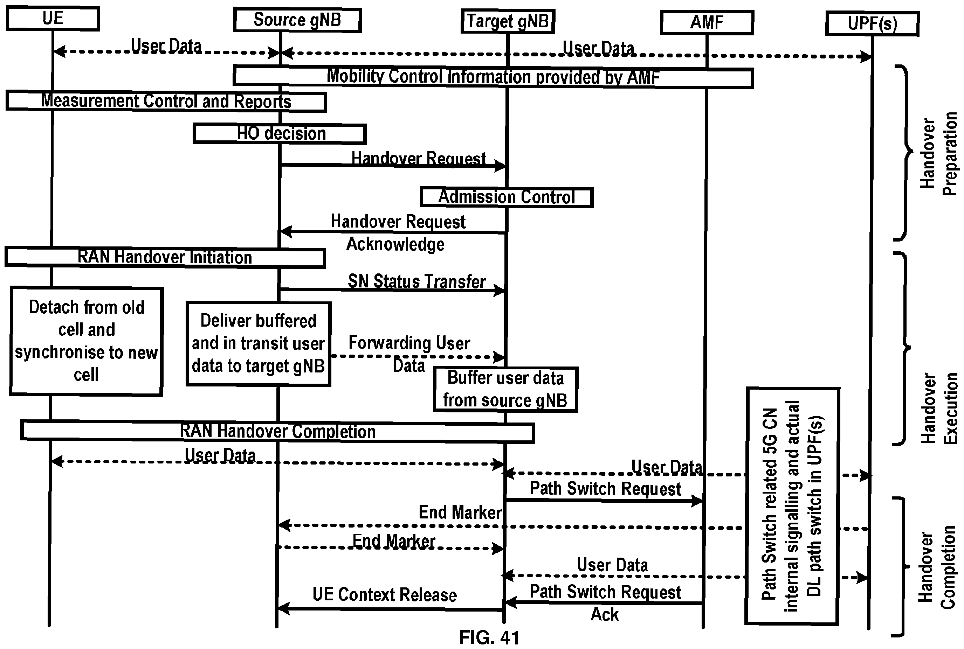

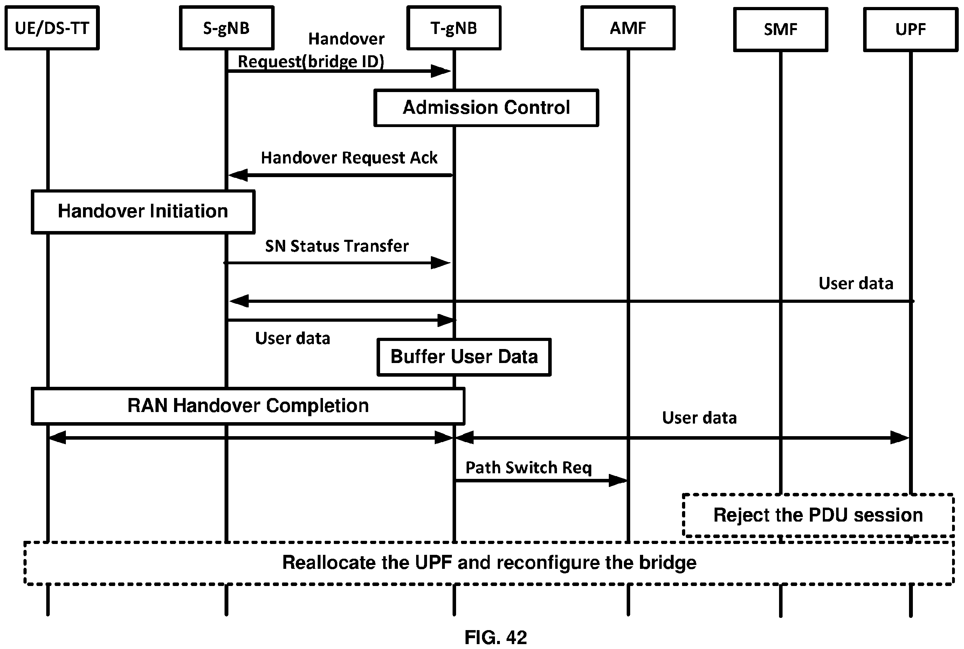

In an example embodiment as depicted in FIG. 41, and FIG. 42, control plane handling of a handover procedure is described. The intra-NR RAN handover may perform the preparation and execution phase of the handover procedure performed without involvement of the 5GC, e.g., preparation messages are directly exchanged between the gNBs. The release of the resources at the source gNB during the handover completion phase may be triggered by the target gNB. The example FIG 41 and FIG. 42 depict a handover scenario where neither the AMF nor the UPF change. The UE context within the source gNB may comprise information regarding roaming and access restrictions which were provided either at connection establishment or at the last TA update. The source gNB may configure the UE measurement procedures and the UE reports according to the measurement configuration. The source gNB may determine/decide to handover the UE, based on Measurement Report and radio resource management (RRM) information. The source gNB may issue a Handover Request message (e.g., may comprise TSN bridge configuration parameter, TSN bridge ID, and/or the like) to the target gNB passing a transparent RRC container with necessary information to prepare the handover at the target side. The information may comprise at least the target cell ID, KgNB*, the C-RNTI of the UE in the source gNB, RRM-configuration including UE inactive time, basic AS-configuration including antenna Info and DL Carrier Frequency, the current QoS flow to DRB mapping rules applied to the UE, the SIB1 from source gNB, the UE capabilities for different RATs, PDU session related information, and may include the UE reported measurement information including beam-related information if available. The PDU session related information includes the slice information (if supported) and QoS flow level QoS profile(s). After issuing a Handover Request, the source gNB should not reconfigure the UE, including performing Reflective QoS flow to DRB mapping. Admission Control may be performed by the target gNB. Slice-aware admission control may be performed if the slice information is sent to the target gNB. If the PDU sessions are associated with non-supported slices the target gNB shall reject such PDU Sessions. The admission control may be performed based on the elements of the handover request message (e.g., the TSN bridge configuration parameter, TSN bridge ID) and the elements of the N2 message received from the AMF (e.g., providing the TSN bridge configuration parameter via NG setup, AMF configuration, and/or the like). The target gNB may prepare the handover with L1/L2 and send the HANDOVER REQUEST ACKNOWLEDGE to the source gNB, which may comprise a transparent container to be sent to the UE as an RRC message to perform the handover. The source gNB may trigger the Uu handover by sending an RRCReconfiguration message to the UE, that may comprise the information required to access the target cell, e.g., at least the target cell ID, the new C-RNTI, the target gNB security algorithm identifiers for the selected security algorithms, and/or the like. It may also include a set of dedicated RACH resources, the association between RACH resources and SSB(s), the association between RACH resources and UE-specific CSI-RS configuration(s), common RACH resources, and system information of the target cell, and/or the like. The source gNB may send the SN STATUS TRANSFER message to the target gNB. The UE may synchronise to the target cell and may complete the RRC handover procedure by sending RRCReconfigurationComplete message to target gNB. The target gNB may send a PATH SWITCH REQUEST message to AMF to trigger 5GC to switch the DL data path towards the target gNB and to establish an NG-C interface instance towards the target gNB. The path switch request message may comprise the TSN bridge configuration parameter, TSN bridge ID, and/or the like. The 5GC may switch the DL data path towards the target gNB. The UPF may send one or more "end marker" packets on the old path to the source gNB per PDU session/tunnel and then can release any U-plane/TNL resources towards the source gNB. The AMF may confirm the PATH SWITCH REQUEST message with the PATH SWITCH REQUEST ACKNOWLEDGE message. Upon reception of the PATH SWITCH REQUEST ACKNOWLEDGE message from the AMF, the target gNB may send the UE CONTEXT RELEASE to inform the source gNB about the success of the handover. The source gNB may release radio and C-plane related resources associated to the UE context. Any ongoing data forwarding may continue.

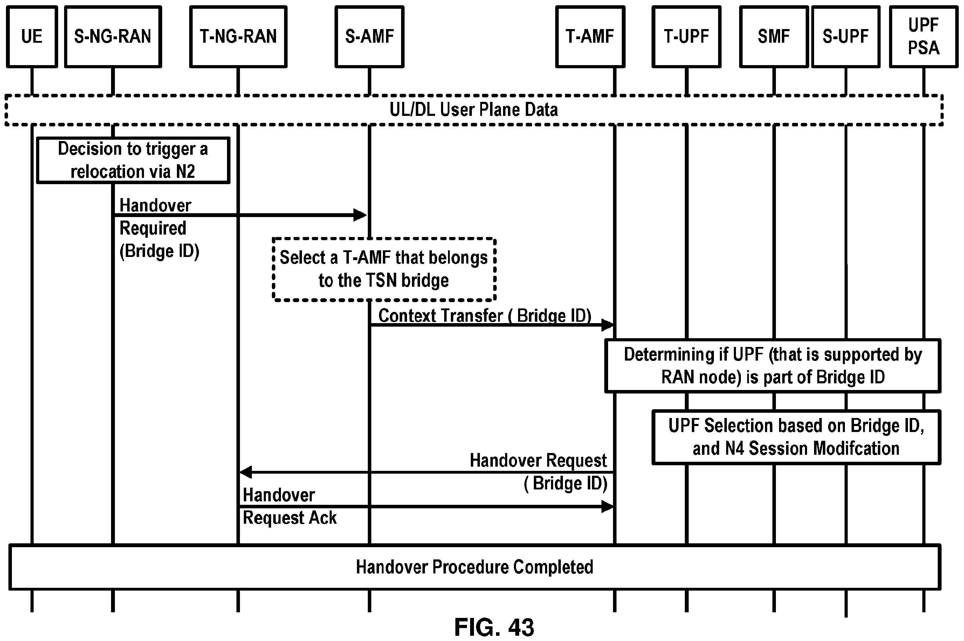

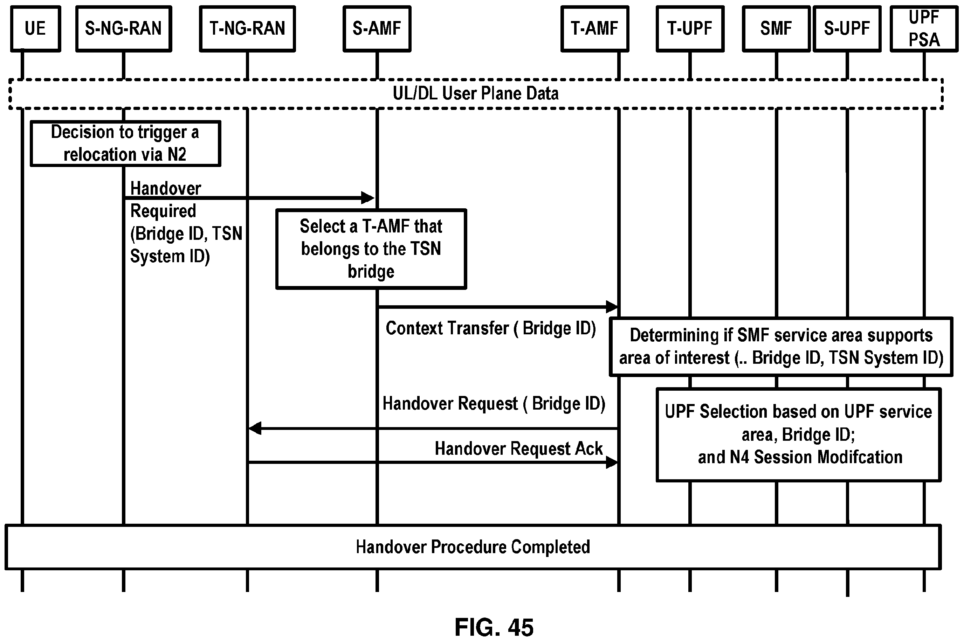

In an example embodiment as depicted in FIG. 43 and FIG. 45, the source NG-RAN may determine/decide to initiate an N2-based handover to the target NG-RAN. This can be triggered, for example, due to new radio conditions or load balancing, if there is no Xn connectivity to the target NG-RAN, an error indication from the target NG-RAN after an unsuccessful Xn-based handover (i.e. no IP connectivity between T-RAN and S-UPF), or based on dynamic information learnt by the S-RAN. The availability of a direct forwarding path is determined in the source NG-RAN and indicated to the SMFs. If IP connectivity is available between the source and target NG-RAN and security association(s) is in place between them, a direct forwarding path is available. In an example, an N2 based handover may be performed. An S-RAN may send to an S-AMF a Handover Required (that may comprise the TSN bridge configuration parameter, the TSN bridge ID, the TSN capability support indicator, Target ID, Source to Target transparent container, SM N2 info list, PDU Session IDs, intra system handover indication, and/or the like). The Source to Target transparent container may comprise NG-RAN information created by S-RAN to be used by T-RAN, and may be transparent to 5GC. It may comprise for each PDU session the corresponding User Plane Security Enforcement information, QoS flows /DRBs information subject to data forwarding. PDU Sessions handled by S-RAN (e.g., all existing PDU Sessions with active UP connections) may be included in the Handover Required message, indicating which of those PDU Session(s) are requested by S-RAN to handover. The SM N2 info may comprise Direct Forwarding Path Availability if direct data forwarding is available. The direct forwarding path availability may indicate whether direct forwarding is available from the S-RAN to the T-RAN. This indication from S-RAN may be based on e.g., the presence of IP connectivity and security association(s) between the S-RAN and the T-RAN. If the source NG RAN and target NG RAN support RACS, the Source to Target transparent container may contain the UE's UE Radio Capability ID instead of UE radio access capabilities. T-AMF Selection may be performed. When the S-AMF can't serve the UE anymore, the S-AMF may select the T-AMF based on the TSN capability support indicator, the TSN bridge configuration parameter, the TSN bridge ID, and/or the like. The S-AMF may send to the T-AMF an Namf_Communication_CreateUEContext Request (comprising the TSN bridge configuration parameter, the TSN bridge ID, the TSN capability support indicator, N2 Information (Target ID, Source to Target transparent container, SM N2 information list, PDU Session IDs), UE context information (SUPI, Service area restriction, Allowed NSSAI for each Access Type if available, Tracing Requirements, the list of PDU Session IDs along with the corresponding SMF information and the corresponding S-NSSAI(s), PCF ID(s), DNN, UE Radio Capability ID and UE Radio Capability Information). If the subscription information includes Tracing Requirements, the old AMF provides the target AMF with Tracing Requirements. In inter PLMN mobility case, UE context information may comprise a TSN bridge ID, HPLMN S-NSSAIs corresponding to the Allowed NSSAI for each Access Type, without Allowed NSSAI of source PLMN. The S-AMF may initiate Handover resource allocation procedure by invoking the Namf_Communication_CreateUEContext service operation towards the T-AMF.

The T-AMF may send to the SMF an Nsmf PDUSession UpdateSMContext (may comprise: the TSN bridge configuration parameter, the TSN bridge ID, the TSN capability support indicator, PDU Session ID, Target ID, T-AMF ID, N2 SM Information). For each PDU Session indicated by S-RAN, the AMF may invoke the Nsmf_PDUSession_UpdateSMContext Request to the associated SMF. The SM N2 Info may comprise the Direct Forwarding Path Availability if the direct data forwarding is available between the S-RAN and the T-RAN and has been inserted by the S-RAN. The SMF may send to the UPF (PSA) an N4 Session Modification Request. If the SMF selects a new UPF to act as intermediate UPF for the PDU Session, and the different CN Tunnel Info need be used, the SMF may send N4 Session Modification Request message to UPF (PSA). The SMF may provide the CN Tunnel Info (on N9) if the CN Tunnel Info is allocated by the SMF, and UL Packet detection rules associate the CN Tunnel Info (on N9) to be installed on the UPF (PSA).

In an example, the UPF (PSA) may send to the SMF an N4 Session Modification Response. The UPF (PSA) may send the N4 Session Establishment Response message to the SMF. If the UPF (PSA) allocates CN Tunnel Info (on N9) of UPF (PSA), it provides CN Tunnel Info (on N9) to the SMF. In an example, the SMF may send to the T-AMF, an Nsmf_PDUSession_UpdateSMContext Response (CN tunnel info, PDU Session ID, N2 SM Information, Reason for non-acceptance). If N2 handover for the PDU Session is accepted, the SMF may include in the Nsmf_PDUSession_UpdateSMContext response the N2 SM Information containing the N3 UP address and the UL CN Tunnel ID of the UPF and the QoS parameters indicating that the N2 SM Information is for the Target NG-RAN.

In an example, the T-AMF may send to the T-RAN a Handover Request (e.g. the TSN bridge configuration parameter, the TSN bridge ID, the TSN capability support indicator, Source to Target transparent container, N2 MM Information, N2 SM Information list, Tracing Requirements, UE Radio Capability ID). In an example, the T-AMF may determine the T-RAN based on the TSN bridge configuration parameter, the TSN bridge ID, the TSN capability support indicator, Target ID, and/or the like. The T-AMF may allocate a 5G-GUTI valid for the UE in the AMF and target TAI. The Source to Target transparent container may be forwarded as received from S-RAN. N2 MM Information may comprise e.g., security information and Mobility Restriction List if available in the T-AMF. The T-RAN may send to the T-AMF a Handover Request Acknowledge (Target to Source transparent container, List of PDU Sessions to Hand-over with N2 SM information, List of PDU Sessions that failed to be established with the failure cause given in the N2 SM information element). The Target to Source transparent container may comprise a UE container with an access stratum part and a NAS part. The UE container is sent transparently via T-AMF, S-AMF and S-RAN to the UE. The T-RAN may create List Of PDU Sessions failed to be setup and reason for failure (e.g. T-RAN decision, S-NSSAI is not available, unable to fulfill User Plane Security Enforcement) based on T-RAN determination. The information may be provided to the S-RAN. The N2 SM information in the List Of PDU Sessions to Hand-over, may comprise per each PDU Session ID a T-RAN N3 addressing information e.g., N3 UP address and Tunnel ID of T-RAN for the PDU Session. The AMF may send to the SMF an Nsmf_PDUSession_UpdateSMContext Request (the TSN bridge configuration parameter, the TSN bridge ID, the TSN capability support indicator, PDU Session ID, N2 SM response received from T-RAN). For each N2 SM response received from the T-RAN (N2 SM information included in Handover Request Acknowledge), the AMF may send the received N2 SM response to the SMF indicated by the respective PDU Session ID. If no new T-UPF is selected, SMF stores the N3 tunnel info of T-RAN from the N2 SM response if N2 handover is accepted by T-RAN. The SMF/UPF may allocate the N3 UP address and Tunnel IDs for indirect data forwarding corresponding to the data forwarding tunnel endpoints established by T-RAN. If some of the QoS Flows of a PDU Session are not accepted by the Target NG-RAN, the SMF may initiate the PDU Session Modification procedure to remove the non-accepted QoS Flows from the PDU Session(s) after the handover procedure is completed. The SMF may create an N2 SM information containing the DL forwarding Tunnel Info to be sent to the S-RAN by the AMF. The SMF may comprise this information in the Nsmf_PDUSession_UpdateSMContext response.

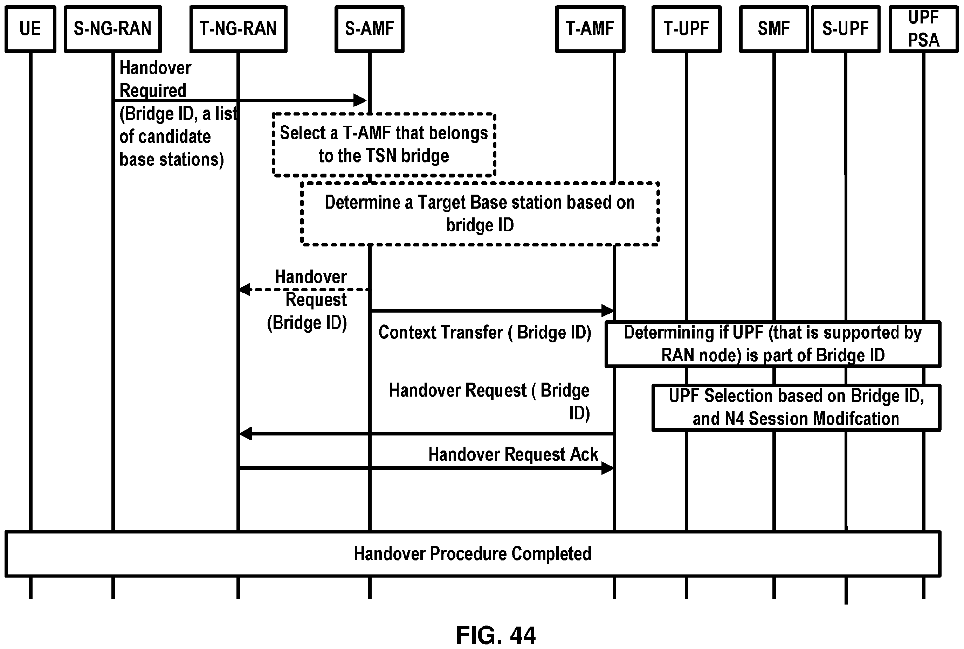

In an example embodiment as depicted in FIG. 44, the procedure of FIG. 43 and FIG. 45 may be modified such that when the S-NG-RAN decides to initiate a handover, it may send the handover required message to the AMF that may comprise a TSN bridge ID, a list of candidate target NG-RAN nodes or base stations. The AMF or S-AMF may select a target NG-RAN node based on the elements of the handover required message. The S-AMF or the T-AMF may send the handover request to the selected T-NG-RAN node that supports TSN and the TSN bridge (e.g., having connectivity with the UPF of the TSN bridge).

In an example embodiment, a first base station may receive from a network node, a time sensitive networking bridge configuration parameter comprising a first TSN bridge identifier, a first bridge identifier, and/or the like. The first base station receives from a second base station, a handover request message that comprises a second TSN bridge identifier, a second bridge identifier, and/or the like. The first base station sends to the second base station, a handover acknowledgment message indicating a handover acceptance based on the first TSN bridge identifier matching the second TSN bridge identifier. In an example, the network node may be an access and mobility management function (AMF), a SMF, OAM (OA&M), A PCF, an NEF, an AF/AS, and/or the like. The first base station may receive the TSN bridge configuration parameter in response to a PDU session establishment for a wireless device of the TSN bridge. The first base station may receive the TSN bridge configuration parameter in response to a TSN bridge configuration update by a session management function upon configuration of a UPF for the TSN bridge. In an example, the determining to accept or the admissibility may be determined based on a connectivity of the first base station with a UPF of the TSN bridge. The first base station may send to an AMF, a path switch request comprising an access network tunnel information associated with a PDU session of the wireless device, the TSN bridge identifier, and/or the like. The first base station may receive a path switch request acknowledgement indicating acceptance of the PDU session of the wireless device. The first base station may receive a path switch request acknowledgement indicating rejection of the PDU session of the wireless device. The first base station may send to the second base station a configuration update message comprising a TSN bridge identifier, the first TSN bridge identifier, and/or the like. The configuration update message may comprise a TSN bridge capability support indicator, a TSN bridge capability indicator, a bridge capability indicator, and/or the like. The handover acceptance message may indicate that a PDU session associated with the wireless device is admitted. The first base station may receive from the wireless device an RRC reconfiguration complete message. The first base station to the second bases station may send a UE context release message indicating success of a handover. The handover request message may comprise a network slice identifier associated with the TSN bridge. The handover acceptance may be based on the network slice identifier matching a network slice identifier that the first base station supports, or the slice identifier that the TSN bridge supports. The handover request message may comprises a PDU session identifier associated with a port of the TSN bridge. The first base station may perform a mapping of the PDU session identifier to the TSN bridge ID. The TSN bridge id may comprises an unsigned integer value. The TSN bridge id may comprise a derivation of a TSN system identifier, a TSN system address, and/or the like.

In an example embodiment, a first base station may receive from a second base station, a handover request message comprising a TSN bridge identifier. The first base station may determine that the TSN bridge identifier does not match an element of a TSN bridge configuration parameter received from a network node. The first base station may send, to the second base station, a handover failure message based on the determining. The determining may comprise determining that no TSN bridge configuration has been received from the network node. The determining may comprise receiving the TSN bridge ID and determining to reject the request based on the TSN bridge ID not matching the element of the TSN bridge configuration parameter.

In an example embodiment, a first base station may receive from a second base station, a configuration setup message comprising a time sensitive networking bridge configuration parameter. The TSN bridge configuration parameter may comprise a first TSN bridge identifier. The first base station may receive from a wireless device of a TSN bridge with a second TSN bridge identifier, a measurement report message comprising measurement results of the second base station. The first base station may determine a handover for the wireless device to the second base station based on the first TSN bridge identifier matching the second TSN bridge identifier, the measurement report, and/or the like. The first base station may send to the second base station, a handover request message. The handover request message may comprise a set of (TSN) bridge configuration parameters, bridge attributes, bridge characteristics, the TSN bridge identifier, the first TSN bridge identifier, the second TSN bridge identifier, and/or the like. The configuration setup message comprise a TSN bridge capability indicator. The first base station may send to the wireless device an RRC reconfiguration message comprising information required to access the second base station. The RRC reconfiguration message may comprise an identifier of the second base station, a C-RNTI, the second base station security algorithm identifiers, a set of dedicated RACH resources, an association between RACH resources and SSB(s), an association between RACH resources and UE specific CSI-RS configurations, common RACH resources, a system information of the second base station, and/or the like.

In an example embodiment, a first base station may receive from a second base station, an Xn setup message comprising a time sensitive networking bridge configuration parameter wherein the TSN bridge configuration parameter may comprise a first TSN bridge identifier. The first base station may receive, from a wireless device of a TSN bridge with a second TSN bridge identifier, a measurement report message that may comprise measurement results of the second base station. The first base station may determine a handover for the wireless device to the second base station based on the first TSN bridge identifier matching the second TSN bridge identifier, the measurement report, and/or the like. The first base station may send to the second base station, a handover request message comprising a TSN bridge identifier, the first TSN bridge identifier, and/or the like.

In an example embodiment, a first base station may receive from a second base station, an Xn setup message comprising a time sensitive networking bridge configuration parameter wherein the TSN bridge configuration parameter may comprise a TSN bridge identifier. The first base station may determine a handover for the wireless device to the second base station based on at least one element of the Xn setup message, the TSN bridge configuration parameter, and/or the like. The first base station may send to the second base station, a handover request message. The first base station may receive from the second base station a handover acknowledge message indicating acceptance of the handover request. The first base station may receive from a wireless device of a TSN bridge, a measurement report message comprising measurement results of the second base station. The determining may be further based on the measurement report. The handover request message may further comprise the TSN bridge identifier.

In an example embodiment, a first base station may receive from a second base station, a handover request message for a wireless device of a TSN bridge. The handover request message may comprise a TSN bridge identifier. The first base station may determine based on the TSN bridge identifier, availability of a connection between the second base station and a user plane function of the TSN bridge. The first base station may send to the second base station a handover acknowledgment message indicating admissibility of the wireless device.

In this specification, a and an and similar phrases are to be interpreted as at least one and one or more. In this specification, the term may is to be interpreted as may, for example. In other words, the term may is indicative that the phrase following the term may is an example of one of a multitude of suitable possibilities that may, or may not, be employed to one or more of the various embodiments. If A and B are sets and every element of A is also an element of B, A is called a subset of B. In this specification, only non-empty sets and subsets are considered. For example, possible subsets of B = cell 1, cell2} are: {cell1}, {cell2}, and {cell1, cell2}.

In this specification, parameters (Information elements: IEs) may comprise one or more objects, and each of those objects may comprise one or more other objects. For example, if parameter (IE) N comprises parameter (IE) M, and parameter (IE) M comprises parameter (IE) K, and parameter (IE) K comprises parameter (information element) J, then, for example, N comprises K, and N comprises J. In an example embodiment, when one or more messages comprise a plurality of parameters, it implies that a parameter in the plurality of parameters is in at least one of the one or more messages, but does not have to be in each of the one or more messages.

Many of the elements described in the disclosed embodiments may be implemented as modules. A module is defined here as an isolatable element that performs a defined function and has a defined interface to other elements. The modules described in this disclosure may be implemented in hardware, software in combination with hardware, firmware, wetware (i.e. hardware with a biological element) or a combination thereof, which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally, it may be possible to implement modules using physical hardware that incorporates discrete or programmable analog, digital and/or quantum hardware. Examples of programmable hardware comprise: computers, microcontrollers, microprocessors, application-specific integrated circuits (ASICs); field programmable gate arrays (FPGAs); and complex programmable logic devices (CPLDs). Computers, microcontrollers and microprocessors are programmed using languages such as assembly, C, C++ or the like. FPGAs, ASICs and CPLDs are often programmed using hardware description languages (HDL) such as VHSIC hardware description language (VHDL) or Verilog that configure connections between internal hardware modules with lesser functionality on a programmable device. Finally, it needs to be emphasized that the above mentioned technologies are often employed in combination to achieve the result of a functional module.

Example embodiments of the invention may be implemented using various physical and/or virtual network elements, software defined networking, virtual network functions.

While various embodiments have been described above, it should be understood that they have been presented by way of example, and not limitation. It will be apparent to persons skilled in the relevant art(s) that various changes in form and detail can be made therein to obtain further embodiments. In fact, after reading the above description, it will be apparent to one skilled in the relevant art(s) how to implement alternative embodiments. Thus, the present embodiments should not be limited by any of the above described exemplary embodiments. In particular, it should be noted that, for example purposes, the above explanation has focused on the example(s) using 5G AN. However, one skilled in the art will recognize that embodiments of the invention may also be implemented in a system comprising one or more legacy systems or LTE. The disclosed methods and systems may be implemented in wireless or wireline systems. The features of various embodiments presented in this invention may be combined. One or many features (method or system) of one embodiment may be implemented in other embodiments. A limited number of example combinations are shown to indicate to one skilled in the art the possibility of features that may be combined in various embodiments to create enhanced transmission and reception systems and methods.

In addition, it should be understood that any figures which highlight the functionality and advantages, are presented for example purposes. The disclosed architecture is sufficiently flexible and configurable, such that it may be utilized in ways other than that shown. For example, the actions listed in any flowchart may be re-ordered or optionally used in some embodiments.

## Claims

1. A method comprising:
sending, by a second base station to a first base station, a handover request for a wireless device, the handover request comprising a time sensitive networking, TSN, bridge parameter, wherein the TSN bridge parameter comprises a second TSN bridge identifier; and
receiving by the second base station, based on the second TSN bridge identifier matching a first TSN bridge identifier associated with the first base station, a handover acceptance from the first base station for the handover request.

2. The method of claim 1, wherein the TSN bridge parameter comprises a TSN bridge capability support indicator.

3. The method of one of claims 1 to 2, wherein the second TSN bridge identifier is associated with a TSN bridge that is used by the wireless device.

4. The method of one of claims 1 to 3, wherein the sending the handover request is based on receiving, by the second base station from the wireless device, a measurement report.

5. The method of claim 4, further comprising sending, by the second base station to the wireless device, a measurement configuration.

6. A second base station comprising: one or more processors; and memory storing instructions that, when executed by the one or more processors, cause the second base station to perform the method of any one of claims 1 to 5.

7. A non-transitory computer-readable medium comprising instructions that, when executed by one or more processors of a second base station, cause the second base station to perform the method of any one of claims 1 to 5.

8. A method comprising:
receiving, by a first base station from a second base station, a handover request for a wireless device, the handover request comprising a time sensitive networking, TSN, bridge parameter, wherein the TSN bridge parameter comprises a second TSN bridge identifier; and
sending, by the first base station, based on the second TSN bridge identifier matching a first TSN bridge identifier associated with the first base station, a handover acceptance to the second base station for the handover request.

9. The method of claim 8, wherein the TSN bridge parameter comprises a TSN bridge capability support indicator.

10. The method of one of claims 8 to 9, wherein the second TSN bridge identifier is associated with a TSN bridge that is used by the wireless device.

11. The method of claim 10, further comprising receiving, by the first base station from an access and mobility management function, the first TSN bridge identifier associated with the first base station.

12. A first base station comprising: one or more processors; and memory storing instructions that, when executed by the one or more processors, cause the first base station to perform the method of any one of claims 8 to 11.

13. A non-transitory computer-readable medium comprising instructions that, when executed by one or more processors of a first base station, cause the first base station to perform the method of any one of claims 8 to 11.

14. A system comprising:
a second base station comprising: one or more processors and memory storing instructions that, when executed by the one or more processors, cause the second base station to:
send, to a first base station, a handover request for a wireless device, the handover request comprising a time sensitive networking, TSN, bridge parameter of, wherein the TSN bridge parameter comprises a second TSN bridge identifier; and
receive, based on the second TSN bridge identifier matching a first TSN bridge identifier associated with the first base station, a handover acceptance from the first base station for the handover request; and
the first base station, wherein the first base station comprises: one or more processors and memory storing instructions that, when executed by the one or more processors, cause the first base station to:
receive the handover request from the second base station; and
send, based on the second TSN bridge identifier matching the first TSN identifier associated with the first base station, the handover acceptance to the second base station.

## Patentansprüche

1. Verfahren, umfassend:
Senden einer Übergabeanforderung für eine drahtlose Vorrichtung an eine erste Basisstation durch eine zweite Basisstation, wobei die Übergabeanforderung einen zeitsensitiven Vernetzungsbrückenparameter (TSN-Brückenparameter) umfasst, wobei der TSN-Brückenparameter eine zweite TSN-Brückenkennung umfasst; und
Empfangen einer Übergabeannahme von der ersten Basisstation für die Übergabeanforderung durch die zweite Basisstation basierend darauf, dass die zweite TSN-Brückenkennung mit einer ersten TSN-Brückenkennung übereinstimmt, die der ersten Basisstation zugeordnet ist.

2. Verfahren nach Anspruch 1, wobei der TSN-Brückenparameter einen TSN-Brücken-Fähigkeitsunterstützungsindikator umfasst.

3. Verfahren nach einem der Ansprüche 1 bis 2, wobei die zweite TSN-Brückenkennung einer TSN-Brücke zugeordnet ist, die durch die drahtlose Vorrichtung verwendet wird.

4. Verfahren nach einem der Ansprüche 1 bis 3, wobei das Senden der Übergabeanforderung auf einem Empfangen eines Messberichtes von der drahtlosen Vorrichtung durch die zweite Basisstation basiert.

5. Verfahren nach Anspruch 4, ferner umfassend Senden einer Messkonfiguration an die drahtlose Vorrichtung durch die zweite Basisstation.

6. Zweite Basisstation, umfassend: einen oder mehrere Prozessoren; und Speicher, in dem Anweisungen gespeichert sind, die bei Ausführung durch den einen oder die mehreren Prozessoren die zweite Basisstation dazu veranlassen, das Verfahren nach einem der Ansprüche 1 bis 5 durchzuführen.

7. Nicht transitorisches computerlesbares Medium, umfassend Anweisungen, die bei Ausführung durch einen oder mehrere Prozessoren einer zweiten Basisstation die zweite Basisstation dazu veranlassen, das Verfahren nach einem der Ansprüche 1 bis 5 durchzuführen.

8. Verfahren, umfassend:
Empfangen einer Übergabeanforderung für eine drahtlose Vorrichtung von einer zweiten Basisstation durch eine erste Basisstation, wobei die Übergabeanforderung einen zeitsensitiven Vernetzungsbrückenparameter (TSN-Brückenparameter) umfasst, wobei der TSN-Brückenparameter eine zweite TSN-Brückenkennung umfasst; und
Senden einer Übergabeannahme an die zweite Basisstation für die Übergabeanforderung durch die erste Basisstation basierend darauf, dass die zweite TSN-Brückenkennung mit einer ersten TSN-Brückenkennung übereinstimmt, die der ersten Basisstation zugeordnet ist.

9. Verfahren nach Anspruch 8, wobei der TSN-Brückenparameter einen TSN-Brücken-Fähigkeitsunterstützungsindikator umfasst.

10. Verfahren nach einem der Ansprüche 8 bis 9, wobei die zweite TSN-Brückenkennung einer TSN-Brücke zugeordnet ist, die durch die drahtlose Vorrichtung verwendet wird.

11. Verfahren nach Anspruch 10, ferner umfassend Empfangen der ersten TSN-Brückenkennung, die der ersten Basisstation zugeordnet ist, von einer Zugangs- und Mobilitätsverwaltungsfunktion durch die erste Basisstation.

12. Erste Basisstation, umfassend: einen oder mehrere Prozessoren; und Speicher, in dem Anweisungen gespeichert sind, die bei Ausführung durch den einen oder die mehreren Prozessoren die erste Basisstation dazu veranlassen, das Verfahren nach einem der Ansprüche 8 bis 11 durchzuführen.

13. Nicht transitorisches computerlesbares Medium, umfassend Anweisungen, die bei Ausführung durch einen oder mehrere Prozessoren einer ersten Basisstation die erste Basisstation dazu veranlassen, das Verfahren nach einem der Ansprüche 8 bis 11 durchzuführen.

14. System, umfassend:
eine zweite Basisstation, umfassend: einen oder mehrere Prozessoren und Speicher, in dem Anweisungen gespeichert sind, die bei Ausführung durch den einen oder die mehreren Prozessoren die zweite Basisstation zu Folgendem veranlassen:
Senden einer Übergabeanforderung für eine drahtlose Vorrichtung an eine erste Basisstation, wobei die Übergabeanforderung einen zeitsensitiven Vernetzungsbrückenparameter (TSN-Brückenparameter) umfasst, wobei der TSN-Brückenparameter eine zweite TSN-Brückenkennung umfasst; und
Empfangen einer Übergabeannahme von der ersten Basisstation für die Übergabeanforderung basierend darauf, dass die zweite TSN-Brückenkennung mit einer ersten TSN-Brückenkennung übereinstimmt, die der ersten Basisstation zugeordnet ist; und
die erste Basisstation, wobei die erste Basisstation Folgendes umfasst: einen oder mehrere Prozessoren und Speicher, in dem Anweisungen gespeichert sind, die bei Ausführung durch den einen oder die mehreren Prozessoren die erste Basisstation zu Folgendem veranlassen:
Empfangen der Übergabeanforderung von der zweiten Basisstation; und
Senden der Übergabeannahme an die zweite Basisstation basierend darauf, dass die zweite TSN-Brückenkennung mit der ersten TSN-Kennung übereinstimmt, die der ersten Basisstation zugeordnet ist.

## Revendications

1. Procédé comprenant :
l'envoi, par une seconde station de base à une première station de base, d'une requête de transfert intercellulaire pour un dispositif sans fil, la requête de transfert intercellulaire comprenant un paramètre de pont de mise en réseau sensible au temps, TSN, dans lequel le paramètre de pont TSN comprend un second identifiant de pont TSN ; et
la réception, par la seconde station de base, sur la base du second identifiant de pont TSN correspondant à un premier identifiant de pont TSN associé à la première station de base, d'une acceptation de transfert intercellulaire depuis la première station de base pour la requête de transfert intercellulaire.

2. Procédé selon la revendication 1, dans lequel le paramètre de pont TSN comprend un indicateur de prise en charge de capacité de pont TSN.

3. Procédé selon l'une des revendications 1 et 2, dans lequel le second identifiant de pont TSN est associé à un pont TSN utilisé par le dispositif sans fil.

4. Procédé selon l'une des revendications 1 à 3, dans lequel l'envoi de la requête de transfert intercellulaire est basé sur la réception, par la seconde station de base en provenance du dispositif sans fil, d'un rapport de mesure.

5. Procédé selon la revendication 4, comprenant en outre l'envoi, par la seconde station de base au dispositif sans fil, d'une configuration de mesure.

6. Seconde station de base comprenant : un ou plusieurs processeurs ; et une mémoire stockant des instructions qui, lorsqu'elles sont exécutées par les un ou plusieurs processeurs, amènent la seconde station de base à réaliser le procédé selon l'une des revendications 1 à 5.

7. Support non transitoire lisible par ordinateur comprenant des instructions qui, lorsqu'elles sont exécutées par un ou plusieurs processeurs d'une seconde station de base, amènent la seconde station de base à réaliser le procédé selon l'une quelconque des revendications 1 à 5.

8. Procédé comprenant :
la réception, par une première station de base en provenance d'une seconde station de base, d'une requête de transfert intercellulaire pour un dispositif sans fil, la requête de transfert intercellulaire comprenant un paramètre de pont de mise en réseau sensible au temps, TSN, dans lequel le paramètre de pont TSN comprend un second identifiant de pont TSN ; et
l'envoi, par la première station de base, sur la base du second identifiant de pont TSN correspondant à un premier identifiant de pont TSN associé à la première station de base, d'une acceptation de transfert intercellulaire à la seconde station de base pour la requête de transfert intercellulaire.

9. Procédé selon la revendication 8, dans lequel le paramètre de pont TSN comprend un indicateur de prise en charge de capacité de pont TSN.

10. Procédé selon l'une des revendications 8 et 9, dans lequel le second identifiant de pont TSN est associé à un pont TSN utilisé par le dispositif sans fil.

11. Procédé selon la revendication 10, comprenant en outre la réception, par la première station de base, à partir d'une fonction de gestion d'accès et de mobilité, du premier identifiant de pont TSN associé à la première station de base.

12. Première station de base comprenant : un ou plusieurs processeurs ; et une mémoire stockant des instructions qui, lorsqu'elles sont exécutées par les un ou plusieurs processeurs, amènent la première station de base à réaliser le procédé selon l'une quelconque des revendications 8 à 11.

13. Support non transitoire lisible par ordinateur comprenant des instructions qui, lorsqu'elles sont exécutées par un ou plusieurs processeurs d'une première station de base, amènent la première station de base à réaliser le procédé selon l'une quelconque des revendications 8 à 11.

14. Système comprenant :
une seconde station de base comprenant : un ou plusieurs processeurs et une mémoire stockant des instructions qui, lorsqu'elles sont exécutées par les un ou plusieurs processeurs, amènent la seconde station de base à :
envoyer, à une première station de base, une requête de transfert intercellulaire pour un dispositif sans fil, la requête de transfert intercellulaire comprenant un paramètre de pont de mise en réseau sensible au temps, TSN, dans lequel le paramètre de pont TSN comprend un second identifiant de pont TSN ; et
recevoir, sur la base du second identifiant de pont TSN correspondant à un premier identifiant de pont TSN associé à la première station de base, une acceptation de transfert intercellulaire depuis la première station de base pour la requête de transfert intercellulaire ; et
la première station de base, dans lequel la première station de base comprend : un ou plusieurs processeurs et une mémoire stockant des instructions qui, lorsqu'elles sont exécutées par les un ou plusieurs processeurs, amènent la première station de base à :
recevoir la requête de transfert intercellulaire de la seconde station de base ; et
envoyer, sur la base du second identifiant de pont TSN correspondant au premier identifiant TSN associé à la première station de base, l'acceptation de transfert intercellulaire à la seconde station de base.
